# EUROPÄISCHE PATENTSCHRIFT

(11) **EP 1 756 355 B1**
(45) Veröffentlichungstag und Bekanntmachung des Hinweises auf die Patenterteilung: **25.08.2010**
(21) Anmeldenummer: 05751624.7
(22) Anmeldetag: 07.06.2005
(51) Int. Cl.: D06P 3/32

(54) **VERFAHREN ZUM REAKTIV-FÄRBEN VON LEDER**
METHOD FOR THE REACTIVE COLORATION OF LEATHER
PROCEDE DE COLORATION REACTIVE DE CUIR

(30) Priorität: 08.06.2004 DE 102004027812
(43) Veröffentlichungstag der Anmeldung: 28.02.2007
(73) Patentinhaber: BASF SE, 67056 Ludwigshafen (DE)
(72) Erfinder: SOMOGYI, Laszio, 67117 Limburgerhof (DE); ZAMPONI, Andrea, 68167 Mannheim (DE); KIESOW, Harald, 67067 Ludwigshafen (DE)
(86) Internationale Anmeldenummer: PCT/EP2005/006107
(87) Internationale Veröffentlichungsnummer: WO 2005/121439

(56) Entgegenhaltungen:
- EP-A- 0 518 266
- EP-A- 0 887 386
- WO-A-2005/040490
- DE-A1- 19 825 202

## Beschreibung

Die vorliegende Erfindung betrifft ein Verfahren zum Färben von Leder und die Verwendung von Farbstoffen zum Reaktiv-Färben von Leder .

Die Färbung von gegerbtem Leder erfolgt derzeit mit sauren Farbstoffen, Direktfarbstoffen, Schwefelfarbstoffen oder basischen Farbstoffen. Die Erzielung hoher Farbintensitäten und hoher Farbbeständigkeiten, insbesondere Nass- und Schweißechtheiten, ist mit diesen Farbstoffen schwierig und für mittlere bis hohe Farbtiefen bis heute noch nicht befriedigend gelöst worden.

Um die Nass- und Schweißechtheit zu verbessern, wird das Leder häufig mit kationischen Komplexierungsmitteln behandelt, die den Farbstoff komplexieren und so die Löslichkeit im Kontakt mit Wasser vermindern. Die erzielbaren Nass- und Schweißechtheiten und Abriebbeständigkeiten sind jedoch für intensive Farbnuancen noch nicht ausreichend. Ferner neigen daraus gefertigte Lederartikel beim Gebrauch zu Abfärbungen. Das Erzielen hoher Echtheiten bei mittleren bis hohen Farbtiefen erfordert zudem eine sehr sorgfältige Farbstoffauswahl und die Abstimmung des eingesetzten Farbstoffs mit den eingesetzten Lederhilfsmitteln, weiterhin geeignete Fettungsmittel und Nachgerbstoffauswahl. Zudem ist es in der Regel zur Erzielung der gewünschten Echtheiten erforderlich, Farbstoff und Fettungsmittel und in einigen Fällen auch den Nachgerbstoff in getrennter Flotte zu applizieren, was aufgrund des erforderlichen Flottenwechsels eine Verlängerung der Gesamtprozessdauer und zudem einen verstärkten Anfall von Abwasser zur Folge hat.

Der Färbeprozess im wässrigen und sauren Medium unter Verwendung konventioneller Lederfarbstoff ist folglich durch die unterschiedlichen Verfahrensschritte und mitverwendeten Chemikalien komplex und langwierig und kostenintensiv. Zudem können die oben geschilderten Echtheitsprobleme durch diese Maßnahmen nicht grundlegend gelöst werden. Grund hierfür ist, dass die eingesetzten konventionellen Farbstoffe über ionische Wechselwirkungen an das Leder gebunden sind. Durch Einwirkung wässriger alkalischer Lösungen, wie beispielsweise durch Waschflüssigkeiten oder in Tests zur Schweißechtheit, wird die lonenbindung zwischen Leder und Farbstoff zerstört, so dass sich der Farbstoff aus dem Leder löst und umgebende Materialien, z.B. Begleitgewebe anfärbt.

Verschiedentlich wurde versucht, die Farb- und Nassechtheit des gefärbten Leders durch Reaktivfärben zu verbessern. Unter Reaktivfärben versteht man die Verwendung von Farbstoffen, die funktionelle Gruppen aufweisen, welche mit den funktionellen Gruppen des Leders eine kovalente chemische Bindung ausbilden können.

So beschreiben T.C. Mullen in the Leather Manufacturer 1964, S. 18 ff. und in J. Soc. Leather, Trades, Chem. 46, 1962, S. 162 ff. sowie M.L. Fein et al. in J. Am. Leather Chem. Assoc. 65, 1970, S.584-591 die Verwendung von Reaktivfarbstoffen, die als Reaktivanker eine Dichlortriazin-Gruppe aufweisen. Die erzielten Fixierausbeuten, d.h. der Anteil an chemisch gebundenem Farbstoff, sind mit etwa 70 bis 75 % jedoch nur mäßig und lösen die oben geschilderten Probleme nicht. Zudem ist das Verfahren auf mit Chrom gegerbte Leder beschränkt.

Um diese Nachteile zu überwinden, schlägt die DE-A 3529294 vor, für die Lederfärbung Farbstoffe zu verwenden, die wenigstens eine 1,3,5-Triazinylgruppe, an die ein Substituent mit einem quartären Stickstoffatom gebunden ist, aufweisen. Eigene Untersuchungen der Anmelderin an N-Acetyllysin als Modellsystem haben jedoch gezeigt, dass unter den dort beschriebenen Färbebedingungen eine Ausbildung von kovalenten Bindungen zwischen Farbstoff und der Aminogruppe des N-Acetyllysins nicht in signifikantem Ausmaß erfolgt.

K. Rosenbusch et al. Das Leder 19, 1962, S. 284 beschreibt die Verwendung von Disazofarbstoffen, die eine Vinylsulfongruppe oder eine Gruppe, aus welcher bei Einwirkung von Alkalien eine Vinylsulfongruppe freigesetzt wird, aufweisen, zum Färben von Sämisch-Leder. Um eine ausreichende Fixierung zu erreichen sind jedoch lange Färbedauern bei einem pH-Wert von 10 erforderlich. Aufgrund der angewendeten Färbebedingungen, d.h. hoher pH-Wert in Verbindung mit langen Färbezeiten von 7 h und länger kann dieses Verfahren nur zum Färben von Sämischleder eingesetzt werden, das bekanntermaßen gegenüber Alkalien beständig ist. Bei anderen Ledersorten führen die beschriebenen Färbebedingungen zu einer Schädigung des Leders. Eigene Untersuchungen der Anmelderin zeigen zudem, dass bei Einsatz derartiger Farbstoffe eine zufriedenstellende Fixierung nicht erreicht wird.

Verschiedentlich wurden anionische Polyazofarbstoffe mit 3 oder mehr Azogruppen beschrieben, die eine Vinylsulfongruppe oder eine Gruppe, aus welcher bei Einwirkung von Alkalien eine Vinylsulfongruppe freigesetzt wird, aufweisen. Diese anionischen Azofarbstoffe werden in erster Linie für die Färbung von Papier oder Textifasern eingesetzt. Die EP-A 518266 und die JP 05246977 schlagen derartige Farbstoffe auch für die Färbung von Leder vor ohne jedoch konkret eine Lederfärbung zu beschreiben.

In der DE-A 19825202 wird die Färbung von Leder mit anionschen Polyazofarbstoffen bei neutralen bis sauren pH-Werten beschrieben. Die Farb- und Migrationsechtheiten des so gefärbten Leders sind jedoch nicht zufriedenstellend.

Zusammenfassend lässt sich sagen, dass durch die bekannte Verfahren zur Lederfärbung mit Reaktivfarbstoffen bei mittleren bis hohen Farbtiefen gute Fixierausbeuten von 85 % und höher nicht erreicht werden. Zur Erreichung hoher Nass- und Schweißechtheiten und einer guten Migrationsstabilität sind die im Stand der Technik erreichten Fixierausbeuten von 70 bis 75 % nicht ausreichend, da der nicht gebundene Farbstoffanteil mühsam ausgewaschen werden muss, um die hier geschilderten Probleme zu lösen. Auf die hier geschilderten Nachteile der Lederfärbung mit Reaktiv-Farbstoffen wird auch in The Leather Manufacturer 1964, S.18-23, hingewiesen. Es verwundert daher nicht, dass sich die Lederfärbung mit Reaktivfarbstoffen nicht durchgesetzt hat. Vielmehr werden heute andere Wege gesucht, Farbstoffe kovalent im Leder zu binden, beispielsweise durch Vorbehandlung des Leders mit polyfunktionellen Aldehyden, die wenigstens eine reaktive Gruppe aufweisen, welche mit einer reaktiven Gruppe des Farbstoffs unter Bindungsbildung reagieren können (siehe DE 100 44 642 A1)

Der vorliegenden Erfindung liegt somit die Aufgabe zugrunde, ein Verfahren zum Färben von Leder bereitzustellen, bei dem auch bei mittleren und hohen Farbtiefen (Farbintensitäten) hohe Echtheiten, insbesondere Nass-, Schweiß- und Reibechtheiten sowie eine hohe Migrationsechtheit erzielt werden. Zudem sollte das Verfahren unter Bedingungen durchgeführt werden können, die nicht oder nur in geringem Umfang zu einer Schädigung des Leders führen.

Es wurde überraschenderweise gefunden, dass bei Verwendung von anionischen Polyazofarbstoffen F, die wenigstens 3 Azogruppen (N=N-Gruppen) und wenigstens eine funktionelle Gruppe der nachfolgend definierten Formel A aufweisen, in wässriger Flotte bei pH-Werten von wenigstens pH 8 diese Aufgabe gelöst wird. Die Färbung und Fixierung geht dabei so rasch vonstatten, dass nur kurze Färbedauern von 4 h und weniger erforderlich sind um eine hinreichte Farbintensität und eine hohe Fixierung von 85 % und darüber zu erreichen.

Demnach betrifft die vorliegende Erfindung ein Verfahren zum Färben von Leder mit wenigstens einem Farbstoff F, der wenigstens eine unter alkalischen Bedingungen aktivierbare Gruppe der Formel A; 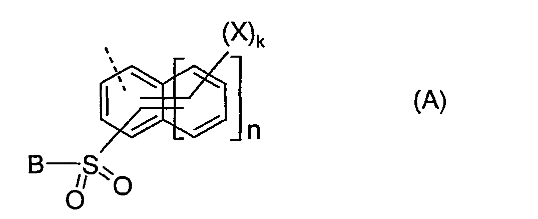 aufweist, worin
---- die Bindung zum Rest des Farbstoffmoleküls darstellt;
- X: für C₁-C₄-Alkyl oder C₁-C₄-Alkoxy steht,
- k: für 0, 1, 2 oder 3 steht,
- n: 0 oder 1 bedeutet, und
- B: für eine Gruppe CH=CH₂ oder eine Gruppe CH₂-CH₂-Q steht, worin Q eine unter alkalischen Bedingungen abspaltbare Gruppe steht,

umfassend die Behandlung des Leders mit einer wässrigen Flotte, enthaltend wenigstens einen Farbstoff F, bei einem pH-Wert von 8 bis 11, vorzugsweise im Bereich von 8,5 bis 10,5 und speziell im Bereich von 8,5 bis 10.

Hier und im Folgenden steht der Ausdruck Alkyl in der Regel für einen linearen oder verzweigten Kohlenwasserstoffrest mit 1 bis 6 und vorzugsweise mit 1 bis 4 C-Atomen (C₁-C₆- bzw. C₁-C₄-Alkyl) wie Methyl, Ethyl, Propyl, Isopropyl und dergleichen. Halogenalkyl steht für Alkyl, wie vorstehend definiert, worin die Wasserstoffatome teilweise oder vollständig durch Halogenatome, insbesondere durch Fluoratome ersetzt sind, wie in Trifluormethyl, Trichlormethyl, Pentafluorethyl, und dergleichen. Alkoxy steht für einen über ein Sauerstoffatom gebundenen Alkylrest, wie vorstehend definiert. Gegebenenfalls substituiertes Phenyl bedeutet, dass der Phenylrest einen oder mehrere, z.B. 1, 2, 3 oder 4 Substituenten aufweisen kann, die beispielsweise ausgewählt sind unter Halogen, Alkyl, Alkoxy, Nitro, Cyano, COOH, SO₃H und dergleichen. Halogen steht insbesondere für Fluor, Chlor oder Brom.

Die Variable k steht vorzugsweise für 0, 1 oder 2, d.h. der Rest A weist 0, 1 oder 2 Reste X auf. Vorzugsweise steht n in Formel A für 0, d.h. der Rest A ist von Benzol abgeleitet. Sofern n für 1 steht, ist der Rest A von Naphthalin abgeleitet. In diesen Fällen kann sich die Gruppe SO₂-B an dem gleichen Benzolkern wie die wenigstens eine Gruppe X befinden oder an dem anderen Benzolkern.

Unter einer unter alkalischen Bedingungen abspaltbaren Gruppe Q versteht man Reste, die unter alkalischen Bedingungen, d.h. bei pH-Werten von 7,5 oder darüber unter Eliminierung unter Ausbildung einer Vinylsulfongruppe abgespalten werden. Beispiele für derartige Gruppen sind Halogen, z.B. Chlor, Brom oder lod, weiterhin -O-SO₃H, -S-SO₃H, quartäre Ammoniumreste wie Tri-C₁-C₄₋alkylammonium, Benzyldi-C₁-C₄-alkylammonium oder N-gebundenes Pyridinium, sowie Reste der Formeln R^{a}S(O)₂-, R^{b}S(O)₂-O-, R^{c}C(O)-O-. Hierin stehen R^{a}, R^{b} und R^{c} unabhängig voneinander für Alkyl, Halogenalkyl oder gegebenenfalls substituiertes Phenyl, wobei R^{c} auch Wasserstoff bedeuten kann. Bevorzugt steht Q für eine Gruppe -O-(CO)CH₃ und insbesondere für -O-SO₃H.

Erfindungsgemäß bevorzugt steht B in Formel A für CH=CH₂, eine Gruppe CH₂-CH₂-O-C(O)CH₃ oder eine Gruppe CH₂-CH₂-O-SO₃H. Insbesondere ist Rest A ausgewählt ist unter den nachfolgenden Resten A1 bis A6:

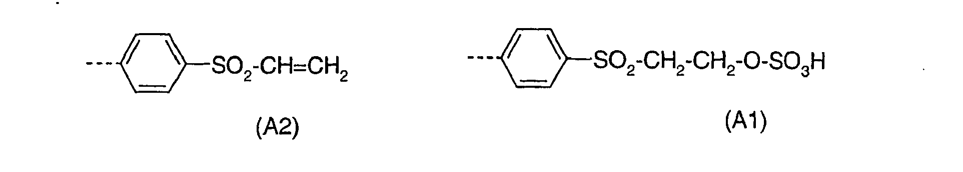

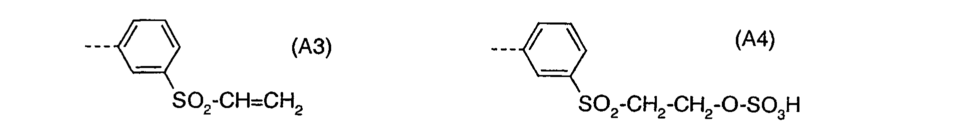

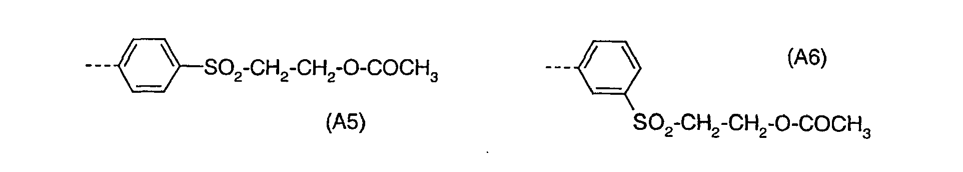

Besonders bevorzugt hierunter sind Farbstoffe, worin der wenigstens eine Rest A die Formel A1, A2, A3 oder A4 und insbesondere die Formel A1 oder A2 aufweist.

Zweckmäßigerweise weist der im erfindungsgemäßen Verfahren eingesetzte Farbstoff, 1, 2 oder 3, vorzugsweise 1 oder 2 der vorgenannten Reste A auf. Dieser Rest A kann, muss aber nicht Bestandteil des Farbstoffchromophors sein und ist vorzugsweise über eine Gruppe -NH- oder -N=N- mit dem Farbstoffmolekül verbunden.

Erfindungsgemäß ist der Farbstoff F anionisch, d.h. er weist wenigstens eine, z.B. 1 bis 10, insbesondere 2 bis 8 anionische oder saure funktionelle Gruppen je Farbstoffmolekül auf. Diese Gruppen verleihen dem Farbstoff F unter schwach sauren, neutralen oder alkalischen Bedingungen Wasserlöslichkeit. Insbesondere handelt es sich um anionische bzw. saure funktionelle Gruppen, die im wässrigen Medium bei pH-Werten oberhalb 4, unter Bildung anionischer Gruppen dissoziieren. Beispiele für derartige Gruppen sind Hydroxysulfonylgruppen (-SO₃H), Carboxylgruppen (COOH) und Hydroxysulfonyloxygruppen (-O-SO₃H) sowie die Anionen dieser Gruppen, wobei vorzugsweise wenigstens eine und insbesondere wenigstens zwei dieser Gruppen Hydroxysulfonylgruppen sind. Sofern diese Gruppen im Farbstoff F als anionische Gruppen vorliegen, versteht es sich von selber, dass der Farbstoff auch die zur Neutralisation erforderlichen Gegenionen umfasst. Geeignete Gegenionen sind insbesondere Alkalimetallionen, speziell Natrium-, Kalium- und Lithium-lonen sowie Ammoniumionen, z.B. Ammoniumionen, die sich von Mono-, Di- oder Triethanolamin ableiten.

Für das erfindungsgemäße Verfahren sind auch Metallkomplexe, vorzugsweise Übergangsmetallkomplexe der vorgenannten Farbstoffe F, insbesondere Komplexe der Übergangsmetalle der Gruppen VI bis X des Periodensystems und hierunter insbesondere des Cu, Cr, Fe, Ni, Co, Mn, Zn und Cd geeignet. Das Molverhältnis von Übergangsmetall zu Farbstoffmolekül in diesen Metallkomplexen liegt üblicherweise im Bereich von 2:1 bis 1:2. In der Regel erfolgt in diesen Farbstoffen die Komplexierung der Metallionen nicht über die vorgenannten anionischen Gruppen sondern über deprotonierte Hydroxylgruppen, über Aminogruppen, Iminogruppen, Stickstoffatome, die in ein aromatischen π-Elektronensystem eingebunden sind, oder über Azogruppen.

Derartige Farbstoffe F sind aus dem eingangs zitierten Stand der Technik sowie aus DE-A 196 48 939 bekannt oder können in Analogie zu bekannten Herstellungsverfahren für strukturell ähnliche Farbstoffe, wie sie in dem hier zitierten Stand der Technik sowie aus EP 602 562, EP-A 597 411, EP-A 592 105 oder DE 43 196 74 bekannt sind, hergestellt werden.

Zur Herstellung der Farbstoffe F wird man in der Regel eine Aminoverbindung der Formel B 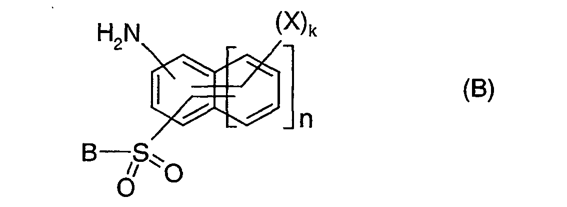 zunächst diazotieren und dann auf ein entsprechendes Farbstoffvorprodukt kuppeln. Das bei der Reaktion der Aminoverbindung B bzw. ihres Diazoniumsalzes mit dem Farbstoff-Vorprodukt erhaltene Reaktionsprodukt kann bereits der Farbstoff F sein oder seinerseits ein Vorprodukt für den Farbstoff F darstellen, das in Analogie zu bekannten Verfahren zum Farbstoff F weiterverarbeitet wird. Alternativ kann man eine Verbindung B mit einem Farbstoff-Vorprodukt, dass eine nucleophil verdrängbare Gruppe aufweist, in an sich bekannter Weise zur Reaktion bringen. Beispiele für nucleophil verdrängbare Gruppen sind Halogen, insbesondere Chlor oder Brom, das an einen Aromaten gebunden ist wie in Halogentriazin-Resten, oder in Form einer Halogensulfonyl-Gruppe oder einer Halogencarbonylgruppe vorliegt. Verfahren hierzu sind aus dem hier zitierten Stand der Technik bekannt oder können in analoger Weise zur Herstellung der Farbstoffe F angewendet werden.

In einer bevorzugten Ausführungsform der Erfindung handelt es sich bei dem Farbstoff F um einene Azofarbstoff und vorzugsweise um einen Azofarbstoff, der ausgewählt ist unter den Farbstoffen der allgemeinen Formeln I bis VII und deren Metallkomplexen:

Dk¹-N=N-[Napht¹-N=N-]ₚKk¹[-N=N-Dk²]ₘ (I)

Dk¹-N=N-Napht¹-N=N-Tk¹-N=N-Kk¹[-N=N-Dk²]ₙ (II)

Dk¹-N=N-Napht¹-N=N-Tk¹-N=N-Kk¹-N=N-Tk²-N=N-Napht²-N=N-Dk² (III)

Dk¹-N=N-Kk¹-N=N-Tk¹-N=N-Kk²-N=N-Dk² (IV)

Dk¹-N=N-Napht¹-N=N-Naptht²-N=N-Kk¹[-N=N-Dk²]ₙ (V)

Kk³-N=N-Tk¹-N=N-Kk¹-N=N-A (VI)

Dk¹-N=N-P-N=N-Kk¹-N=N-R'-N=N-Dk² (VII)

worin:
- n und p: unabhängig voneinander für 0 oder 1 stehen;
- m: 0, 1 oder 2 bedeutet und wobei in Formel I m + p = 2 oder 3 ist;
- Dk¹, Dk²: unabhängig voneinander für einem von einem aromatischen Amin abgelei- ten Rest stehen oder eine Gruppe der Formel A bedeutet, wobei in den Formeln I - V und VII jeweils wenigstens einer der Reste Dk¹ oder Dk² für einen Rest der Formel A steht
- Kk¹, Kk²: unabhängig voneinander für einen ein-, zwei- oder dreiwertigen aromati- schen, von Benzol, Naphthalin, Pyrazol, Chinolin, Diphenylamin, Diphenyl- methan, Pyridin, Pyrimidin oder Diphenylether abgeleiteten Rest stehen, der gegebenenfalls einen oder mehrere der folgenden Reste als Substi- tuenten aufweisen kann: SO₃H, COOH, OH, NH₂, NO₂, CN, Halogen, C₁- C₄-Alkyl, C₁-C₄-Hydroxyalkyl, Carboxy-C₁-C₄-alkyl, C₁-C₄-Alkoxy, C₁-C₄- Alkylamino, C₁-C₄-Dialkylamino, C₁-C₄-Alkylaminocarbonyl, C₁-C₄- Dialkylaminocarbonyl, C₁-C₄-Alkylcarbonylamino, N-(C₁-C₄-Alkylcarbonyl)- N-(C₁-C₄-alkylcarbonyl)amino, C₁-C₄-Hydroxy-C₁-C₄-alkylamino, Carboxy- C₁-C₄-alkylamino, Phenylcarbonylamino, C₁-C₄-Alkylsulfonyl, C₁-C₄- Alkylaminosulfonyl, C₁-C₄-Alkylsulfonylamino, Phenylsulfonyl, Phenylsulfo- nylamino, Formamid oder 5- oder 6-gliedriges Heterocyclyl, das gegebe- nenfalls durch 1, 2 oder 3 der folgenden Reste: OH, Halogen, C₁-C₄-Alkyl oder Phenyl, substituiert ist, wobei 5-gliedriges aromatisches Heterocyclyl gegebenenfalls am Stickstoff eine Phenylgruppe oder Naphthylgruppe trägt, die gegebenenfalls einen oder zwei der folgenden Reste aufweisen kann: OH, SO₃H, C₁-C₄-Alkyl, und/oder C₁-C₄-Alkoxy;
- Kk³: für einen von Benzol, Pyridin, Pyrimidin oder Naphthalin abgeleiteten ein- wertigen Rest steht, der gegebenenfalls 1 oder 2 Hydroxysulfonylgruppen aufweist und gegebenenfalls 1, 2 oder 3 weitere Substituenten, ausgewählt unter SO₃H, COOH, OH, NH₂, NO₂, CN, Halogen, C₁-C₄-Alkyl, C₁-C₄- Hydroxyalkyl, Carboxy-C₁-C₄-alkyl, C₁-C₄-Alkoxy, C₁-C₄-Alkylamino, C₁-C₄- Dialkylamino, C₁-C₄-Alkylaminocarbonyl, C₁-C₄-Dialkylaminocarbonyl, C₁- C₄-Alkylcarbonylamino, N-(C₁-C₄-Alkylcarbonyl)-N-(C₁-C₄- alkylcarbonyl)amino, C₁-C₄-Hydroxy-C₁-C₄-alkylamino, Carboxy-C₁-C₄- alkylamino, Phenylcarbonylamino, C₁-C₄-Alkylsulfonyl, C₁-C₄- Alkylaminosulfonyl, C₁-C₄-Alkylsulfonylamino, Phenylsulfonyl, Phenylsulfo- nylamino, Formamid oder 5- oder 6-gliedriges Heterocyclyl, das gegebe- nenfalls durch 1, 2 oder 3 der folgenden Reste: OH, Halogen, C₁-C₄-Alkyl oder Phenyl, substituiert ist, wobei 5-gliedriges aromatisches Heterocyclyl gegebenenfalls am Stickstoff eine Phenylgruppe oder Naphthylgruppe trägt, die gegebenenfalls einen oder zwei der folgenden Reste aufweisen kann: OH, SO₃H, C₁-C₄-Alkyl, und/oder C₁-C₄-Alkoxy;
- Tk¹, Tk²: unabhängig voneinander für einen zweiwertigen aromatischen Rest stehen, der von Benzol, Diphenylamin, Diphenyl, Diphenylmethan, 2- Phenylbenzimidazol, Phenylsulfonylbenzol, Phenylaminosulfonylbenzol, Stilben oder Phenylaminocarbonylbenzol abgeleitetet ist, die gegebenen- falls einen oder mehrere der folgenden Reste als Substituenten aufweisen können: SO₃H, COOH, OH, NH₂, NO₂, Halogen, C₁-C₄-Alkyl;
- P und R': unabhängig voneinander für einen zweiwertigen aromatischen Rest stehen, der von Benzol oder Naphthalin abgeleitetet ist, die gegebenenfalls einen oder mehrere, z.B. 1, 2, 3, 4 oder 5 der folgenden Reste als Substituenten aufweisen können: SO₃H, COOH, OH, NH₂, NO₂, Halogen, C₁-C₄-Alkyl, C₁- C₄-Hydroxyalkyl, Carboxy-C₁-C₄-alkyl, C₁-C₄-Alkoxy, C₁-C₄-Alkylamino, C₁- C₄-Dialkylamino, C₁-C₄-Alkylaminocarbonyl, C₁-C₄-Dialkylaminocarbonyl, C₁-C₄-Alkylcarbonylamino, N-(C₁-C₄-Alkylcarbonyl)-N-(C₁-C₄- alkylcarbonyl)amino, C₁-C₄-Hydroxy-C₁-C₄-alkylamino, Carboxy-C₁-C₄- alkylamino, Phenylcarbonylamino, C₁-C₄-Alkylsulfonyl, C₁-C₄- Alkylaminosulfonyl, C₁-C₄-Alkylsulfonylamino, Phenylsulfonyl, Phenylsulfo- nylamino, Formamid oder 5- oder 6-gliedriges Heterocyclyl, das gegebe- nenfalls durch 1, 2 oder 3 der folgenden Reste: OH, Halogen, C₁-C₄-Alkyl oder Phenyl, substituiert ist, wobei 5-gliedriges aromatisches Heterocyclyl gegebenenfalls am Stickstoff eine Phenylgruppe oder Naphthylgruppe trägt, die gegebenenfalls einen oder zwei der folgenden Reste aufweisen kann: OH, SO₃H, C₁-C₄-Alkyl, und/oder C₁-C₄-Alkoxy;
- Napht¹, Napht²: unabhängig voneinander für einen von Naphthalin abgeleiteten zwei- wertigen Rest stehen, der 1 oder 2 Hydroxysulfonylgruppen aufweist und gegebenenfalls 1, 2 oder 3 weitere Substituenten, ausgewählt unter OH, NH₂, C₁-C₄-Alkylamino, C₁-C₄-Dialkylamino C₁-C₄-Alkylsulfonylamino, Phe- nylsulfonylamino, 4-Methylphenylsulfonylamino, C₁-C₄-Alkylaminosulfonyl, Di-C₁-C₄-alkylaminosulfonyl, Phenylaminosulfonyl, 4- Methylphenylaminosulfonyl und Resten NHC(O)R^{x}, worin R^{x} für Wasser- stoff, C₁-C₄-Alkyl, Maleinyl oder Phenyl, aufweisen kann;

Hier und im Folgenden steht C₁-C₄-Alkyl (sowie die Alkylteile in C₁-C₄-Alkoxy, C₁-C₄-Alkylamino, Di-C₁-C₄-alkylamino, C₁-C₄-Alkylsulfonyl, C₁-C₄-Alkylaminosulfonyl, C₁-C₄-Alkylaminocarbonyl, Di-C₁-C₄-alkylaminosulfonyl, Di-C₁-C₄-alkylaminocarbonyl und C₁-C₄-Alkylcarbonylamino) für einen linearen oder verzweigten aliphatischen Kohlenwassertoffrest wie Methyl, Ethyl, n-Propyl, Isopropyl, n-Butyl und dergleichen.

C₁-C₄-Hydroxyalkyl steht für C₁-C₄-Alkyl, das eine OH-Gruppe trägt wie 2-Hydroxyethyl. Dementsprechend steht C₁-C₄-Hydroxyalkylamino für C₁-C₄-Alkylamino, das im Alkylrest eine OH-Gruppe trägt wie 2-Hydroxyethylamino.

C₁-C₄-Carboxyalkyl steht für C₁-C₄-Alkyl, das eine Carboxylgruppe (COOH-Gruppe) trägt wie Carboxymethyl (CH₂COOH) und 2-Carboxyethyl (CH₂CH₂COOH). Dementsprechend steht C₁-C₄-Carboxyalkylamino für C₁-C₄-Alkylamino, das im Alkylteil eine Carboxylgruppe (COOH-Gruppe) trägt wie Carboxymethylamino (NH-CH₂COOH) und 2-Carboxyethylamino (NH-CH₂CH₂COOH).

5- oder 6-gliedriges Heterocyclyl weist in der Regel 1, 2 oder 3 Heteroatome, ausgewählt unter Stickstoff, Sauerstoff und Schwefel, insbesondere 1 oder 2 Stickstoffatome und gegebenenfalls ein Sauerstoff- oder Schwefelatom als Ringglieder auf und kann gesättigt, ungesättigt oder aromatisch sein. Beispiele für gesättigtes Heterocyclyl sind Morpholinyl, Piperidinyl, Piperazinyl und Pyrrolidinyl. Beispiele für aromatisches Heterocyclyl sind Pyridinyl, Pyrazolyl, Oxazolyl, Thiazolyl etc.

Die Farbstoffe der Formeln I bis VII können sowohl in freier Form, in Form ihrer Salze und - sofern zwei durch eine Diazogruppe -N=N- verbundene Reste jeweils einen in ortho-Position zur Diazogruppe angeordneten Rest OH, COOH oder NH₂ aufweisen - als Metallkomplexe eingesetzt werden.

In den Farbstoffen der Formeln I bis V und VII sind die Reste DK¹ und DK² in der Regel von aromatischen Aminen DK¹-NH₂ bzw. DK²-NH₂ abgeleitet, die im Folgenden auch als Diazoniumkomponenten bezeichnet werden. Bei den Aminen DK¹-NH₂ bzw. DK²-NH₂ handelt es sich in der Regel um gegebenenfalls substituiertes Anilin, gegebenenfalls substituiertes α- oder β-Naphthylamin oder um gegebenenfalls substituierte Aminochinoline. Dementsprechend stehen in der Regel die Reste DK¹ und DK² unabhängig voneinander für von Benzol, Naphthalin oder Chinolin abgeleitete Reste, worin Naphthalin, Chinolin und Benzol gegebenenfalls einen oder mehrere, z.B. 1, 2 oder 3 Substituenten aufweisen. Beispiele für Substituenten sind die folgenden Reste: SO₃H, COOH, OH, NH₂, NO₂, Halogen, C₁-C₄-Alkyl, C₁-C₄-Hydroxyalkyl, Carboxy-C₁-C₄-alkyl, C₁-C₄-Alkoxy, C₁-C₄-Alkylamino, C₁-C₄-Dialkylamino, C₁-C₄-Alkylaminocarbonyl, C₁-C₄-Dialkylaminocarbonyl, C₁-C₄-Alkylcarbonylamino, N-(C₁-C₄-Alkylcarbonyl)-N-(C₁-C₄-alkylcarbonyl)amino, C₁-C₄-Hydroxy-C₁-C₄-alkylamino, Carboxy-C₁-C₄-alkylamino, Phenylcarbonylamino, C₁-C₄-Alkylsulfonyl, C₁-C₄-Alkylaminosulfonyl, C₁-C₄-Alkylsulfonylamino, Phenylsulfonyl, Phenylsulfonylamino, Formamid oder 5- oder 6-gliedriges Heterocyclyl, das gegebenenfalls durch 1, 2 oder 3 der folgenden Reste: OH, Halogen, C₁-C₄-Alkyl oder Phenyl, substituiert ist, wobei 5-gliedriges aromatisches Heterocyclyl gegebenenfalls am Stickstoff eine Phenylgruppe oder Naphthylgruppe trägt, die gegebenenfalls einen oder zwei der folgenden Reste aufweisen kann: OH, SO₃H, C₁-C₄-Alkyl, und/oder C₁-C₄-Alkoxy;

Als Monoamine Dk¹-NH₂ bzw. Dk²-NH₂ kommen weiterhin auch 4-Amino-1-phenylpyrazole in Betracht, worin der Pyrazolring als auch der Phenylring einen oder mehrere, z.B. 1, 2 oder 3 Substituenten der vorgenannten Art oder eine Gruppe B-SO₂-aufweisen, worin B die zuvor genannten Bedeutungen aufweist. In diesen Fällen steht Dk¹ bzw. Dk² insbesondere für Pyrazol-4-yl, das in der 1-Position einen Phenylrest oder eine Gruppe der Formel A aufweist und gegebenenfalls 1 oder 2 Substituenten trägt, die ausgewählt sind unter Halogen, C₁-C₄-Alkyl, Hydroxy, COOH, Hydroxysulfonyl oder C₁-C₄-Alkoxy.

Vorzugsweise stehen Dk¹ und Dk² unabhängig voneinander für Reste, die von einem gegebenenfalls substituiertes Anilin, einem gegebenenfalls substituiertes α- oder β-Naphthylamin abgeleitet sind, oder für eine Gruppe A.

Beispiele für geeignete Monoamine Dk¹-NH₂ bzw. Dk²-NH₂ sind die im folgenden angegebenen Verbindungen DK1 bis DK39:

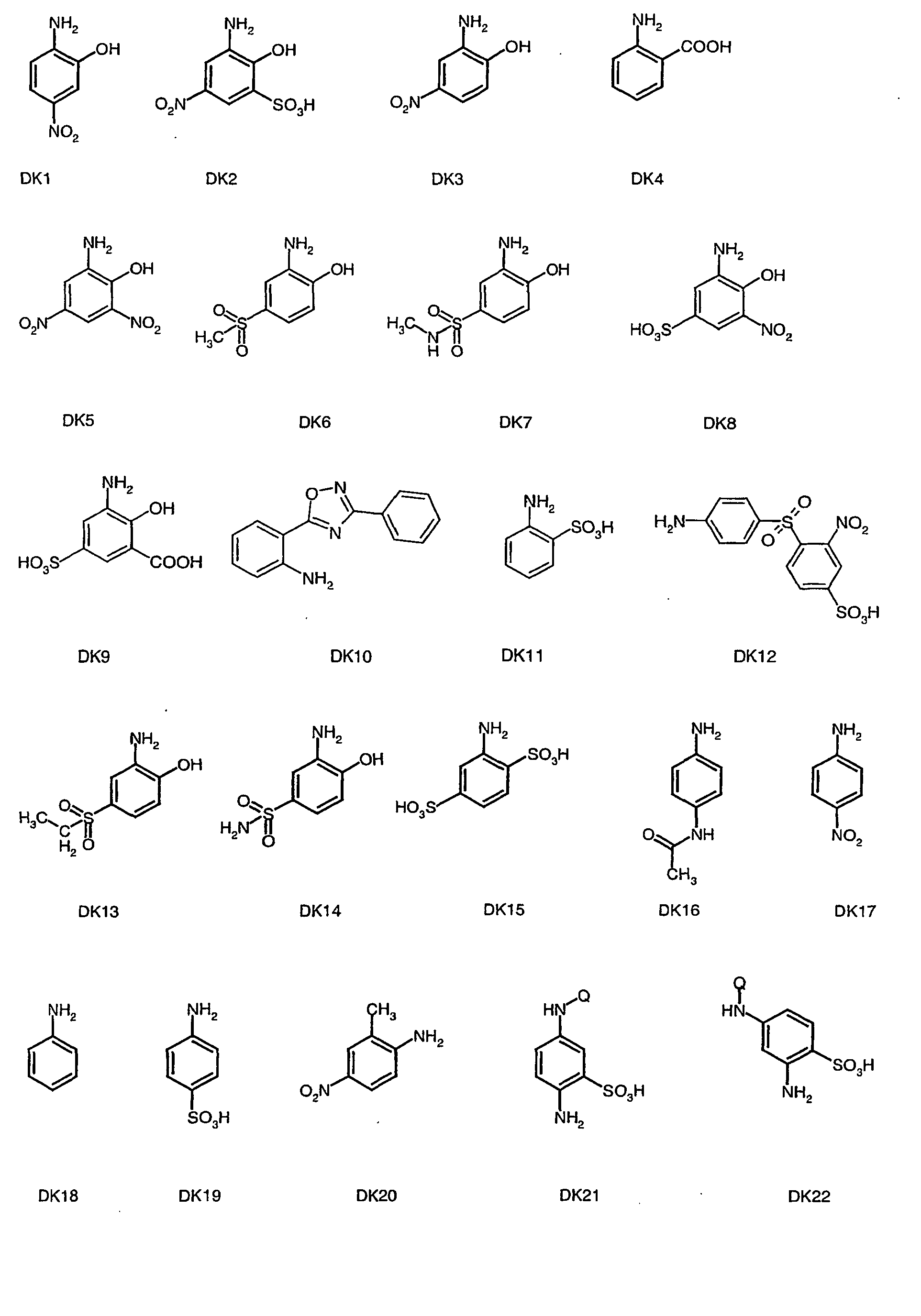

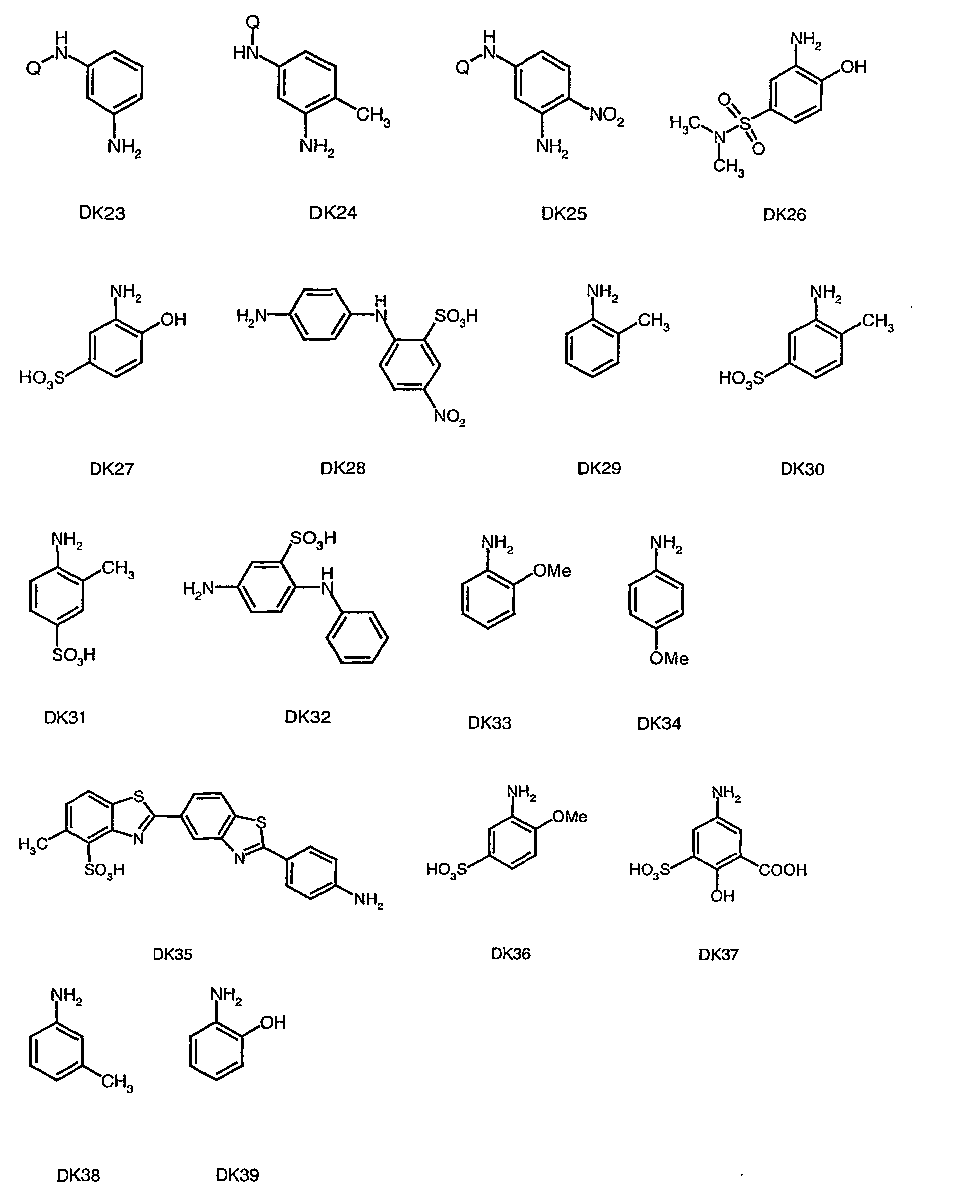

Die Reste Q in den Formeln DK21 bis DK25 bedeuten Wasserstoff C₁-C₄-Alkyl, Carboxy-C₁-C₄-alkyl, C₁-C₄-Hydroxyalkyl, C₁-C₄-Alkoxy oder Phenylcarbonyl.

Geeignete Diazokomponenten sind weiterhin die im folgenden angegebenen Naphthylamine DK40 bis 59: 4-Amino-3-hydroxynahpthalin-1-sulfonsäure (DK40), 4-Amino-3-hydroxy-6-nitronaphthalin-1-sulfonsäure (DK41), 6-Amino-4-hydroxynaphthalin-2-sulfonsäure (Gammasäure, DK42), 4-Amino-5-hydroxynaphthalin-1-sulfonsäure (Chikago-S-Säure, DK43), 4-Amino-5-hydroxynaphthalin-2,7-disulfonsäure (H-Säure DK44), 4-Amino-5-hydroxynaphthalin-1,7-disulfonsäure (K-Säure, DK45), 8-Aminonaphthalin-2-sulfonsäure (Clevesäure 7, DK46), 6-Aminonaphthalin-1-sulfonsäure (D-Säure, DK47), 4-Aminonaphthalin-2,7-sulfonsäure (DK48), 5-Aminonaphthalin-2-sulfonsäure (DK49), 7-Amino-4,8-dihydroxynaphthalin-2-sulfonsäure (DK50), 2-Amino-5-hydroxynaphthalin-1,7-disulfonsäure (DK51), 3-Amino-5-hydroxynaphthalin-2,7-disulfonsäure (DK52), 3-Amino-1,5-disulfonsäure (DK53), 7-Aminonaphthalin-1-sulfonsäure (DK54), 4-Aminonaphthalin-1-sulfonsäure (DK55), 5-Aminonaphthalin-1-sulfonsäure (DK56), 7-Aminonaphthalin-1,3,5-trisulfonsäure (DK57), 4-Amino-3-hydroxy-7-[(4-methylphenyl)sulfonylamino]naphthalin-1-sulfonsäure (DK58) und 7-Amino-4-hydroxynaphthalin-2-sulfonsäure (I-Säure, DK59).

Beispiele für geeignete Monoamine Dk¹-NH₂ bzw. Dk²-NH₂ sind weiterhin die im folgenden angegebenen Verbindungen DK60 bis DK83:

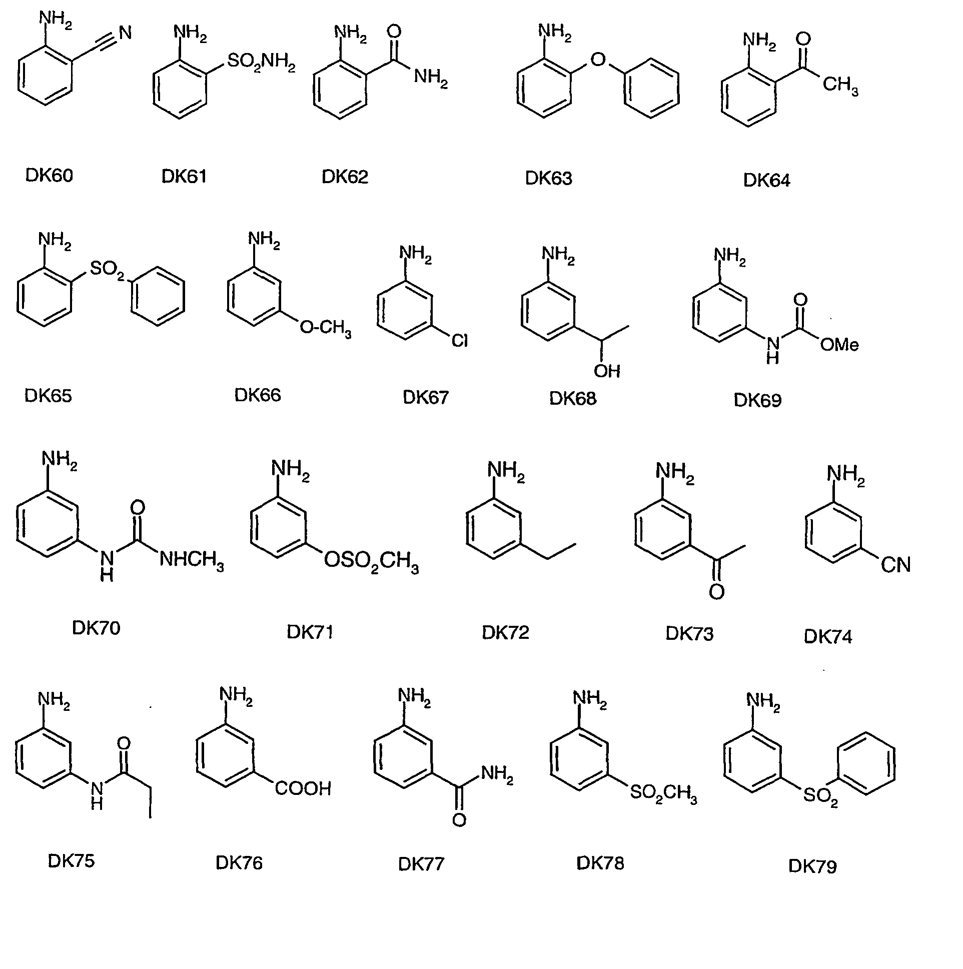

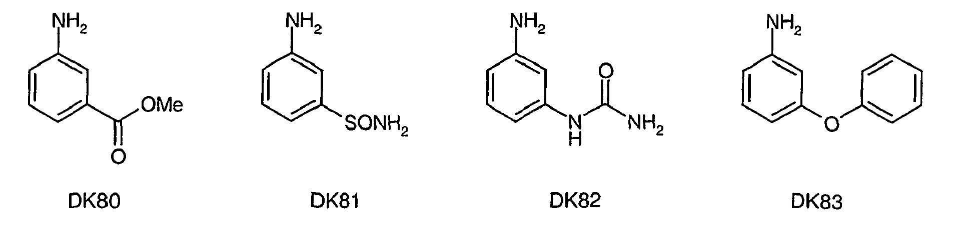

Als Reste Kk¹ und Kk² kommen grundsätzlich alle ein-, zwei- oder dreiwertigen, als Reste Kk³ alle einwertigen aromatischen Reste in Betracht, die sich von einem gegebenenfalls substituierten Benzol, Naphthalin, Pyrazol, Diphenylamin, Diphenylmethan, Pyridin, Pyrimidin oder Diphenylether ableiten, die noch 1, 2 oder 3 freie Positionen aufweisen, auf die sukzessive ein-, zwei- oder dreimal eine Diazoniumverbindung gekuppelt werden kann. Die den Resten Kk¹, Kk² und Kk³ zugrundeliegenden Verbindungen werden im folgenden auch als Kupplungskomponente bezeichnet.

Geeignet Kupplungskomponenten sind beispielsweise von Benzol abgeleitete Verbindungen der allgemeinen Formel Kk-A, von Naphthalin abgeleitete Verbindungen der Formel Kk-B, von Chinolin abgeleitete Verbindungen der Formel Kk-C, von Pyrazol abgeleitete Verbindungen der Formel Kk-D, von Diphenylmethan abgeleitete Verbindungen der Formel Kk-E, von Diphenylamin abgeleiteten Verbindungen der Formel Kk-F, von Pyridin abgeleitete Verbindungen der Formel Kk-G und von Pyridon abgeleitete Verbindungen der Formel Kk-H:

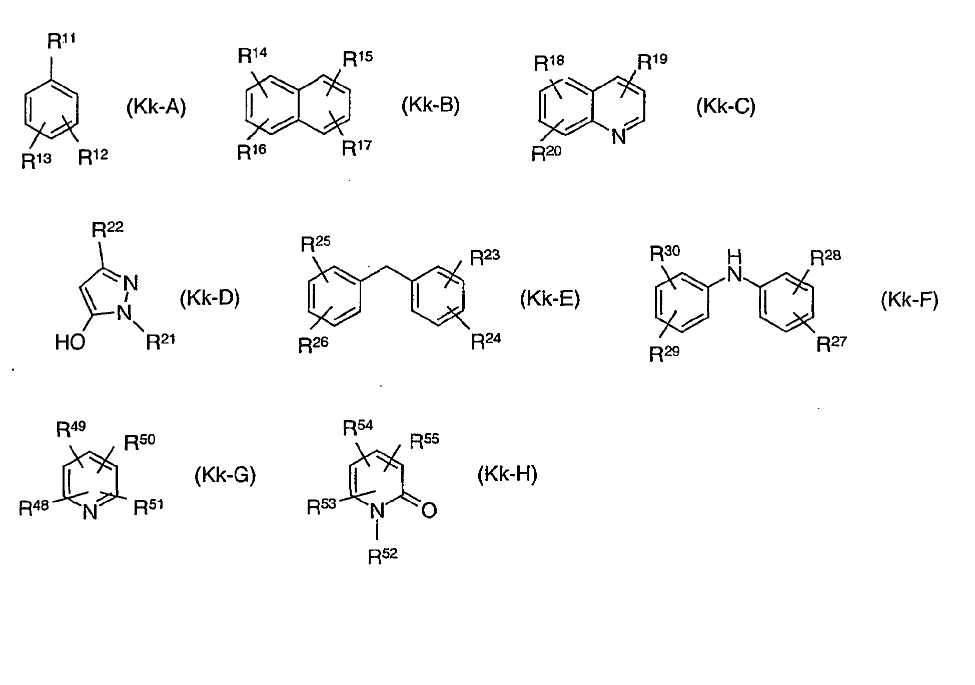

In der Formel Kk-A stehen R¹¹ für NH₂, OH, C₁-C₄-Alkoxy, C₁-C₄-Alkylamino, Di-C₁-C₄-alkylamino, Hydroxy-C₁-C₄-alkylamino, Carboxy-C₁-C₄-alkylamino, C₁-C₄-Alkylcarbonylamino oder Phenylamino, R¹² für Wasserstoff, NH₂, OH, C₁-C₄-Alkoxy, Hydroxy-C₁-C₄-alkylamino, Carboxy-C₁-C₄-alkylamino, C₁-C₄-Alkylamino, Di-C₁-C₄-alkylamino und R¹³ für Wasserstoff, CN, C₁-C₄-Alkyl, C₁-C₄-Alkoxy, CONH₂, C₁-C₄-Alkylsulfonyl, C₁-C₄-Alkylsulfonyloxy, SO₂-Phenyl, SO₃H, C₁-C₄-Alkylcarbonyl, C₁-C₄-Alkoxycarbonyl, 1-Hydroxyethyl, COOH, Cl, Br, F, SO₂NR⁵⁶R⁵⁷, NO₂, oder NH₂, wobei R⁵⁶ und R⁵⁷ unabhängig voneinander für Wasserstoff, C₁-C₄-Alkyl, Formyl, C₁-C₄-Alkylcarbonyl, C₁-C₄-Alkyloxycarbonyl, NH₂-CO, C₁-C₄-Alkylaminocarbonyl, stehen.

In Formel Kk-B stehen R¹⁴ und R¹⁵ unabhängig voneinander für Wasserstoff oder weisen eine der als R¹¹ genannten Bedeutungen auf, wobei R¹⁵ auch für SO₃H stehen kann. R¹⁶ steht für Wasserstoff, OH, SO₃H, C₁-C₄-Alkylsulfonylamino, C₁-C₄-Alkylaminosulfonyl, C₁-C₄-Alkylaminosulfonylamino, Di-C₁-C₄-alkylaminosulfonylamino, C₁-C₄-Alkoxycarbonylamino, Phenylsulfonylamino, das am Phenylring einen oder zwei Substituenten, ausgewählt unter C₁-C₄-Alkyl, C₁-C₄-Alkoxy oder Halogen aufweisen kann. R¹⁷ steht für Wasserstoff, OH oder eine Gruppe SO₃H.

In Formel Kk-C stehen R¹⁸ bis R²⁰ unabhängig voneinander für Wasserstoff, OH oder C₁-C₄-Alkyl.

In Formel Kk-D steht R²¹ für Wasserstoff, Phenyl oder Naphthyl, wobei die 2 letztgenannten Gruppen 1, 2 oder 3 Substituenten aufweisen können, die ausgewählt sind unter Wasserstoff, OH, Halogen, C₁-C₄-Alkyl, SO₃H, NO₂ und der zuvor definierten Gruppe B-SO₂-. In einer Ausführungsform der Erfindung steht R²¹ für eine der zuvor definierten Gruppen A und insbesondere für eine der Gruppen A1 bis A6. R²² bedeutet Wasserstoff, COOH oder C₁-C₄-Alkyl.

In Formel Kk-E bedeuten R²³ und R²⁵ unabhängig voneinander Wasserstoff, COOH, Hydroxy oder C₁-C₄-Alkyl. R²⁴ und R²⁶ stehen unabhängig voneinander Wasserstoff, Hydroxy oder C₁-C₄-Alkyl,

In Formel Kk-F bedeuten R²⁷ und R²⁹ unabhängig voneinander Wasserstoff, SO₃H, COOH, Hydroxy oder C₁-C₄-Alkyl. R²⁸ und R³⁰ stehen unabhängig voneinander Wasserstoff, Hydroxy oder C₁-C₄-Alkyl,

In Formel Kk-G bedeuten R⁴⁸, R⁴⁹, R⁵⁰ und R⁵¹ unabhängig voneinander Wasserstoff, SO₃H, COOH, NH₂, CN, Hydroxy oder C₁-C₄-Alkyl.

In Formel Kk-H bedeuten R⁵², R⁵³, R⁵⁴ und R⁵⁵ unabhängig voneinander Wasserstoff, SO₃H, COOH, NH₂, CN, Hydroxy oder C₁-C₄-Alkyl.

Beispiele für Kupplungskomponenten der Formel Kk-A sind die vorgenannten Anilinverbindungen DK3, DK4, DK6, DK7, DK11, DK13, DK14, DK15, DK18, DK21 bis DK27, DK29, DK30, DK33, DK36, DK38, DK39, DK60 bis DK83, weiterhin Salicylsäure (Kk1), 3-Aminophenol (Kk2), Resorcin (Kk3), 3-Phenylaminophenol (Kk4), 1,3-Diaminobenzol (Kk5), 3-Acetylamino-anilin (Kk6), 2-Nitro-anilin (Kk7), 3-(Diethylamino)phenol (Kk8), 3-(Morpholin-1-yl)phenol (Kk9), 3-(Diethylamino)-anilin (Kk10), N-Acetyl-3-(diethylamino)anilin (Kk11), N-(3-Hydroxyphenyl)glycin (Kk12), 3-(2-Hydroxyethyl)aminophenol (Kk13), 2,4-Diaminotoluol (Kk14), 2,4-Diaminobenzolsulfonsäure (Kk15), 2,4-Diamino-1-nitrobenzol (Kk16), N-(3-Amino-6-methylphenyl)-glycin (Kk17), 2,4-Diamino-5-methylbenzolsulfonsäure (Kk18), 2,4-Diamino-1-hydroxybenzol (Kk54), 2,4-Diamino-1-methoxybenzol (Kk55), 2,4-Diamino-1-chlorobenzol (Kk56), 1,2,4-triaminobenzol (Kk57), 3-(Dimethylamino)-anilin (Kk58), 3-(Dimethylamino)-1-nitrobenzol (Kk59), 2-(N,N-diethylamino)-4-acetylamino-1-methoxybenzol (Kk60), 2-(N,N-diethylamino)-4-amino-1-methoxybenzol (Kk61), 2,4-Diamino-1-benzolsulfonamid (Kk62), 2-amino-4-acetylamino-1-methoxybenzol (Kk63) und 2-amino-4-acetylamino-1-chlorobenzol (Kk64).

Beispiele für Kupplungskomponenten der Formel Kk-B sind 2-Naphthol (Kk19), 2-Phenylaminonaphthalin (Kk20), 4-Methyl-1-naphthol (Kk21), 8-Methoxycarbonylamino-2-naphthol (Kk22), 8-Acetylamino-2-naphthol (Kk23), 8-Methylaminosulfonyl-2-naphthol (Kk24), 8-Dimethylaminosulfonylamino-2-naphthol (Kk25), 6-[(4-Methylphenyl)sulfonyl]amino-4-hydroxynaphthalin-2-sulfonsäure (Kk26), 8-Phenyl-aminonaphthalin-1-sulfonsäure (Kk27), 6-Amino-4-hydroxynaphthalin-2-sulfonsäure (DK42), 4-Amino-5-hydroxynaphthalin-1-sulfonsäure (DK43), 4-Amino-5-hydroxynaphthalin-2,7-disulfonsäure (DK44), 4-Amino-5-hydroxynaphthalin-1,7-disulfonsäure (DK45), 8-Aminonaphthalin-2-sulfonsäure (DK46), 6-Aminonaphthalin-1-sulfonsäure (DK47), 4-Aminonaphthalin-2,7-disulfonsäure (DK48), 5-Aminonaphthalin-2-sulfonsäure (DK49), 7-Amino-4,8-dihydroxynaphthalin-2-sulfonsäure (DK50), 2-Amino-5-hydroxynaphthalin-1,7-disulfonsäure (DK51), 3-Amino-5-hydroxynaphthalin-2,7-disulfonsäure (DK52), 3-Amino-1,5-disulfonsäure (DK53), 7-Aminonaphthalin-1-sulfonsäure (DK54), 4-Aminonaphthalin-1-sulfonsäure (DK55), 5-Aminonaphthalin-1-sulfonsäure (DK56), 7-Aminonaphthalin-1,3,5-trisulfonsäure (DK57), 7-Amino-4-hydroxynaphthalin-2-sulfonsäure (DK59), 4-Hydroxynaphthalin-2,7-disulfonsäure (Kk28), 3-Hydroxynaphthalin-2,7-disulfonsäure (Kk29), 4-(Phenylcarbonyl)amino-5-hydroxynaphthalin-2,7-disulfonsäure (Kk30), 4,6-Dihydroxynaphthalin-2-sulfonsäure (Kk31), 4,5-Dihydroxynaphthalin-2,7-disulfonsäure (Kk32), 4-(Phenylcarbonyl)amino-5-hydroxynaphthalin-1-sulfonsäure (Kk33), 4-Hydroxynaphthalin-1-sulfonsäure (Kk34), 4,5-Dihydroxynaphthalin-1-sulfonsäure (Kk35), 7-Hydroxynaphthalin-1,3-disulfonsäure (Kk36), 8-Hydroxynaphthalin-1-sulfonsäure (Kk37), 4,6-Dihydroxy-7-hydroxycarbonylnaphthalin-2-sulfonsäure (Kk38) und 4-Acetylamino-5-hydroxynaphthalin-2,7-disulfonsäure (Kk39).

Beispiele für Kupplungskomponenten Kk-C sind 2,4-Dihydroxychinolin (Kk40) und Hydroxychinolin (Kk41).

Beispiele für Kupplungskomponenten Kk-D sind 3-Methyl-5-hydroxypyrazol (Kk42), 1-Phenyl-3-methyl-5-hydroxypyrazol (Kk43), 1-[4-(2-Hydroxysulfonyloxyethyl)-2-hydroxysulfonylphenyl]-3-methyl-5-hydroxypyrazol (Kk44), 1-[4-(2-Hydroxysulfonyloxyethyl)-2-hydroxysulfonylphenyl]-5-hydroxypyrazol-3-carbonsäure (Kk45), 1-[4-Hydroxysulfonylphenyl]-5-hydroxypyrazol-3-carbonsäure (Kk46) und 1-[6-Hydroxysulfonylnaphthalin-2-yl]-5-hydrox-3-methylypyrazol (Kk47), 1-[4-Hydroxysulfonylphenyl]- 3-methyl-5-hydroxypyrazol (Kk48).

Ein Beispiel für Kupplungskomponenten Kk-E ist 4,4'-Dihydroxydiphenylmethan-3,3'-dicarbonsäure (Kk49).

Ein Beispiel für eine Kupplungskomponente Kk-F ist 4,4'-Dihydroxydiphenylamin (Kk50).

Ein Beispiel für eine Kupplungskomponente Kk-G ist 2,6-Diamino-pyridin (Kk51).

Beispiele für Kupplungskomponenten Kk-H sind 1-Methyl-2-pyridon (Kk52) und 3-Cyano-4-methyl-6-hydroxy-1-ethylpyridon (Kk53).

Geeignete Reste Kk³ sind insbesondere einwertige von einem gegebenenfalls substituierten Benzol oder Naphthalin abgeleitete Reste, z.B. die von den Kupplungskomponenten Kk-A und Kk-B abgeleiteten einwertige Reste wie die von den Anilinverbindungen DK3, DK4, DK6, DK7, DK11, DK13, DK14, DK15, DK18, DK21 bis DK27, DK29, DK30, DK33, DK36, DK38, DK39, DK42 bis DK83, Kk1 bis Kk48 und Kk51 bis Kk64 abgeleiteten Reste.

Bei den Resten Tk¹ und Tk² handelt es sich um zweiwertige aromatische Reste, die sich von aromatischen Diaminen der Formeln Tk¹(NH₂)₂ bzw. Tk²(NH₂)₂ ableiten. Diese Diamine werden im Folgenden auch als Tetraazokomponente bezeichnet.

Geeignet Tetraazokomponente sind beispielsweise von Benzol abgeleitete Verbindungen der allgemeinen Formel Tk-A, von Diphenyl abgeleitete Verbindungen der Formel Tk-B, von Phenylbenzimidazol abgeleitete Verbindungen der Formel Tk-C, von Diphenylmethan abgeleitete Verbindungen der Formel Tk-D, von Diphenylamin abgeleitete Verbindungen der Formel Tk-E, von Phenylsulfonylbenzol abgeleiteten Verbindungen der Formel Tk-F, von Phenylaminosulfonylbenzol abgeleiteten Verbindungen der Formel Tk-G, von Stilben abgeleiteten Verbindungen der Formel Tk-H und von Phenylaminocarbonylbenzol abgeleiteten Verbindungen der Formel Tk-J:

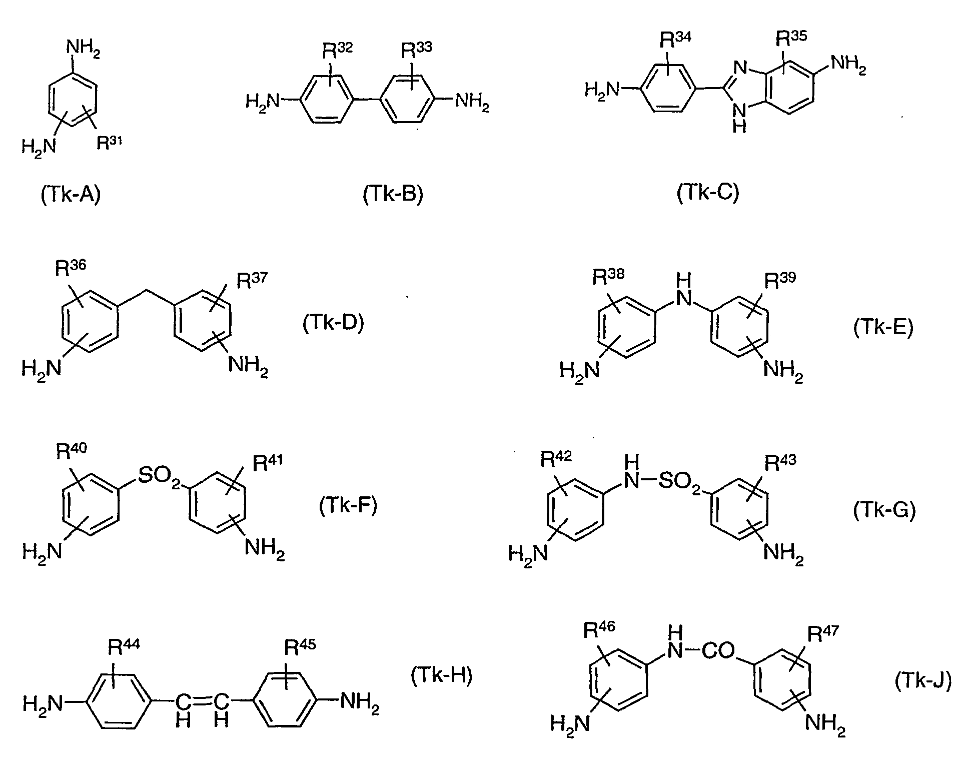

In Formel Tk-A steht R³¹ beispielsweise für Wasserstoff, C₁-C₄-Alkyl, C₁-C₄-Alkoxy, COOH oder SO₃H. Vorzugsweise sind die beiden NH₂-Gruppen in para-Position zueinander angeordnet. Beispiele für Verbindungen der Formel Tk-A sind 1,4-Diaminobenzol (Tk1), 1,4-Diamino-2-methoxybenzol (Tk2), 2,5-Diaminobenzoesäure (Tk3) und 2,5-Diaminobenzolsulfonsäure (Tk4).

In Formel Tk-B stehen R³² und R³³ unabhängig voneinander beispielsweise für Wasserstoff, OH, C₁-C₄-Alkyl, C₁-C₄-Alkoxy, COOH oder SO₃H. Vorzugsweise sind die beiden NH₂-Gruppen in der 4- und der 4'-Position angeordnet. Beispiele für Verbindungen der Formel. Tk-B sind 4,4'-Diaminobiphenyl (Tk5), 4,4'-Diamino-3,3'-dimethylbiphenyl Tk6), 4,4'-Diamino-3,3'-dimethoxybiphenyl (Tk7), 4,4'-Diamino-3,3'-dihydroxybiphenyl (Tk8), 4,4'-Diamino-3-hydroxysulfonylbiphenyl (Tk9), 4,4'-Diamino-3,3'-bis(hydroxysulfonyl)biphenyl (Tk10) und 4,4'-Diamino-3,3'-dicarboxybiphenyl (Tk11). In Formel Tk-C stehen R³⁴ und R³⁵ unabhängig voneinander beispielsweise für Wasserstoff, OH, C₁-C₄-Alkyl oder C₁-C₄-Alkoxy. Ein Beispiel für eine Verbindung der Formel Tk-C ist 6-Amino-2-[4-aminophenyl]benzimidazol (Tk12).

In Formel Tk-D stehen R³⁶ und R³⁷ unabhängig voneinander beispielsweise für Wasserstoff, OH, C₁-C₄-Alkyl, C₁-C₄-Alkoxy, COOH oder SO₃H. Vorzugsweise sind die beiden NH₂-Gruppen in der 4- und der 4'-Position angeordnet. Beispiele für Verbindungen Tk-D sind Bis(4-aminophenyl)methan (Tk13), Bis(4-amino-3-carboxyphenyl)methan (Tk14) und Bis(4-amino-3-methylphenyl)methan (Tk15).

In Formel Tk-E stehen R³⁸ und R³⁹ unabhängig voneinander beispielsweise für Wasserstoff, OH, C₁-C₄-Alkyl, C₁-C₄-Alkoxy, COOH oder SO₃H. Vorzugsweise sind die beiden NH₂-Gruppen in der 4- und der 4'-Position angeordnet. Ein Beispiel für eine Verbindung Tk-E ist (4-Aminophenyl)(4'-amino-2'-hydroxysulfonylphenyl)amin oder 4,4'-diaminodiphenylamine-2-sulfonsäure (Tk16).

In Formel Tk-F stehen R⁴⁰ und R⁴¹ unabhängig voneinander beispielsweise für Wasserstoff, OH, C₁-C₄-Alkyl, C₁-C₄-Alkoxy, COOH oder SO₃H. Vorzugsweise sind die beiden NH₂-Gruppen in der 4- und der 4'-Position angeordnet. Ein Beispiel für eine Verbindung Tk-F ist Bis-(4-aminophenyl)sulfon (Tk17).

In Formel Tk-G stehen R⁴² und R⁴³ unabhängig voneinander beispielsweise für Wasserstoff, OH, C₁-C₄-Alkyl, C₁-C₄-Alkoxy, COOH oder SO₃H. Vorzugsweise sind die beiden NH₂-Gruppen in der 4- und der 4'-Position angeordnet. Ein Beispiel für eine Verbindung Tk-G ist N-(4'-Aminophenyl)-4-aminobenzolsulfonamid (Tk18).

In Formel Tk-H stehen R⁴⁴ und R⁴⁵ unabhängig voneinander beispielsweise für Wasserstoff, C₁-C₄-Alkyl, COOH oder SO₃H. Vorzugsweise sind die beiden NH₂-Gruppen in der 4- und der 4'-Position angeordnet. Ein Beispiel für eine Verbindung Tk-H ist 1,2-Bis-(4-amino-2-hydroxysulfonylphenyl)ethen (Flavonsäure, Tk19).

In Formel Tk-J stehen R⁴⁶ und R⁴⁷ unabhängig voneinander beispielsweise für Wasserstoff, OH, C₁-C₄-Alkyl, C₁-C₄-Alkoxy, COOH oder SO₃H. Vorzugsweise sind die beiden NH₂-Gruppen in der 4- und der 4'-Position angeordnet. Ein Beispiel für eine Verbindung Tk-J ist N-(4'-Aminophenyl)-4-aminobenzoesäureamid (Tk20).

Bevorzugte Reste Napht¹ und Napht² gehorchen der allgemeinen Formel II: 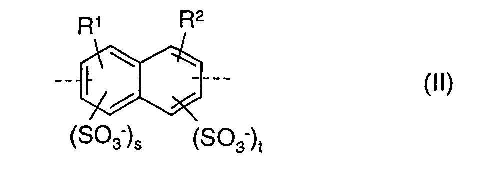 worin R¹ und R² unabhängig voneinander Wasserstoff, OH, NH₂ oder NHC(O)R³ bedeuten, worin R³ für Wasserstoff, C₁-C₄-Alkyl, Maleinyl oder Phenyl steht, und wenigstens einer der Reste R¹ und R² von Wasserstoffverschieden ist, ---- die Bindungen zu den Azogruppen darstellen, s und t für 0 oder 1 stehen. Vorzugsweise hat die Summe s + t den Wert 1 oder 2.

Beispiele für geeignete Reste Napht¹ bzw. Napht² umfassen die nachfolgend aufgeführten Reste II-1 bis II-14:
2-Hydroxysulfonyl-4-hydroxynaphthalin-3,6-diyl (II-1),
6-Amino-2-hydroxysulfonyl-4-hydroxynaphthalin-3,5-diyl (II-2),
1-Hydroxysulfonyl-5-hydroxynaphthalin-4,6-diyl (II-3),
4-Amino-1-hydroxysulfonyl-5-hydroxynaphthalin-3,6-diyl (II-4),
2-Hydroxysulfonyl-4-hydroxynaphthalin-3,7-diyl (II-5),
7-Amino-2-hydroxysulfonyl-4-hydroxynaphthalin-3,8-diyl (II-6),
5-Hydroxy-2,7-bishydroxysulfonylnaphthalin-4,6-diyl (II-7),
4-Amino-5-hydroxy-2,7-bishydroxysulfonylnaphthalin-3,6-diyl (II-8),
5-Hydroxy-1,7-bishydroxysulfonylnaphthalin-4,6-diyl (II-9),
4-Amino-5-hydroxy-1,7-bishydroxysulfonylnaphthalin-3,6-diyl (II-10),
2-Hydroxysulfonylnaphthalin-5,8-diyl (II-11),
2-Amino-5-hydroxy-1,7-bishydroxysulfonylnaphthalin-3,6-diyl (II-12),
5-Hydroxy-2,7-bishydroxysulfonylnaphthalin-3,6-diyl (II-13),
3-Amino-5-hydroxy-2,7-bishydroxysulfonylnaphthalin-4,6-diyl (II-14),
2-Hydroxysulfonylnaphthalin-5,8-diyl (II-15) und
1-Hydroxysulfonylnaphthalin-5,8-diyl (II-16).

Bei den Resten P und R' handelt es sich um zweiwertige, von Benzol oder Naphthalin abgeleitete Reste, z.B. von den Kupplungskomponenten der Formeln Kk-A und Kk-B abgeleitete Reste sowie von den vorgenannten Diazokomponenten abgeleitete Reste, die noch eine freie Position aufweisen, auf die eine Diazoniumverbindung gekuppelt werden kann. Beispiele hierfür sind die Anilinverbindungen DK3, DK4, DK6, DK7, DK11, DK13, DK14, DK15, DK18, DK21 bis DK27, DK29, DK30, DK33, DK36, DK38, DK39 und DK60 bis DK83 sowie die Naphthylamine DK42 bis DK59.

Unter den erfindungsgemäß eingesetzten Farbstoffen F sind Farbstoffe der Formeln II, III, IV und VI bevorzugt, worin wenigstens eine der Gruppen Tk¹ und/oder Tk² für eine Gruppe der Formel VIII 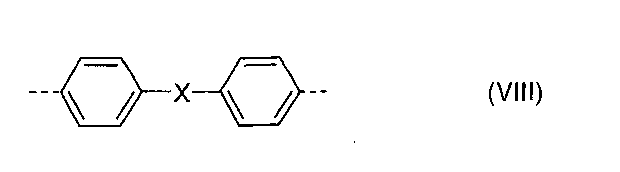 steht, worin ---- die Bindungen zu den Azogruppen darstellen und X für eine chemische Bindung oder einen bivalenten Rest, ausgewählt unter -CH=CH-, -SO₂-NR-, -SO₂-O-, -NR-, -SO₂-, -SO-NR- und -CO-NR- steht, worin R für Wasserstoff oder C₁-C₄-Alkyl bedeutet. Hierunter sind solche Gruppen VIII bevorzugt, worin X für -SO₂-NR- und besonders bevorzugt für -SO₂-NH- steht.

Unter den Farbstoffen der Formeln I, II, III und IV sind solche Farbstoffe besonders bevorzugt, worin Napht¹ und/oder Napht² für einen bivalenten Rest der oben definierten allgemeinen Formel II stehen und insbesondere die dort aufgeführten konkreten Bedeutungen besitzen.

Unter den Farbstoffen der allgemeinen Formeln I bis VII sind solche Farbstoffe besonders bevorzugt, worin einer oder beide der Reste Dk¹ und Dk² oder A für einen der zuvor definierten Reste A1 bis A6 stehen.

Unter den Farbstoffen F sind insbesondere die Farbstoffe der allgemeinen Formel II und besonders die Farbstoffe der allgemeinen Formel IIa bevorzugt: 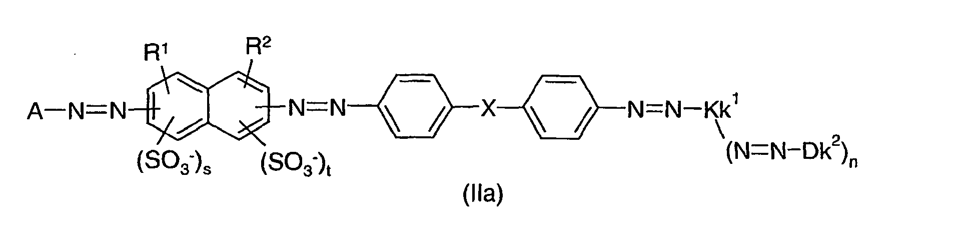 worin n, A, Dk² und Kk¹ die zuvor angegebenen Bedeutungen und insbesondere die als bevorzugt angegebenen Bedeutungen haben, R¹ und R² unabhängig voneinander Wasserstoff, OH, NH₂ oder NHC(O)R³ bedeuten, worin R³ für Wasserstoff, C₁-C₄-Alkyl, Maleinyl oder Phenyl steht, und wenigstens einer der Reste R¹ und R² von Wasserstoff verschieden ist, s und t für 0 oder 1 stehen und die Summe s + t den Wert 1 oder 2 hat, und X für eine chemische Bindung oder einen bivalenten Rest, ausgewählt unter -CH=CH-, -SO₂-NR-, -SO₂-O-, -NR-, -SO₂-, -SO-NR- und -CO-NR- steht, worin R für Wasserstoff oder C₁-C₄-Alkyl bedeutet. Hierunter sind solche Farbostffe IIa bevorzugt, worin wenigstens einer der Reste R¹ und R² und insbesondere beide Reste R¹ und R² von Wasserstoff verschieden sind. Insbesondere gilt s = t = 1. X steht insbesondere für -SO₂-NR- und besonders bevorzugt für -SO₂-NH-.

Die Herstellung der erfindungsgemäß zur Anwendung kommenden Azofarbstoffe der allgemeinen Formeln I bis VII und ihrer Metallkomplexe erfolgt in an sich bekannter Weise durch eine mehrstufige Diazotierung/Kupplungs-Sequenz, wobei der Farbstoff durch sukzessives Diazotieren/Kuppeln aufgebaut werden, d.h. die Verknüpfung der einzelnen Bausteine Diazogruppen oder NH-Gruppen erfolgt sukzessive, oder durch eine konvergente Synthese, d.h. Molekülgruppen des Farbstoffs, die bereits Azogruppen oder NH-Gruppen aufweisen, werden generiert und anschließend über eine weitere Diazotierung/Kupplung mit einem weiteren Molekülteil des Farbstoffs, das ebenfalls bereits eine oder mehrere Azogruppen aufweist, verknüpft, gegebenenfalls vermittels einer Kupplungs- oder Tetraazokomponente.

Beim sukzessiven Diazotieren/Kuppeln wird beispielsweise zunächst die Diazoniumkomponenten Dk¹ bzw. Dk² diazotiert und auf eine Gruppe Napht¹, bzw. Napht², Kk¹ oder Kk² oder auf eine Gruppe P oder R' gekuppelt, anschließend wird das Reaktionsprodukt erneut diazotiert, und auf einen weiteren Kupplungspartner gekuppelt und dieser Vorgang gegebenenfalls wiederholt, bis der Farbstoff aufgebaut ist. Alternativ kann bei der sukzessiven Synthese auch das Reaktionsprodukt der ersten Kupplung mit einer oder mehreren Diazoniumverbindungen nacheinander umgesetzt werden.

Beim sukzessiven Kuppeln kann man auch zunächst eine Tetrazokomponente Tk¹(NH₂)₂ bzw. Tk²(NH₂)₂ in das entsprechende Tetrazoniumsalz überführen und nacheinander mit Kupplungspartnern Kk¹, P, Napht¹, Napht² etc. umsetzen und anschließend weitere Diazotierungs/Kupplunsgreaktionen durchführen.

Derartige Verfahren sind aus dem Stand der Technik für anionische Azofarbstoffe bekannt und können analog auf die Herstellung der Farbstoffe I bis VII übertragen werden.

Die Diazotierung und die Kupplung der dabei erhaltenen Diazonium- bzw. der Tetrazoniumverbindung erfolgt üblicherweise in einem wässrigen Reaktionsmedium unter pH Kontrolle in an sich bekannter Weise.

Sofern die umgesetzten Molekülbauteile bereits eine Gruppe A aufweisen, die einen Rest B der Formel CH₂CH₂-Q trägt, dann wird der pH-Wert der Reaktionsmischung vorzugsweise einen Wert von pH 8 nicht übersteigen, da anderenfalls eine Abspaltung der Gruppe Q unter Ausbildung einer Vinylgruppe erfolgt.

Bei Kupplungen Diazonium-Komponente oder einer Tetrazonium-Komponente auf eine Naphthalin-Verbindung der Formeln II bzw. Kk-B, die sowohl eine OH-Gruppe als auch eine Aminogruppe trägt und wenigstens zwei mögliche Kupplungsstellen aufweist, ist zu berücksichtigen, dass pH-Werten von höchstens 3 die erste Kupplung regioselektiv in ortho-Position zur Aminogruppe erfolgt, wohingegen bei pH-Werten von pH ≥ 6, vorzugsweise pH ≥ 8 eine regioselektive Kupplung in der ortho-Position der OH-Gruppe erfolgt.

Die für die Diazotierung/Kupplung bzw. die Umsetzung mit Triazinen erforderlichen Reaktionstemperaturen liegen in der Regel im Bereich von 0°C bis 50°C und insbesondere im Bereich von 0 bis 30°C. Die erforderlichen Reaktionszeiten liegen üblicherweise im Bereich von 5 min bis 2 h und insbesondere im Bereich von 20 min. bis 1 h.

Die Umsetzungen erfolgen üblicherweise stöchiometrisch, d.h. die Reaktionspartner werden in der gewünschten Stöchiometrie miteinander umgesetzt. Die einzelnen Reaktanden können jedoch sowohl im Überschuss als auch im Unterschuss, bezogen auf die gewünschte Stöchiometrie eingesetzt werden. Die Abweichung von der gewünschten Stöchiometrie wird in der Regel nicht mehr als 20 mol-% und insbesondere nicht mehr als 10 mol-% betragen. Mit anderen Worten, bei der Umsetzung einer Diazoniumkomponente mit einem Kupplungspartner wird das Molverhältnis der beiden Komponenten im Bereich von 1:1,2 bis 1,2:1 und insbesondere im Bereich von 1,1:1 bis 1:1,1 liegen. Bei der Umsetzung einer Tetrazoniumverbindung mit 2 Moläquivalenten eines Kupplungspartners wird man diesen dementsprechend in einer Menge von 1,6 bis 2,4 mol und insbesondere in einer Menge von 1,8 bis 2,2 mol pro mol Tetrazoniumverbindung einsetzen.

Im Anschluss an die Diazotierungs/Kupplungssequenz kann man zur Herstellung der Übergangsmetallkomplexe das gewünschte Übergangsmetallsalz in Form eines geeigneten, vorzugsweise wasserlöslichen Salzes in der stöchiometrisch gewünschten Menge geben und gegebenenfalls auf die zur Komplexierung erforderliche Temperatur, z.B. auf Temperaturen im Bereich von 40 bis 100°C erwärmen.

Die Gewinnung des Farbstoffs aus der wässrigen Reaktionsmischung erfolgt in an sich üblicher Weise, beispielsweise durch Eindampfen, insbesondere durch Sprühtrocknung der wässrigen Reaktionsmischung, durch Aussalzen des Farbstoffs und Trocknen des Pressguts. Zur Herstellung einer Flüssigmarke bzw. einer Flüssigformulierung der Farbstoffs kann der Farbstoffpresskuchen, bzw. das beim Eindampfen oder Sprühtrocknen erhaltene Farbstoffpulver aufgelöst werden. Es ist auch möglich, direkt aus der Reaktionslösung eine Flüssigformulierung des Farbstoffs herzustellen. Gegebenenfalls ist es dann für eine ausreichend hohe Farbstoffkonzentration und für die Stabiliät der Flüssigeinstellung erforderlich, eine Dia- und/oder Ultrafiltrationsproezß durchzuführen, um die bei der Herstellung anfallenden anorganischen Salze abzureichern und die Lösung aufzukonzentrieren.

Das erfindungsgemäße Verfahren umfasst einen Färbeschritt bei einem pH-Wert von 8 bis 11. Hierzu wird das zu färbende Leder in einer wässriger Flotte, die einen pH-Wert von 8,0 bis 11 aufweist und die wenigstens einen Farbstoff F der oben bezeichneten Art enthält, behandelt. Der pH der Flotte wird einen Wert von pH 11 und vorzugsweise pH 10,5 nicht überschreiten. Insbesondere liegt der pH-Wert der Flotte im Bereich von 8,5 bis 10. Durch den alkalischen pH-Wert wird eine Fixierung des Farbstoffs auf dem Leder erreicht, da unter diesen Bedingungen die Gruppe A mit den Aminogruppen des Leders unter Ausbildung einer kovalenten Bindung reagiert.

Um den für die Fixierung alkalischen pH-Wert zu erhalten, können beliebige Alkalien und Puffersysteme eingesetzt werden. Beispielhaft zu nennen sind Alkalimetallcarbonate und -hydrogencarbonate wie Natriumcarbonat, Kaliumcarbonat und Natriumhydrogencarbonat, weiterhin Alkalimetallhydroxide wie Natronlauge, Natriummetasilikat, Pyrophosphate wie Natrium- oder Kaliumpyrophosphat, Trikaliumphosphat, Trinatriumphosphat, Borax/Natronlauge-Puffer und Phosphat-Puffer.

Die zur Fixierung des Farbstoffs erforderlichen Temperaturen betragen vorteilhafterweise nicht mehr als 60°C, insbesondere nicht mehr als 50°C, und besonders bevorzugt nicht mehr als 40°C, so dass ein schonendes Färben des Leders möglich ist. In der Regel wird man die Färbung bei Temperaturen von wenigstens 10°C, vorzugsweise wenigstens 20°C, insbesondere wengistens 30°C durchführen, um eine hinreichende Reaktionsgeschwindigkeit zu erzielen und somit den Färbevorgang zu beschleunigen. Grundsätzlich sind jedoch auch niedrigere Temperaturen möglich. Für organisch gegerbte Leder ist der bevorzugte Temperaturbereich 15 bis 50°C und besonders 30 bis 40°C. Für mit Metalloxiden gegerbte Leder ist ein Temperaturbereich von 15 bis 60 °C und besonders 30 bis 50°C bevorzugt.

Für eine ausreichende Fixierung sind in der Regel abhängig vom pH-Wert und der Temperatur Behandlungsdauern von 0,5 h bis 4 h erforderlich. Die erforderlichen Behandlungsdauern kann der Fachmann anhand einfacher Routineexperimente für den jeweils eingesetzten Farbstoff ermitteln. Insbesondere bei stark alkalischen pH-Werten im Bereich von 9,5 bis 11, insbesondere bei 9,5 bis 10,5 beträgt die Färbedauer vorzugsweise nicht mehr als 2 h, z.B. 0,5 bis 2 h.

Bei der Färbung können auch Salze, beispielsweise Glaubersalz zugesetzt werden. Ein messbarer Einfluss auf das Färbeergebnis wird hierdurch nicht erzielt.

Neben den erfindungsgemäß zur Anwendung kommenden Farbstoffen F kann die Flotte auch konventionelle Säure- oder Direktfarbstoffe enthalten. Ihr Anteil wird jedoch vorzugsweise nicht mehr als 10 Gew.-%, insbesondere nicht mehr als 5 Gew.-%, bezogen auf die Gesamtmenge an Farbstoffen in der Flotte betragen.

Üblicherweise wird der Farbstoff je nach gewünschter Farbtiefe in einer Menge von wenigstens 0,2 Gew.-%, häufig wenigstens 0,5 Gew.-% und insbesondere 1 Gew.-%, bezogen auf das Falzgewicht des eingesetzten Leders bzw. Halbfertigprodukts, eingesetzt. In der Regel wird man den Farbstoff in einer Menge bis 20 Gew.-%, bezogen auf das Falzgewicht einsetzen, wobei auch größere Farbstoffmengen eingesetzt werden können. Zur Erreichung mittlerer bis hoher Farbtiefen wird man den Farbstoff F in Abhängigkeit seines molaren Extinktionskoeffizienten und seines Molekulargewichts in der Regel in einer Menge von 2 bis 20 Gew.-%, häufig 4 bis 20 Gew.-% und insbesondere in einer Menge von 6 bis 20 Gew.-%, bezogen auf das Falzgewicht des Leders bzw. Halbfertigprodukts, einsetzen.

Die wässrige Flotte kann übliche anionische Färbehilfsmittel, nichtionische oberflächenaktive Substanzen sowie für die Nachgerbung üblicherweise eingesetzte Gerbstoffe, z.B. polymere Nachgerbstoffe, synthetische Nachgerbstoffe, pflanzliche Gerbstoffe (Vegetabilgerbstoffe) und Fettungsmittel (Fettlicker) enthalten.

Die Färbung kann sowohl einstufig als auch in 2 Stufen durchgeführt werden. Bei einer zweistufigen Färbung wird man zunächst in einer ersten Stufe das Leder mit der farbstoffhaltigen Flotte bei pH-Werten unterhalb 7, z.B. pH 3 bis 6,5 und vorzugsweise bei pH-Werten im Bereich von 4 bis 6,5 behandeln. Dieser Schritt dient zur gleichmäßigen Verteilung des Farbstoffs im Lederquerschnitt. Anschließend wird man in der zweiten Stufe bei pH-Werten von wenigstens 8, z.B. 8 bis 11, insbesondere 8,5 bis 10,5 und speziell 8,5 bis 10 den Farbstoff in der oben beschriebenen Weise fixieren. Es ist auch möglich, die Färbung in einem Einstufenverfahren durchzuführen ohne eine Verteilungsstufe der Fixierstufe vorzuschalten.

Gegebenenfalls wird man im Anschluss an die Färbung einen Waschprozess durchführen, um nicht chemischen gebundenen Farbstoff sowie im Farbstoff enthaltene Verunreinigungen, beispielsweise Farbstoffe, die keine Gruppe A enthalten, zu entfernen. Dieser Waschprozess ist jedoch nicht zwingend erforderlich, da in vielen Fällen bereits eine quantitative oder nahezu quantitative Fixierung des Farbstoffs vorliegt. Sofern man einen Waschprozess nachschaltet, wird man nach dem Färben das Leder 1 oder mehrere Male, z.B. 1 bis 6 mal und insbesondere 1 bis 4 mal mit Wasser waschen. Die Menge an Wasser wird in der Regel nicht mehr als 300 Gew.-%, bezogen auf das Falzgewicht des Halbfertigprodukts, z.B. 100 bis 300 Gew.-% betragen. Die Waschdauer des einzelnen Waschschritts wird üblicherweise 5 bis 60 min. und insbesondere 10 bis 30 min. betragen.

Die Lederfärbung inklusive Nachgerbung, Fettung und Nachbehandlung erfolgt im übrigen in an sich bekannter Weise, beispielsweise durch Färben im Walkfass oder in der Haspel. Derartige Verfahren sind ausführlich im Stand der Technik beschrieben, z.B. in: "Bibliothek des Leders", Band 3 (Gerbmittel, Gerbung und Nachgerbung) [1985]_{,} Band 4 (Entfetten, Fetten und Hydrophobieren bei der Lederherstellung) [1987] & Band 5 (Das Färben von Leder) [1987] Umschau Verlag; "Leather Technicians Handbook", 1983, von J. H. Sharphouse, publiziert von Leather Producers Association; und "Fundamentals of Leather Manufacturing", 1993, von E. Heidenmann, publiziert von Eduard Roether KG.

Die Färbung wird üblicherweise nach der Vorgerbung, d.h. vor, während oder nach der Nachgerbung durchgeführt. Die Färbung kann sowohl im gleichen Bad wie die Nachgerbung als auch in einem separaten Bad erfolgen. Vorzugsweise erfolgt die Färbung vor der Nachgerbung. Vorzugsweise erfolgt nach der Färbung und vor der Nachgerbung und Fettung einer oder mehrere der oben beschriebenen Waschschritte.

Dem Färbe- und Nachgerbvorgang schließt sich in der Regel ein Fettungsvorgang an, um die gewünschten haptischen Eigenschaften des Leders einzustellen. Nachgerbung und Fettung können jedoch auch in einem Prozessschritt durchgeführt werden. Der Verfahrensschritt Fettung kann an beliebiger Stelle des Wetendprozesses durchgeführt werden, bevorzugt ist die Durchführung am Ende des Wetendprozesses.

In der Regel wird man sowohl die Fettung als auch die Nachgerbung am Ende des Prozesses durch Absäuern fixieren, d.h. nach Färbung und gegebenenfalls Nachgerbung und Fettung folgt ein abschließendes Absäuern. Üblicherweise wird man zum Absäuern den pH Wert des wässrigen Behandlungsbads durch Zugabe einer Säure, insbesondere Ameisensäure, auf einen Wert unterhalb 3,7 einstellen.

Mit dem erfindungsgemäßen Verfahren können grundsätzlich alle Ledertypen, d.h. nicht nachgegerbte Halbfertigprodukte wie Metalloxid-gegerbtes Leder (wet-blue bei Chromoxid-Gerbung und wet-white bei Aluminiumoxid-Gerbung) und organisch, z.B. Aldehyd-gegerbtes Leder (wet-white) bwz. pflanzlich gegerbtes Leder, sowie nachgegerbte Halbfertigprodukte wie Borke oder Crustleder gefärbt werden.

Das nach dem erfindungsgemäßigen Verfahren gefärbte Leder zeichnet sich auch bei sehr hoher Farbtiefe durch ein exzellentes Echtheitsniveau aus. Besonders herausragend sind Reibechtheiten und insbesondere Wasch-, Schweiß- und Migrationsechtheiten, was bei konventionell gefärbten Ledern nicht oder nur in sehr viel geringerem Ausmaß erreicht werden kann. Die nach dem erfindungsgemäßen Verfahren gefärbten Leder zeigen in Migrationsechtheitstests selbst bei hoher Feuchtigkeit und hohen Temperaturen, d.h. oberhalb 50° C, z.B. 60 bis 100°C ist keine oder nahezu keine Anschmutzung des Kontaktmaterials.

Qualitative und quantitative Bestimmung über UV/VIS Spektroskopie und HPLC zeigen, dass mit den erfindungsgemäßen Farbstoffen Fixiergrade zwischen 85 und 100% und häufig oberhalb 90 % erreicht werden.

Die folgenden Beispiele sollen die Erfindung näher erläutern, ohne sie einzuschränken:

### Herstellungsbeispiele:

### Beispiel 1a:

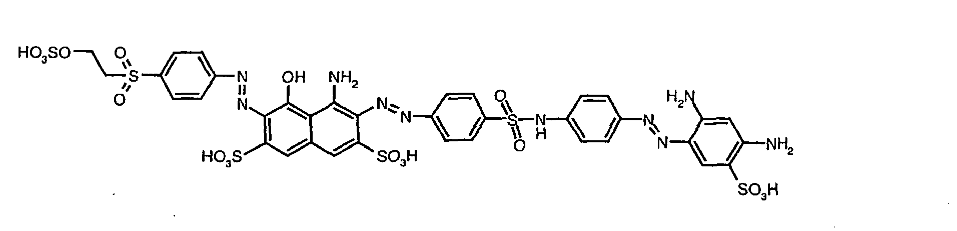

### Methode A

1) 1 mol 4,4-Diaminodiphenylsulfamid wurde mit überschüssigem Natriumnitrit und Salzsäure bei pH<1 und einer Temperatur von 0-5°C tetrazotiert. 1 mol H-Säure wurde in 25 gew.-%iger Natronlauge gelöst und zu der Lösung des tetrazotierten 4,4-Diaminodiphenylsulfamid getropft. Der pH-Wert wurde hierbei durch Zugabe von Salzsäure unter 3 gehalten.
2) 1 mol Parabase (4-(2-Hydroxysulfonylethyl)sulfonylanilin) wurde in Eiswasser suspendiert und mit überschüssigem Natriumnitrit und Salzsäure bei pH<1 und einer Temperatur von 0-5°C diazotiert. Anschließend wurde das Reaktionsgemisch zu der in Schritt 1) erhaltenen Reaktionsmischung gegeben. Der pH-Wert wurde durch Zugabe von 10 gew.-%iger Natronlauge zwischen 3 und 8 gehalten.
3) 1 mol Metaminsäure wurde zu der in Schritt 2) erhaltenen Reaktionsmischung gegeben und der pH-Wert wurde durch Zugabe von 10 gew.-%iger Natronlauge zwischen 3 und 8 gehalten. Nach beendeter Umsetzung wurde der Farbstoff durch Zugabe von NaCl ausgefällt und abgesaugt.

### Methode B:

1) 1 mol 4,4-Diaminodiphenylsulfamid wurde mit überschüssigem Natriumnitrit und Salzsäure bei pH<1 und einer Temperatur von 0-5°C tetrazotiert. 1 mol H-Säure wurde in 25 gew.-%iger Natronlauge gelöst und zu der Reaktionsmischung des tetrazotierten 4,4-Diaminodiphenylsulfamids getropft. Der pH-Wert wurde unter 3 gehalten.
2) 1 mol Metaminsäure wurde zu der in Schritt 1) erhaltenen Reaktionsmischung gegeben und der pH-Wert wurde durch Zugabe von 10 gew.-%iger Natronlauge zwischen 3 und 8 gehalten.
3) 1 mol Parabase wurde in Eiswasser suspendiert und mit überschüssigem Natriumnitrit und Salzsäure bei pH<1 und einer Temperatur von 0-5°C diazotiert. Anschließend wurde die Reaktionsmischung zu der in Schritt 2) erhaltenen Reaktionsmischung gegeben. Der pH-Wert wurde durch Zugabe von 10 gew.-%iger Natronlauge zwischen 3 und 8 gehalten. Nach beendeter Umsetzung wurde der Farbstoff durch Zugabe von NaCl ausgefällt und abgesaugt.

In zu Beispiel 1a analoger Weise können die Farbstoffe der allgemeinen Formel A-N=N-Napht¹-N=N-Tk¹-N=N-Kk¹ erhalten werden (= Farbstoffe der allgemeinen Formel II mit Dk¹ = A und n=0), worin Kk¹ für einen von den Kupplungskomponenten Kk1 bis Kk64, DK3, DK4, DK6, DK7, DK11, DK13, DK14, DK15, DK18, DK21 bis DK27, DK29, DK30, DK33, DK36, DK38, DK39 oder DK42 bis DK83 abgeleiteten Rest steht, Napht¹ für einen der bivalenten Reste II-2, II-4, II-6, II-8, II-10, II-12 und II-14 steht, Tk¹ für einen von einer Tetrazokomponenten Tk1 bis Tk20 abgeleiteten bivalenten Rest steht und A einen der Reste A1 bis A6 bedeutet. Die Kupplung des Restes A-N=N-erfolgt in ortho-Position zur Hydroxylgruppe in Napht¹. Beispiele hierfür sind in der Tabelle 1 zusammengestellt.

**Tabelle 1**

| Beispiel Nr. | A | Napht¹ | Tk | Kk |
|---|---|---|---|---|
| 1a | A1 | DK44 | Tk18 | Kk15 |
| 1b | A1 | DK44 | Tk18 | Kk5 |
| 1c | A1 | DK44 | Tk18 | Kk2 |
| 1d | A1 | DK44 | Tk18 | Kk3 |
| 1e | A1 | DK44 | Tk18 | Kk6 |
| 1f | A1 | DK44 | Tk18 | Kk1 |
| 1g | A1 | DK44 | Tk18 | Kk4 |
| 1h | A1 | DK44 | Tk18 | Kk7 |
| 1i | A1 | DK44 | Tk18 | Kk9 |
| 1j | A1 | DK44 | Tk18 | Kk10 |
| 1k | A1 | DK44 | Tk18 | Kk14 |
| 1l | A1 | DK44 | Tk18 | Kk16 |
| 1m | A1 | DK44 | Tk18 | Kk26 |
| 1n | A1 | DK44 | Tk18 | Kk27 |
| 1o | A1 | DK44 | Tk18 | Kk40 |
| 1p | A1 | DK44 | Tk18 | Kk46 |
| 1q | A1 | DK44 | Tk18 | Kk48 |
| 1r | A1 | DK44 | Tk18 | Dk4 |
| 1s | A1 | DK44 | Tk18 | Dk11 |
| 1t | A1 | DK44 | Tk18 | Dk18 |
| 1u | A1 | DK44 | Tk18 | Dk29 |
| 1v | A1 | DK44 | Tk18 | Dk30 |
| 1z | A1 | DK44 | Tk18 | Dk39 |
| 1aa | A1 | DK44 | Tk16 | Kk5 |
| 1ab | A1 | DK44 | Tk16 | Kk3 |
| 1ac | A1 | DK44 | Tk16 | Kk4 |
| 1ad | A1 | DK44 | Tk16 | Dk4 |
| 1ae | A1 | DK44 | Tk19 | Kk5 |
| 1af | A1 | DK45 | Tk18 | Kk5 |
| 1ag | A4 | DK44 | Tk18 | Kk5 |
| 1ah | A2 | DK44 | Tk18 | Kk15 |
| 1ai | A3 | DK44 | Tk18 | Kk15 |
| 1aj | A4 | DK45 | Tk18 | Kk10 |
| 1ak | A6 | DK45 | Tk18 | Kk14 |
| 1al | A5 | DK45 | Tk18 | Kk16 |
| 1am | A4 | DK45 | Tk18 | Kk26 |
| 1an | A1 | DK44 | Tk18 | Kk11 |
| 1ao | A1 | DK44 | Tk18 | Kk51 |
| 1ap | A1 | DK44 | Tk18 | Kk52 |
| 1aq | A1 | DK44 | Tk18 | Kk53 |
| 1ar | A1 | DK44 | Tk18 | Kk54 |
| 1as | A1 | DK44 | Tk18 | Kk55 |
| 1at | A1 | DK44 | Tk18 | Kk56 |
| 1au | A1 | DK44 | Tk18 | Kk57 |
| 1av | A1 | DK44 | Tk18 | Kk58 |
| 1aw | A1 | DK44 | Tk18 | Kk59 |
| 1ax | A1 | DK44 | Tk18 | Kk60 |
| 1ay | A1 | DK44 | Tk18 | Kk61 |
| 1az | A1 | DK44 | Tk18 | Kk62 |
| 1ba | A1 | DK44 | Tk18 | Kk63 |
| 1bb | A1 | DK44 | Tk18 | Kk64 |
| 1bc | A1 | DK44 | Tk18 | DK66 |
| 1bd | A1 | DK45 | Tk18 | Kk1 |
| 1be | A1 | DK45 | Tk18 | Kk2 |
| 1bf | A1 | DK45 | Tk18 | Kk3 |
| 1bg | A1 | DK45 | Tk18 | Kk4 |
| 1bh | A1 | DK45 | Tk18 | Kk6 |
| 1bi | A1 | DK45 | Tk18 | Kk7 |
| 1bj | A1 | DK45 | Tk18 | Kk10 |
| 1bk | A1 | DK45 | Tk18 | Kk11 |
| 1bl | A1 | DK45 | Tk18 | Kk14 |
| 1bm | A1 | DK45 | Tk18 | Kk15 |
| 1bn | A1 | DK45 | Tk18 | Kk16 |
| 1bo | A1 | DK45 | Tk18 | Kk51 |
| 1bp | A1 | DK45 | Tk18 | Kk53 |
| 1bq | A1 | DK45 | Tk18 | Kk54 |
| 1br | A1 | DK45 | Tk18 | Kk55 |
| 1bs | A1 | DK45 | Tk18 | Kk56 |
| 1bt | A1 | DK45 | Tk18 | Kr61 |
| 1bu | A1 | DK45 | Tk18 | Kk62 |
| 1bv | A1 | DK45 | Tk18 | Kk63 |
| 1bw | A1 | DK45 | Tk18 | Kk64 |
| 1bx | A1 | DK45 | Tk18 | DK66 |
| 1by | A1 | DK44 | Tk16 | Kk10 |
| 1bz | A1 | DK44 | Tk16 | Kk11 |
| 1ca | A1 | DK44 | Tk16 | Kk14 |
| 1cb | A1 | DK44 | Tk16 | Kk15 |
| 1cc | A1 | DK44 | Tk16 | Kk16 |
| 1cd | A1 | DK44 | Tk16 | Kk51 |
| 1ce | A1 | DK44 | Tk16 | Kk53 |
| 1cf | A1 | DK44 | Tk16 | Kk54 |
| 1cg | A1 | DK44 | Tk16 | Kk55 |
| 1ch | A1 | DK44 | Tk16 | Kk56 |
| 1ci | A1 | DK44 | Tk16 | Kk61 |
| 1cj | A1 | DK44 | Tk16 | Kk62 |
| 1ck | A1 | DK44 | Tk16 | Kk63 |
| 1cl | A1 | DK44 | Tk16 | Kk64 |
| 1cm | A1 | DK44 | Tk16 | DK66 |
| 1cn | A1 | DK44 | Tk19 | Kk2 |
| 1co | A1 | DK44 | Tk19 | Kk3 |
| 1cp | A1 | DK44 | Tk19 | Kk10 |
| 1cq | A1 | DK44 | Tk19 | Kk11 |
| 1cr | A1 | DK44 | Tk19 | Kk14 |
| 1cs | A1 | DK44 | Tk19 | Kk15 |
| 1ct | A1 | DK44 | Tk19 | Kk16 |
| 1cu | A1 | DK44 | Tk19 | Kk51 |
| 1cv | A1 | DK44 | Tk19 | Kk53 |
| 1cw | A1 | DK44 | Tk19 | Kk54 |
| 1cx | A1 | DK44 | Bk19 | Kk55 |
| 1cy | A1 | DK44 | Tk19 | Kk56 |
| 1cz | A1 | DK44 | Tk19 | Kk61 |
| 1da | A1 | DK44 | Tk19 | Kk62 |
| 1db | A1 | DK44 | Tk19 | Kk63 |
| 1dc | A1 | DK44 | Tk19 | Kk64 |
| 1dd | A1 | DK44 | Tk19 | DK66 |
| 1de | A1 | DK44 | Tk20 | Kk2 |
| 1df | A1 | DK44 | Tk20 | Kk3 |
| 1dg | A1 | DK44 | Tk20 | Kk5 |
| 1dh | A1 | DK44 | Tk20 | Kk10 |
| 1di | A1 | DK44 | Tk20 | Kk11 |
| 1dj | A1 | DK44 | Tk20 | Kk14 |
| 1dk | A1 | DK44 | Tk20 | Kk15 |
| 1dl | A1 | DK44 | Tk20 | Kk16 |
| 1dm | A1 | DK44 | Tk20 | Kk51 |
| 1dn | A1 | DK44 | Tk20 | Kk53 |
| 1do | A1 | DK44 | Tk20 | Kk54 |
| 1dp | A1 | DK44 | Tk20 | Kk55 |
| 1dq | A1 | DK44 | Tk20 | Kk56 |
| 1dr | A1 | DK44 | Tk20 | Kk61 |
| 1ds | A1 | DK44 | Tk20 | Kk62 |
| 1dt | A1 | DK44 | Tk20 | Kk63 |
| 1du | A1 | DK44 | Tk20 | Kk64 |
| 1dv | A1 | DK44 | Tk20 | DK66 |
| 1dw | A1 | DK45 | Tk16 | Kk2 |
| 1dx | A1 | DK45 | Tk16 | Kk3 |
| 1dy | A1 | DK45 | Tk16 | Kk5 |
| 1dz | A1 | DK45 | Tk16 | Kk10 |
| 1ea | A1 | DK45 | Tk16 | Kk11 |
| 1eb | A1 | DK45 | Tk16 | Kk14 |
| 1ec | A1 | DK45 | Tk16 | Kk15 |
| 1ed | A1 | DK45 | Tk16 | Kk16 |
| 1ee | A1 | DK45 | Tk16 | Kk51 |
| 1ef | A1 | DK45 | Tk16 | Kk53 |
| 1eg | A1 | DK45 | Tk16 | Kk54 |
| 1eh | A1 | DK45 | Tk16 | Kk55 |
| 1ei | A1 | DK45 | Tk16 | Kk56 |
| 1ej | A1 | DK45 | Tk16 | Kk61 |
| 1ek | A1 | DK45 | Tk16 | Kk62 |
| 1el | A1 | DK45 | Tk16 | Kk63 |
| 1em | A1 | DK45 | Tk16 | Kk64 |
| 1en | A1 | DK45 | Tk16 | DK66 |
| 1eo | A1 | DK45 | Tk19 | Kk2 |
| 1ep | A1 | DK45 | Tk19 | Kk3 |
| 1eq | A1 | DK45 | Tk19 | Kk5 |
| 1er | A1 | DK45 | Tk19 | Kk10 |
| 1es | A1 | DK45 | Tk19 | Kk11 |
| 1et | A1 | DK45 | Tk19 | Kk14 |
| 1eu | A1 | DK45 | Tk19 | Kk15 |
| 1ev | A1 | DK45 | Tk19 | Kk16 |
| 1ew | A1 | DK45 | Tk19 | Kk51 |
| 1ex | A1 | DK45 | Tk19 | Kk53 |
| 1ey | A1 | DK45 | Tk19 | Kk54 |
| 1ez | A1 | DK45 | Tk19 | Kk55 |
| 1fa | A1 | DK45 | Tk19 | Kk56 |
| 1fb | A1 | DK45 | Tk19 | Kk61 |
| 1fc | A1 | DK45 | Tk19 | Kk62 |
| 1fd | A1 | DK45 | Tk19 | Kk63 |
| 1fe | A1 | DK45 | Tk19 | Kk64 |
| 1ff | A1 | DK45 | Tk19 | DK66 |
| 1fg | A1 | DK45 | Tk20 | Kk2 |
| 1fh | A1 | DK45 | Tk20 | Kk3 |
| 1fi | A1 | DK45 | Tk20 | Kk5 |
| 1fj | A1 | DK45 | Tk20 | Kk10 |
| 1fk | A1 | DK45 | Tk20 | Kk11 |
| 1fl | A1 | DK45 | Tk20 | Kk14 |
| 1fm | A1 | DK45 | Tk20 | Kk15 |
| 1fn | A1 | DK45 | Tk20 | Kk16 |
| 1fo | A1 | DK45 | Tk20 | Kk51 |
| 1fp | A1 | DK45 | Tk20 | Kk53 |
| 1fq | A1 | DK45 | Tk20 | Kk54 |
| 1fr | A1 | DK45 | Tk20 | Kk55 |
| 1fs | A1 | DK45 | Tk20 | Kk56 |
| 1ft | A1 | DK45 | Tk20 | Kk61 |
| 1fu | A1 | DK45 | Tk20 | Kk62 |
| 1fv | A1 | DK45 | Tk20 | Kk63 |
| 1fw | A1 | DK45 | Tk20 | Kk64 |
| 1fx | A1 | DK45 | Tk20 | DK66 |

### Beispiel 2a :

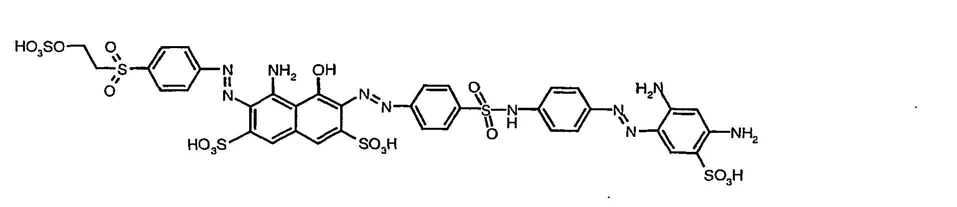

1) 1 mol Parabase wurde in Eiswasser suspendiert und mit überschüssigem Natriumnitrit und Salzsäure bei pH<1 und einer Temperatur von 0-5°C diazotiert. 1 mol H-Säure wurde in 25 gew.%iger Natronlauge gelöst und zu der Reaktionsmischung des diazotierten Parabase gegeben. Der pH-Wert wurde unter 2 gehalten.
2) 1 mol 4,4-Diaminodiphenylsulfamid wurde mit überschüssigem Natriumnitrit und Salzsäure bei pH<1 und einer Temperatur von 0-5°C tetrazotiert und zu der in Schritt 1) erhaltenen Reaktionsmischung gegeben. Der pH-Wert wurde durch Zugabe von 10 gew.-%iger Natronlauge zwischen 3-8 gehalten.
3) 1 mol Metaminsäure wurde zu der in Schritt 2) erhaltenen Reaktionsmischung gegeben und der pH-Wert wurde durch Zugabe von 10 gew.-%iger Natronlauge zwischen 3-8 gehalten. Nach beendeter Umsetzung wurde der Farbstoff durch Zugabe von NaCl ausgefällt und abgesaugt.

In zu Beispiel 2a analoger Weise können die Farbstoffe der allgemeinen Formel A-N=N-Napht¹-N=N-Tk¹-N=N-Kk¹ erhalten werden (= Farbstoffe der allgemeinen Formel II mit Dk¹ = A und n=1), worin Kk¹ für einen von den Kupplungskomponenten Kk1 bis Kk64, DK3, DK4, DK6, DK7, DK11, DK13, DK14, DK15, DK18, DK21 bis DK27, DK29, DK30, DK33, DK36, DK38, DK39 oder DK42 bis DK83 abgeleiteten Rest steht, Napht für einen der bivalenten Reste II-2,II-4,II-6,II-8,II-10,II-12 und II-14 steht, Tk¹ für einen von einer Tetrazokomponenten Tk1 bis Tk20 abgeleiteten bivalenten Rest steht und A einen der Reste A1 bis A6 bedeutet. Die Kupplung des Restes A-N=N-erfolgt in ortho-Position zur Aminogruppe in Napht¹. Beispiele hierfür sind in der nachfolgenden Tabelle 2 angegeben.

**Tabelle 2:**

| Beispiel Nr. | A | Napht¹ | Tk | Kk |
|---|---|---|---|---|
| 2a | A1 | DK44 | Tk18 | Kk15 |
| 2b | A1 | DK44 | Tk18 | Kk5 |
| 2c | A1 | DK44 | Tk18 | Kk2 |
| 2d | A1 | DK44 | Tk18 | Kk3 |
| 2e | A1 | DK44 | Tk18 | Kk6 |
| 2f | A1 | DK44 | Tk18 | Kk1 |
| 2g | A1 | DK44 | Tk18 | Kk4 |
| 2h | A1 | DK44 | Tk18 | Kk7 |
| 2i | A1 | DK44 | Tk18 | Kk9 |
| 2j | A1 | DK44 | Tk18 | Kk10 |
| 2k | A1 | DK44 | Tk18 | Kk14 |
| 2l | A1 | DK44 | Tk18 | Kk16 |
| 2m | A1 | DK44 | Tk18 | Kk26 |
| 2n | A1 | DK44 | Tk18 | Kk27 |
| 20 | A1 | DK44 | Tk18 | Kk40 |
| 2p | A1 | DK44 | Tk18 | Kk46 |
| 2q | A1 | DK44 | Tk18 | Kk48 |
| 2r | A1 | DK44 | Tk18 | Dk4 |
| 2s | A1 | DK44 | Tk18 | Dk11 |
| 2t | A1 | DK44 | Tk18 | Dk18 |
| 2u | A1 | DK44 | Tk18 | Dk29 |
| 2v | A1 | DK44 | Tk18 | Dk30 |
| 2z | A1 | DK44 | Tk18 | Dk39 |
| 2aa | A1 | DK44 | Tk16 | Kk5 |
| 2ab | A1 | DK44 | Tk16 | Kk3 |
| 2ac | A1 | DK44 | Tk16 | Kk4 |
| 2ad | A1 | DK44 | Tk16 | Dk4 |
| 2ae | A1 | DK44 | Tk19 | Kk5 |
| 2af | A1 | DK45 | Tk18 | Kk5 |
| 2ag | A2 | DK44 | Tk18 | Kk5 |
| 2ah | A3 | DK44 | Tk18 | Kk15 |
| 2ai | A4 | DK44 | Tk18 | Kk15 |
| 2aj | A1 | DK44 | Tk16 | Kk15 |
| 2ak | A1 | DK44 | Tk16 | Kk34 |
| 2al | A2 | DK44 | Tk18 | Kk3 |
| 2am | A4 | DK44 | Tk18 | Kk5 |
| 2an | A4 | DK45 | Tk18 | Kk10 |
| 2ao | A5 | DK45 | Tk18 | Kk14 |
| 2ap | A6 | DK45 | Tk18 | Kk16 |
| 2aq | A4 | DK45 | Tk18 | Kk26 |
| 2ar | A1 | DK44 | Tk18 | Kk11 |
| 2as | A1 | DK44 | Tk18 | Kk51 |
| 2at | A1 | DK44 | Tk18 | Kk52 |
| 2au | A1 | DK44 | Tk18 | Kk53 |
| 2av | A1 | DK44 | Tk18 | Kk54 |
| 2aw | A1 | DK44 | Tk18 | Kk55 |
| 2ax | A1 | DK44 | Tk18 | Kk56 |
| 2ay | A1 | DK44 | Tk18 | Kk57 |
| 2az | A1 | DK44 | Tk18 | Kk58 |
| 2ba | A1 | DK44 | Tk18 | Kk59 |
| 2bb | A1 | DK44 | Tk18 | Kk60 |
| 2bc | A1 | DK44 | Tk18 | Kk61 |
| 2bd | A1 | DK44 | Tk18 | Kk62 |
| 2be | A1 | DK44 | Tk18 | Kk63 |
| 2bf | A1 | DK44 | Tk18 | Kk64 |
| 2bg | A1 | DK44 | Tk18 | DK66 |
| 2bh | A1 | DK45 | Tk18 | Kk1 |
| 2bi | A1 | DK45 | Tk18 | Kk2 |
| 2bj | A1 | DK45 | Tk18 | Kk3 |
| 2bk | A1 | DK45 | Tk18 | Kk4 |
| 2bl | A1 | DK45 | Tk18 | Kk6 |
| 2bm | A1 | DK45 | Tk18 | Kk7 |
| 2bn | A1 | DK45 | Tk18 | Kk10 |
| 2bo | A1 | DK45 | Tk18 | Kk11 |
| 2bp | A1 | DK45 | Tk18 | Kk14 |
| 2bq | A1 | DK45 | Tk18 | Kk15 |
| 2br | A1 | DK45 | Tk18 | Kk16 |
| 2bs | A1 | DK45 | Tk18 | Kk51 |
| 2bt | A1 | DK45 | Tk18 | Kk53 |
| 2bu | A1 | DK45 | Tk18 | Kk54 |
| 2bv | A1 | DK45 | Tk18 | Kk55 |
| 2bw | A1 | DK45 | Tk18 | Kk56 |
| 2bx | A1 | DK45 | Tk18 | Kk61 |
| 2by | A1 | DK45 | Tk18 | Kk62 |
| 2bz | A1 | DK45 | Tk18 | Kk63 |
| 2ca | A1 | DK45 | Tk18 | Kk64 |
| 2cb | A1 | DK45 | Tk18 | DK66 |
| 2cc | A1 | DK44 | Tk16 | Kk10 |
| 2cd | A1 | DK44 | Tk16 | Kk11 |
| 2ce | A1 | DK44 | Tk16 | Kk14 |
| 2cf | A1 | DK44 | Tk16 | Kk16 |
| 2cg | A1 | DK44 | Tk16 | Kk51 |
| 2ch | A1 | DK44 | Tk16 | Kk53 |
| 2ci | A1 | DK44 | Tk16 | Kk54 |
| 2cj | A1 | DK44 | Tk16 | Kk55 |
| 2ck | A1 | DK44 | Tk16 | Kk56 |
| 2cl | A1 | DK44 | Tk16 | Kk61 |
| 2cm | A1 | DK44 | Tk16 | Kk62 |
| 2cn | A1 | DK44 | Tk16 | Kk63 |
| 2co | A1 | DK44 | Tk16 | Kk64 |
| 2cp | A1 | DK44 | Tk16 | DK66 |
| 2cq | A1 | DK44 | Tk19 | Kk2 |
| 2cr | A1 | DK44 | Tk19 | Kk3 |
| 2cs | A1 | DK44 | Tk19 | Kk10 |
| 2ct | A1 | DK44 | Tk19 | Kk11 |
| 2cu | A1 | DK44 | Tk19 | Kk14 |
| 2cv | A1 | DK44 | Tk19 | Kk15 |
| 2cw | A1 | DK44 | Tk19 | Kk16 |
| 2cx | A1 | DK44 | Tk19 | Kk51 |
| 2cy | A1 | DK44 | Tk19 | Kk53 |
| 2cz | A1 | DK44 | Tk19 | Kk54 |
| 2da | A1 | DK44 | Tk19 | Kk55 |
| 2db | A1 | DK44 | Tk19 | Kk56 |
| 2dc | A1 | DK44 | Tk19 | Kk61 |
| 2dd | A1 | DK44 | Tk19 | Kk62 |
| 2de | A1 | DK44 | Tk19 | Kk63 |
| 2df | A1 | DK44 | Tk19 | Kk64 |
| 2dg | A1 | DK44 | Tk19 | DK66 |
| 2dh | A1 | DK44 | Tk20 | Kk2 |
| 2di | A1 | DK44 | Tk20 | Kk3 |
| 2dj | A1 | DK44 | Tk20 | Kk5 |
| 2dk | A1 | DK44 | Tk20 | Kk10 |
| 2dl | A1 | DK44 | Tk20 | Kk11 |
| 2dm | A1 | DK44 | Tk20 | Kk14 |
| 2dn | A1 | DK44 | Tk20 | Kk15 |
| 2do | A1 | DK44 | Tk20 | Kk16 |
| 2dp | A1 | DK44 | Tk20 | Kk51 |
| 2dq | A1 | DK44 | Tk20 | Kk53 |
| 2dr | A1 | DK44 | Tk20 | Kk54 |
| 2ds | A1 | DK44 | Tk20 | Kk55 |
| 2dt | A1 | DK44 | Tk20 | Kk56 |
| 2du | A1 | DK44 | Tk20 | Kk61 |
| 2dv | A1 | DK44 | Tk20 | Kk62 |
| 2dw | A1 | DK44 | Tk20 | Kk63 |
| 2dx | A1 | DK44 | Tk20 | Kk64 |
| 2dy | A1 | DK44 | Tk20 | DK66 |
| 2dz | A1 | DK45 | Tk16 | Kk2 |
| 2ea | A1 | DK45 | Tk16 | Kk3 |
| 2eb | A1 | DK45 | Tk16 | Kk5 |
| 2ec | A1 | DK45 | Tk16 | Kk10 |
| 2ed | A1 | DK45 | Tk16 | Kk11 |
| 2ee | A1 | DK45 | Tk16 | Kk14 |
| 2ef | A1 | DK45 | Tk16 | Kk15 |
| 2eg | A1 | DK45 | Tk16 | Kk16 |
| 2eh | A1 | DK45 | Tk16 | Kk51 |
| 2ei | A1 | DK45 | Tk16 | Kk53 |
| 2ej | A1 | DK45 | Tk16 | Kk54 |
| 2ek | A1 | DK45 | Tk16 | Kk55 |
| 2el | A1 | DK45 | Tk16 | Kk56 |
| 2em | A1 | DK45 | Tk16 | Kk61 |
| 2en | A1 | DK45 | Tk16 | Kk62 |
| 2eo | A1 | DK45 | Tk16 | Kk63 |
| 2ep | A1 | DK45 | Tk16 | Kk64 |
| 2eq | A1 | DK45 | Tk16 | DK66 |
| 2er | A1 | DK45 | Tk19 | Kk2 |
| 2es | A1 | DK45 | Tk19 | Kk3 |
| 2et | A1 | DK45 | Tk19 | Kk5 |
| 2eu | A1 | DK45 | Tk19 | Kk10 |
| 2ev | A1 | DK45 | Tk19 | Kk11 |
| 2ew | A1 | DK45 | Tk19 | Kk14 |
| 2ex | A1 | DK45 | Tk19 | Kk15 |
| 2ey | A1 | DK45 | Tk19 | Kk16 |
| 2ez | A1 | DK45 | Tk19 | Kk51 |
| 2fa | A1 | DK45 | Tk19 | Kk53 |
| 2fb | A1 | DK45 | Tk19 | Kk54 |
| 2fc | A1 | DK45 | Tk19 | Kk55 |
| 2fd | A1 | DK45 | Tk19 | Kk56 |
| 2fe | A1 | DK45 | Tk19 | Kk61 |
| 2ff | A1 | DK45 | Tk19 | Kk62 |
| 2fg | A1 | DK45 | Tk19 | Kk63 |
| 2fh | A1 | DK45 | Tk19 | Kk64 |
| 2fi | A1 | DK45 | Tk19 | DK66 |
| 2fj | A1 | DK45 | Tk20 | Kk2 |
| 2fk | A1 | DK45 | Tk20 | Kk3 |
| 2fl | A1 | DK45 | Tk20 | Kk5 |
| 2fm | A1 | DK45 | Tk20 | Kk10 |
| 2fn | A1 | DK45 | Tk20 | Kk11 |
| 2f0 | A1 | DK45 | Tk20 | Kk14 |
| 2fp | A1 | DK45 | Tk20 | Kk15 |
| 2fq | A1 | DK45 | Tk20 | Kk16 |
| 2fr | A1 | DK45 | Tk20 | Kk51 |
| 2fs | A1 | DK45 | Tk20 | Kk53 |
| 2ft | A1 | DK45 | Tk20 | Kk54 |
| 2fu | A1 | DK45 | Tk20 | Kk55 |
| 2fv | A1 | DK45 | Tk20 | Kk56 |
| 2fw | A1 | DK45 | Tk20 | Kk61 |
| 2fx | A1 | DK45 | Tk20 | Kk62 |
| 2fy | A1 | DK45 | Tk20 | Kk63 |
| 2fz | A1 | DK45 | Tk20 | Kk64 |
| 2ga | A1 | DK45 | Tk20 | DK66 |

### Beispiel 3:

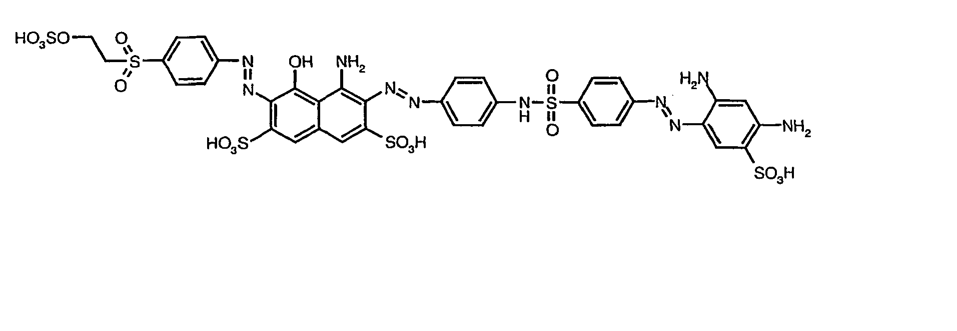

1) 1 mol 4,4-Diaminodiphenylsulfamid wurde mit überschüssigem Natriumnitrit und Salzsäure bei pH<1 und einer Temperatur von 0-5°C tetrazotiert. 1 mol Metaminsäure wurde in 25 gew.-%iger Natronlauge gelöst und zu der Reaktionsmischung des tetrazotierten 4,4-Diaminodiphenylsulfamids getropft. Der pH-Wert der Reaktionsmischung wurde durch Zugabe von 15 gew.-%iger Natriumkarbonatlösung zwischen 2-3 gehalten.
2) 1 mol H-Säure wurde in 25 gew.-%iger Natronlauge gelöst und zu der in Schritt 1) erhaltenen Reaktionsmischung gegeben. Der pH-Wert der Reaktionsmischung wurde durch Zugabe von 15 gew.-%iger Natriumkarbonatlösung zwischen 2-4 gehalten.
3) 1 mol Parabase wurde in Eiswasser suspendiert und mit überschüssigem Natriumnitrit und Salzsäure bei pH<1 und einer Temperatur von 0-5°C diazotiert und anschließend zu der in Schritt 2) erhaltenen Reaktionsmischung gegeben. Der pH-Wert wurde durch Zugabe von 10 gew.-%iger Natronlauge zwischen 3-8 gehalten. Nach beendeter Umsetzung wurde der Farbstoff durch Zugabe von NaCl ausgefällt und abgesaugt.

### Beispiel 4:

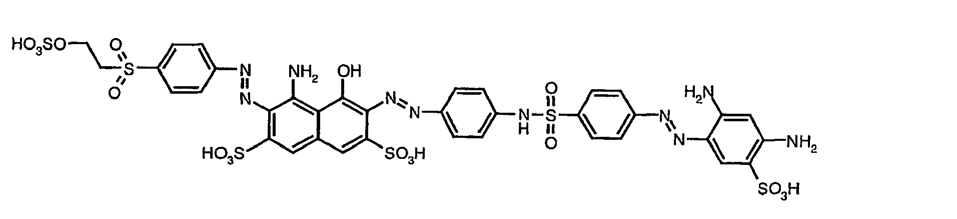

1) 1 mol 4,4-Diaminodiphenylsulfamid wurde mit überschüssigem Natriumnitrit und Salzsäure bei pH<1 und einer Temperatur von 0-5°C tetrazotiert. 1 mol Metaminsäure wurde in 25 gew.-%iger Natronlauge gelöst und zu der Reaktionsmischung des tetrazotierten 4,4-Diaminodiphenylsulfamids getropft. Der pH-Wert der Reaktionsmischung wurde durch Zugabe von 15 gew.-%iger Natriumkarbonatlösung zwischen 2-3 gehalten.
2) 1 mol Parabase wurde im Eiswasser suspendiert und mit überschüssigem Natriumnitrit und Salzsäure bei pH<1 und einer Temperatur von 0-5°C diazotiert. 1 mol H-Säure wurde in 25 gew.-%iger Natronlauge gelöst und zu der Reaktionsmischung der diazotierten Parabase gegeben. Der pH-Wert wurde unter 2 gehalten.
3) Die in Schritt 2) erhaltene Reaktionsmischung wurde zu der in Schritt 1) erhaltenen Reaktionsmischung gegeben. Der pH-Wert wurde durch Zugabe von 10 gew.-%iger Natronlauge zwischen 3-8 gehalten. Nach beendeter Umsetzung wurde der Farbstoff durch Zugabe von NaCl ausgefällt und abgesaugt.

### Beispiel 5a:

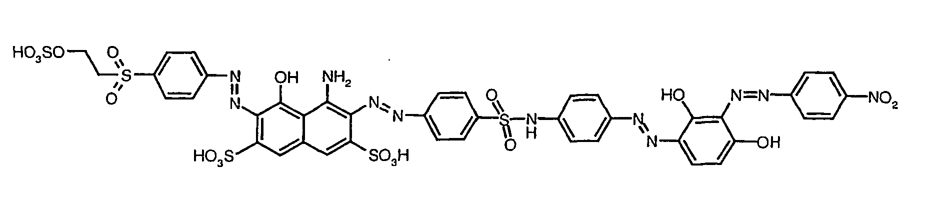

1) 1 mol 4,4-Diaminodiphenylsulfamid wurde mit überschüssigem Natriumnitrit und Salzsäure bei pH<1 und einer Temperatur von 0-5°C tetrazotiert. 1 mol H-Säure wurde in 25 gew.-%iger Natronlauge gelöst und zu der Reaktionsmischung des tetrazotierten 4,4-Diaminodiphenylsulfamids zugetropft. Der pH-Wert der Reaktionsmischung wurde durch Zugabe von 15 gew.-%iger Natriumkarbonatlösung zwischen 2 und 3 gehalten.
2) 1 mol Parabase wurde in Eiswasser suspendiert und mit überschüssigem Natriumnitrit und Salzsäure bei pH<1 und einer Temperatur von 0-5°C diazotiert und anschließend zu der in Schritt 1) erhaltenen Reaktionsmischung gegeben. Der pH-Wert wurde durch Zugabe von 10 gew.-%iger Natronlauge zwischen 3 und 8 gehalten.
3) 1 mol Resorcin wurde zu der in Schritt 2) erhaltenen Reaktionsmischung gegeben und der pH-Wert wurde durch Zugabe von 10 gew.-%iger Natronlauge zwischen 3 und 8 gehalten.
4) 1 mol p-Nitroanilin wurde in 21 gew.-%iger Salzsäure gelöst, danach mit überschüssigem Natriumnitrit bei pH<1 und einer Temperatur von 0-5°C diazotiert und anschließend zu der in Schritt 3) erhaltenen Reaktionsmischung gegeben. Der pH-Wert wurde durch Zugabe von 10 gew.-%iger Natronlauge zwischen 3 und 8 gehalten. Nach beendeter Umsetzung wurde der Farbstoff durch Zugabe von NaCl ausgefällt und abgesaugt.

### Beispiel 6a:

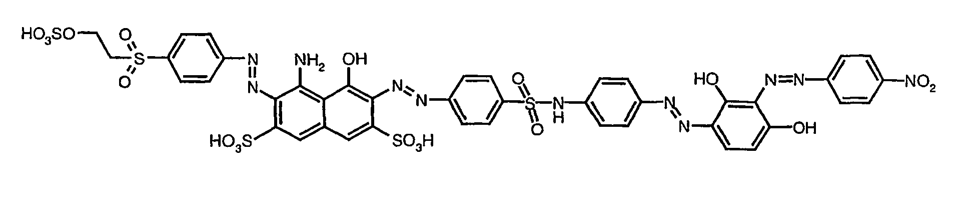

1) 1 mol Parabase wurde in Eiswasser suspendiert und mit überschüssigem Natriumnitrit und Salzsäure bei pH<1 und einer Temperatur von 0-5°C diazotiert. 1 mol H-Säure wurde in 25 gew.-%iger Natronlauge gelöst und zu der Reaktionsmischung des diazotierten Parabase gegeben. Der pH-Wert wurde unter 2 gehalten.
2) 1 mol 4,4-Diaminodiphenylsulfamid wurde mit überschüssigem Natriumnitrit und Salzsäure bei pH<1 und einer Temperatur von 0-5°C tetrazotiert. und zu der in Schritt 1) erhaltenen Reaktionsmischung gegeben. Der pH-Wert wurde durch Zugabe von 10 gew.-%iger Natronlauge zwischen 3 und 8 gehalten.
3) 1 mol Resorcin wurde zu der in Schritt 2) erhaltenen Reaktionsmischung gegeben und der pH-Wert wurde durch Zugabe von 10 gew.-%iger Natronlauge zwischen 3 und 8 gehalten.
4) 1 mol p-Nitroanilin wurde in 21 gew.-%iger Salzsäure gelöst, danach mit überschüssigem Natriumnitrit bei pH<1 und einer Temperatur von 0-5°C diazotiert und anschließend zu der in Schritt 3) erhaltenen Reaktionsmischung gegeben. Der pH-Wert wurde durch Zugabe von 10 gew.-%iger Natronlauge zwischen 3 und 8 gehalten. Nach beendeter Umsetzung wurde der Farbstoff durch Zugabe von NaCl ausgefällt und abgesaugt.

### Beispiel 7:

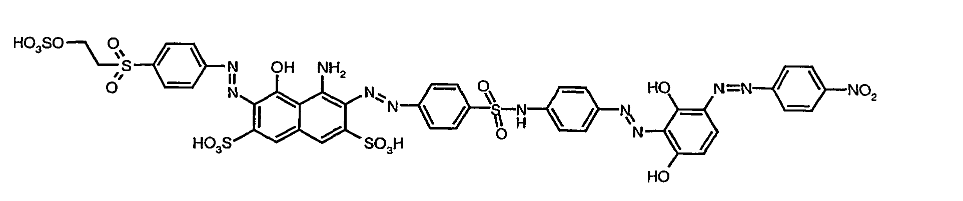

1) 1 mol 4,4-Diaminodiphenylsulfamid wurde mit überschüssigem Natriumnitrit und Salzsäure bei pH<1 und einer Temperatur von 0-5°C tetrazotiert. 1 mol H-Säure wurde in 25 gew.-%iger Natronlauge gelöst und zu der Reaktionsmischung des tetrazotierten 4,4-Diaminodiphenylsulfamids getropft. Der pH-Wert der Reaktionsmuschung wurde durch Zugabe von 15 gew.-%iger Natriumkarbonatlösung zwischen 2 und 3 gehalten.
2) 1 mol Parabase wurde im Eiswasser suspendiert und mit überschüssigem Natriumnitrit und Salzsäure bei pH<1 und einer Temperatur von 0-5°C diazotiert und anschließend zu der in Schritt 1) erhaltenen Reaktionsmischung gegeben. Der pH-Wert wurde durch Zugabe von 10 gew.-%iger Natronlauge zwischen 3-8 gehalten.
3) 1 mol p-Nitroanilin wurde in 21 gew.-%iger Salzsäure gelöst und danach mit überschüssigem Natriumnitrit bei pH<1 und einer Temperatur von 0-5°C diazotiert. 1 mol Resorcin wurde in 50 gew.-%iger Natronlauge bei einem pH-Wert >12 gelöst und zu dieser Lösung wurde das diazotierte p-Nitroanilin innerhalb von 30 min bei einer Temperatur von unter 10°C zugetropft, wobei man durch Zugabe von 10 gew.-%iger Natronlauge den pH-Wert oberhalb 9 hielt.
4) Die in Schritt 3) erhaltene Reaktionsmischung wurde zu der in Schritt 2) erhaltenen Reaktionsmischung gegeben. Der pH-Wert wurde durch Zugabe von 10 gew.-%iger Natronlauge zwischen 3 und 8 gehalten. Nach beendeter Umsetzung wurde der Farbstoff durch Zugabe von NaCl ausgefällt und abgesaugt.

### Beispiel 8:

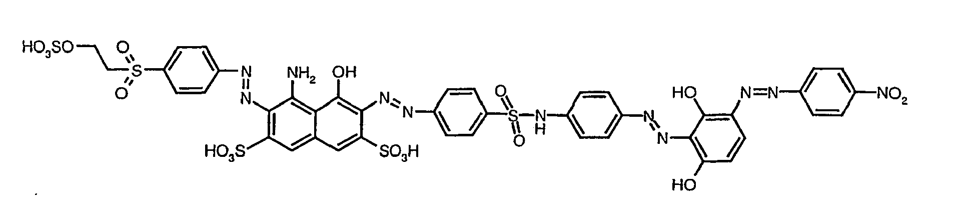

1) 1 mol Parabase wurde in Eiswasser suspendiert und mit überschüssigem Natriumnitrit und Salzsäure bei pH<1 und einer Temperatur von 0-5°C diazotiert. 1 mol H-Säure wurde in 25 gew.-%iger Natronlauge gelöst und zu der diazotierten Parabase gegeben. Der pH-Wert wurde unter 2 gehalten.
2) 1 mol 4,4-Diaminodiphenylsulfamid wurde mit überschüssigem Natriumnitrit und Salzsäure bei pH<1 und einer Temperatur von 0-5°C tetrazotiert und zu der in Schritt 1) erhaltenen Reaktionsmischung gegeben. Der pH-Wert wurde durch Zugabe von 10 gew.-%iger Natronlauge zwischen 3 und 8 gehalten.
3) 1 mol p-Nitroanilin wurde in 21 gew.-%iger Salzsäure gelöst und danach mit überschüssigem Natriumnitrit bei pH<1 und einer Temperatur von 0-5°C diazotiert. 1 mol Resorcin wurde in 50 gew.-%iger Natronlauge bei einem pH-Wert >12 gelöst und zu dieser Lösung wurde das diazotierte p-Nitroanilin innerhalb von 30 min bei einer Temperatur von unter 10°C zugetropft, wobei man durch Zugabe von 10 gew.-%iger Natronlauge den pH-Wert oberhalb 9 hielt.
4) Die in Schritt 3) erhaltene Reaktionsmischung wurde zu der in Schritt 2) erhaltenen Reaktionsmischung gegeben. Der pH-Wert wurde durch Zugabe von 10 gew.-%iger Natronlauge zwischen 3 und 8 gehalten. Nach beendeter Umsetzung wurde der Farbstoff durch Zugabe von NaCl ausgefällt und abgesaugt.

### Beispiel 9:

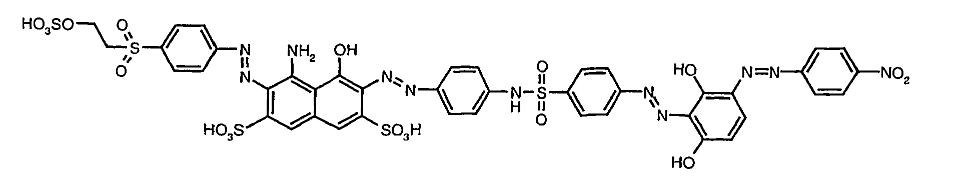

1) 1 mol p-Nitroanilin wurde in 21 gew.-%iger Salzsäure gelöst und danach mit überschüssigem Natriumnitrit bei pH<1 und einer Temperatur von 0-5°C diazotiert. 1 mol Resorcin wurde in 50 gew.-%iger Natronlauge bei einem pH-Wert >12 gelöst und zu dieser Lösung wurde das diazotierte p-Nitroanilin innerhalb von 30 min bei einer Temperatur von unter 10°C zugetropft, wobei man durch Zugabe von 10 gew.-%iger Natronlauge den pH-Wert oberhalb 9 hielt.
2) 1 mol 4,4-Diaminodiphenylsulfamid wurde mit überschüssigem Natriumnitrit und Salzsäure bei pH<1 und einer Temperatur von 0-5°C tetrazotiert. und zu der in Schritt 1) erhaltenen Reaktionsmischung gegeben. Der pH-Wert wurde durch Zugabe von 10 gew.-%iger Natronlauge zwischen 3 und 5 gehalten.
3) 1 mol Parabase wurde in Eiswasser suspendiert und mit überschüssigem Natriumnitrit und Salzsäure bei pH<1 und einer Temperatur von 0-5°C diazotiert. 1 mol H-Säure wurde in 25 gew.-%iger Natronlauge gelöst und zu dem diazotiertem Parabase gegeben. Der pH-Wert wurde unter 2 gehalten.
4) Die in Schritt 3) erhaltene Reaktionsmischung wurde zu der in Schritt 2) erhaltenen Reaktionsmischung gegeben. Der pH-Wert wurde durch Zugabe von 10 gew.-%iger Natronlauge zwischen 3 und 8 gehalten. Nach beendeter Umsetzung wurde der Farbstoff durch Zugabe von NaCl ausgefällt und abgesaugt.

In zu den Beispielen 5a und 7 analoger Weise können die Farbstoffe der allgemeinen Formel Dk¹-N=N-Napht¹-N=N-Tk¹-N=N-Kk¹-N=N-Dk² bzw. deren Metallkomplexe erhalten werden (= Farbstoffe der allgemeinen Formel II mit n = 1), worin Dk¹ und Dk² jeweils für einen von den Diazokomponenten DK1 bis DK83 oder für einen von A1 bis A6 abgeleiteten Rest stehen, wobei wenigstens einer der Reste Dk¹ oder Dk² für einen Rest der Formel A steht, Kk¹ für einen von den Kupplungskomponenten Kk2, Kk3, Kk5, Kk6, Kk14, Kk15, Kk16, Kk49 oder Kk50 abgeleiteten bivalenten Rest steht, Napht¹ für einen der bivalenten Reste II-2, II-4, II-6, 11-8, II-10, II-12 und II-14 steht, Tk¹ für einen von einer Tetrazokomponenten Tk1 bis Tk20 abgeleiteten bivalenten Rest steht und A einen der Reste A1 bis A6 bedeutet. Die Kupplung des Restes Dk¹-N=N- erfolgt in ortho-Position zur Hydroxygruppe in Napht¹. Beispiele hierfür sind die in der nachfolgenden Tabelle 3 angegebenen Farbstoffe und Metallkomplexe.

**Tabelle 3:**

| Beispiel Nr. | Dk¹ | Napht¹ | Tk | Kk | Dk² | Metall |
|---|---|---|---|---|---|---|
| 5a | A1 | DK44 | Tk18 | Kr3 | DK17 | - |
| 5b | A1 | DK44 | Tk18 | Kk3 | DK5 | Fe |
| 5c | A1 | DK44 | Tk18 | Kk3 | DK5 | Cr |
| 5d | A1 | DK44 | Tk18 | Kk3 | DK40 | - |
| 5e | DK17 | DK44 | Tk18 | Kk3 | A1 | - |
| 5f | DK17 | DK44 | Tk18 | Kk3 | A4 | - |
| 5g | DK17 | DK44 | Tk18 | Kk5 | A4 | - |
| 5h | DK5 | DK44 | Tk18 | Kk3 | A1 | Fe |
| 5i | DK5 | DK44 | Tk18 | Kk3 | A1 | Cr |
| 5j | DK5 | DK44 | Tk16 | Kk5 | A2 | - |
| 5k | DK17 | DK45 | Tk16 | Kk3 | A3 | - |

In zu den Beispielen 6a, 8 und 9 analoger Weise können die Farbstoffe der allgemeinen Formel Dk¹-N=N-Napht¹-N=N-Tk¹-N=N-Kk-N=N-Dk² bzw. deren Metallkomplexe erhalten werden (= Farbstoffe der allgemeinen Formeln II mit n = 1), worin Dk¹ und Dk² jeweils für einen von den Diazokomponenten DK1 bis DK83 oder für einen von A1 bis A6 abgeleiteten Rest stehen, wobei wenigstens einer der Reste Dk¹ oder Dk² für einen Rest der Formel A steht, Kk¹ für einen von den Kupplungskomponenten Kk2, Kk3, Kk5, Kk6, Kk14, Kk15, Kk16, Kk49 oder Kk50 abgeleiteten bivalenten Rest steht, Napht¹ für einen der bivalenten Reste II-2, II-4, II-6, II-8, II-10, II-12 und II-14 steht, Tk¹ für einen von einer Tetrazokomponenten Tk1 bis Tk20 abgeleiteten bivalenten Rest steht und A einen der Reste A1 bis A6 bedeutet. Die Kupplung des Restes Dk¹-N=N- erfolgt in ortho-Position zur Aminogruppe in Napht¹. Beispiele hierfür sind die in der nachfolgenden Tabelle 4 angegebenen Farbstoffe und Metallkomplexe.

**Tabelle 4**

| Beispiel Nr. | Dk¹ | Napht¹ | Tk | Kk | Dk² | Metall |
|---|---|---|---|---|---|---|
| 6a | A1 | DK44. | Tk18 | Kk3 | DK17 | - |
| 6b | A1 | DK44 | Tk18 | Kk3 | DK5 | Fe |
| 6c | A1 | DK44 | Tk18 | Kk3 | DK5 | Cr |
| 6d | A1 | DK44 | Tk18 | Kk3 | DK40 | - |
| 6e | DK17 | DK44 | Tk18 | Kk3 | A1 | - |
| 6f | DK17 | DK44 | Tk18 | Kk3 | A3 | - |
| 6g | DK17 | DK44 | Tk18 | Kk5 | A1 | - |
| 6h | DK5 | DK44 | Tk18 | Kk3 | A1 | - |
| 6i | DK5 | DK44 | Tk18 | Kk3 | A4 | - |
| 6j | A1 | DK44 | Tk18 | Kk3 | A1 | - |
| 6k | DK5 | DK44 | Tk16 | Kk5 | A3 | - |
| 6l | DK17 | DK45 | Tk16 | Kk3 | A5 | - |

### Beispiel 10:

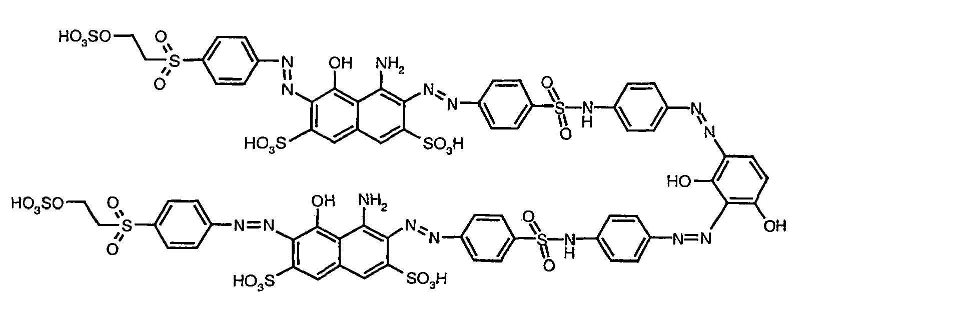

1) 1 mol 4,4-Diaminodiphenylsulfamid wurde mit überschüssigem Natriumnitrit und Salzsäure bei pH<1 und einer Temperatur von 0-5°C tetrazotiert. 1 mol H-Säure wurde in 25 gew.-%iger Natronlauge gelöst und zu der Reaktionsmischung des tetrazotierten 4,4-Diaminodiphenylsulfamids zugetropft. Der pH-Wert der Reaktionsmischung wurde durch Zugabe von 15 gew.-%iger Natriumkarbonatlösung zwischen 2 und 3 gehalten.
2) 1 mol Parabase wurde in Eiswasser suspendiert und mit überschüssigem Natriumnitrit und Salzsäure bei pH<1 und einer Temperatur von 0-5°C diazotiert und anschließend zu der in Schritt 1) erhaltenen Reaktionsmischung gegeben. Der pH-Wert wurde durch Zugabe von 10 gew.-%iger Natronlauge zwischen 3 und 8 gehalten.
3) 0,5 mol Resorcin wurde zu der in Schritt 2) erhaltenen Reaktionsmischung gegeben und der pH-Wert wurde durch Zugabe von 10 gew.-%iger Natronlauge zwischen 3 und 8 gehalten. Nach beendeter Umsetzung wurde der Farbstoff durch Zugabe von NaCl ausgefällt und abgesaugt.

In zu Beispiel 10 analoger Weise können die Farbstoffe der allgemeinen Formel [A-N=N-Napht¹-N=N-Tk¹-N=N]₂-Kk¹ erhalten werden (= Farbstoffe der allgemeinen Formel III mit Dk¹ = Dk² = A, Napht¹ = Napht² und Tk¹ = Tk²), worin Kk¹ für einen von den Kupplungskomponenten Kk2, Kk3, Kk5, Kk6, Kk14, Kk15, Kk16, Kk49 oder Kk50 abgeleiteten bivalenten Rest steht, Napht¹ für einen der bivalenten Reste II-2, II-4,II-6, II-8, II-10, II-12 und II-14 steht, Tk¹ für einen von einer Tetrazokomponenten Tk1 bis Tk20 abgeleiteten bivalenten Rest steht und A einen der Reste A1 bis A6 bedeutet. Die Kupplung des Restes A-N=N- erfolgt in ortho-Position zur Hydroxygruppe in Napht¹.

### Beispiel 11:

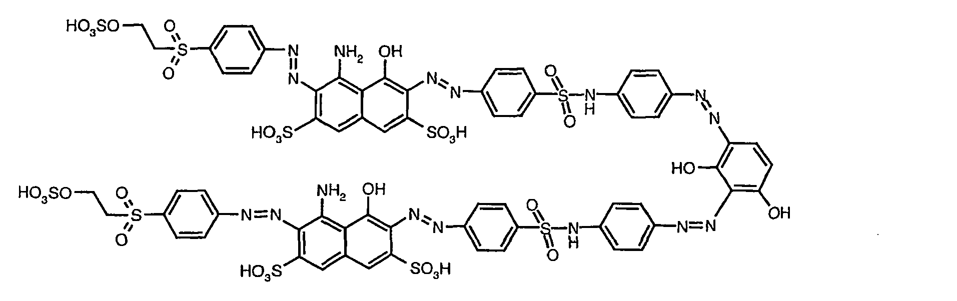

1) 1 mol Parabase wurde in Eiswasser suspendiert und mit überschüssigem Natriumnitrit und Salzsäure bei pH<1 und einer Temperatur von 0-5°C diazotiert. 1 mol H-Säure wurde in 25 gew.-%iger Natronlauge gelöst und zu der diazotierten Parabase gegeben. Der pH-Wert wurde unter 2 gehalten.
2) 1 mol 4,4-Diaminodiphenylsulfamid wurde mit überschüssigem Natriumnitrit und Salzsäure bei pH<1 und einer Temperatur von 0-5°C tetrazotiert und zu der in Schritt 1) erhaltenen Reaktionsmischung gegeben. Der pH-Wert wurde durch Zugabe von 10 gew.-%iger Natronlauge zwischen 3 und 8 gehalten.
3) 0,5 mol Resorcin wurde zu der in Schritt 2) erhaltenen Reaktionsmischung gegeben und der pH-Wert wurde durch Zugabe von 10 gew.-%iger Natronlauge zwischen 3 und 8 gehalten. Nach beendeter Umsetzung wurde der Farbstoff durch Zugabe von NaCl ausgefällt und abgesaugt.

In zu Beispiel 11 analoger Weise können die Farbstoffe der allgemeinen Formel [A-N=N-Napht¹-N=N-Tk¹-N=N]₂-Kk¹ erhalten werden (= Farbstoffe der allgemeinen Formel III mit Dk¹ = Dk² = A, Napht¹ = Napht² und Tk¹ = Tk²), worin Kk¹ für einen von den Kupplungskomponenten Kk2, Kk3, Kk5, Kk6, Kk14, Kk15, Kk16, Kk49 oder Kk50 abgeleiteten bivalenten Rest steht, Napht¹ für einen der bivalenten Reste II-2, II-4, II-6, II-8, II-10, II-12 und II-14 steht, Tk¹ für einen von einer Tetrazokomponenten Tk1 bis Tk20 abgeleiteten bivalenten Rest steht und A einen der Reste A1 bis A6 bedeutet. Die Kupplung des Restes A-N=N- erfolgt in ortho-Position zur Aminogruppe in Napht¹.

### Beispiel 12:

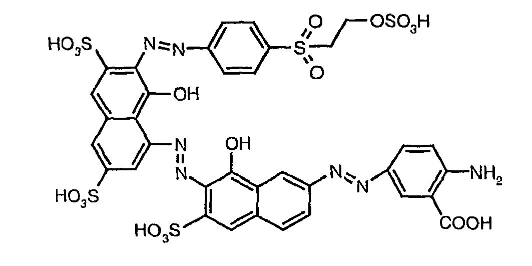

1) 1 mol Gammasäure wurde in 25 gew.-%iger Natronlauge gelöst, mit überschüssigem Natriumnitrit und Salzsäure bei pH<1 und einer Temperatur von 0-5°C diazotiert und zu einer wässrigen Lösung von 1 mol Anthranilsäure zugetropft. Der pH-Wert der Reaktionsmischung wurde durch Zugabe von 10 gew.-%iger Natronlauge zwischen 5 und 10 gehalten.
2) 1 mol H-Säure wurde in 25 gew.-%iger Natronlauge gelöst und mit überschüssigem Natriumnitrit und Salzsäure bei pH<1 und einer Temperatur von 0-5°C diazotiert. Zu dieser Reaktionsmischung gab man die in Schritt 1) erhaltenen Reaktionsmischung. Der pH-Wert wurde durch Zugabe von 10 gew.-%iger Natronlauge zwischen 3 und 8 gehalten.
3) 1 mol Parabase wurde im Eiswasser suspendiert und mit überschüssigem Natriumnitrit und Salzsäure bei pH<1 und einer Temperatur von 0-5°C diazotiert und anschließend zu der in Schritt 2) erhaltenen Reaktionsmischung gegeben. Der pH-Wert wurde durch Zugabe von 10 gew.-%iger Natronlauge zwischen 3 und 8 gehalten. Nach beendeter Umsetzung wurde der Farbstoff durch Zugabe von NaCl ausgefällt und abgesaugt.

In zu Beispiel 12 analoger Weise können die Farbstoffe der allgemeinen Formel A-N=N-Napht¹-N=N-Napht²-N=N-Kk¹ erhalten werden (= Farbstoffe der allgemeinen Formel V mit n= 0), worin Kk¹ für einen von den Kupplungskomponenten Kk1 bis Kk48 oder Kk51 bis Kk64 abgeleiteten bivalenten Rest steht, Napht¹ und Napht² jeweils für einen der bivalenten Reste II-1, II-3, II-5, II-7, U-9, II-11, II-13 oder II-15 stehen und A einen der Reste A1 bis A6 bedeutet. Die Kupplung des Restes Napht¹-N=N- erfolgt in ortho-Position zur Hydroxygruppe in Napht².

### Beispiel 13:

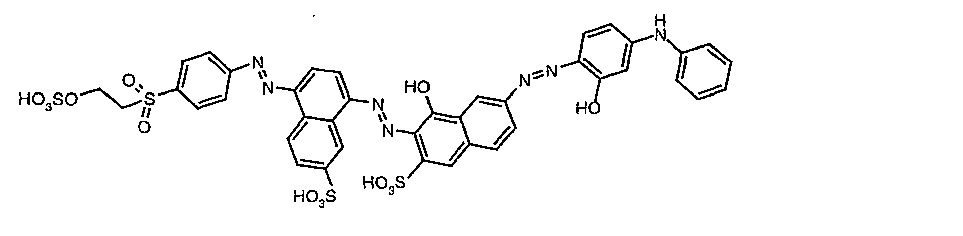

1) 1 mol Gammasäure wurde in 25 gew.-%iger Natronlauge gelöst, mit überschüssigem Natriumnitrit und Salzsäure bei pH<1 und einer Temperatur von 0-5°C diazotiert und zu einer wässrigen Suspension von 1 mol 3-Phenylaminophenol zugetropft. Der pH-Wert der Reaktionsmischung wurde durch Zugabe von 10 gew.-%iger Natronlauge zwischen 5 und 10 gehalten.
2) 1 mol Clevesäure-7 wurde in 25 gew.-%iger Natronlauge gelöst. Gleichzeitig wurde 1 mol Parabase im Eiswasser suspendiert und mit überschüssigem Natriumnitrit und Salzsäure bei pH<1 und einer Temperatur von 0-5°C diazotiert und anschließend zu der Clevesäure-7 Lösung gegeben, wobei der pH-Wert unter 2 gehalten wurde.
3) Die in Schritt 2) Reaktionsmischung wurde mit überschüssigem Natriumnitrit und Salzsäure bei pH<1 und einer Temperatur von 0-5°C diazotiert. Zu dieser Reaktionsmischung gibt man die in Schritt 1) erhaltenen Reaktionsmischung. Der pH-Wert wurde durch Zugabe von 10 gew.-%iger Natronlauge zwischen 3-8 gehalten. Nach beendeter Umsetzung der Farbstoff wurde durch Zugabe von NaCl ausgefällt und abgesaugt.

In zu Beispiel 13 analoger Weise können die Farbstoffe der allgemeinen Formel A-N=N-Napht¹-N=N-Napht²-N=N-Kk¹ erhalten werden (= Farbstoffe der allgemeinen Formel V mit n= 0), worin Kk¹ für einen von den Kupplungskomponenten Kk1 bis Kk48 oder Kk51 bis Kk64 abgeleiteten bivalenten Rest steht, Napht¹ und Napht² jeweils für einen der bivalenten Reste II-1, II-3, II-5, II-7, II-9, II-11, II-13 oder II-15 stehen und A einen der Reste A1 bis A6 bedeutet. Die Kupplung des Restes A-N=N-Napht¹-N=N-erfolgt in ortho-Position zur Hydroxygruppe in Napht².

### Beispiel 14:

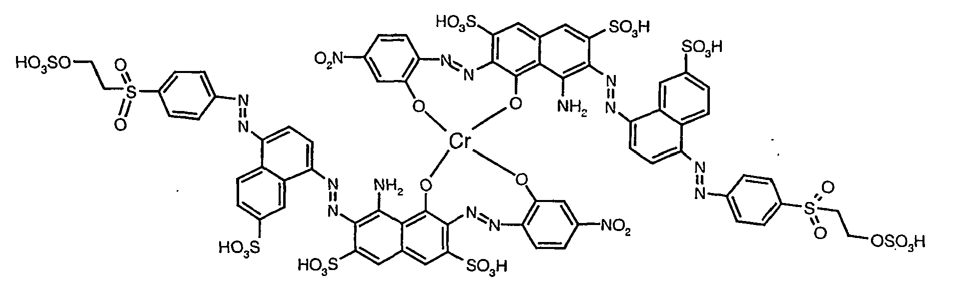

1) 1 mol Clevesäure-7 wurde in 25 gew.-%iger Natronlauge gelöst. Gleichzeitig wurde 1 mol Parabase in Eiswasser suspendiert und mit überschüssigem Natriumnitrit und Salzsäure bei pH<1 und einer Temperatur von 0-5°C diazotiert und anschließend zu der Lösung der Clevesäure-7 gegeben, wobei der pH-Wert unter 2 gehalten wurde.
2) 1 mol H-Säure wurde in 25 gew.-%iger Natronlauge gelöst. Gleichzeitig wurde die in der Schritt 1) erhaltene Reaktionsmischung mit überschüssigem Natriumnitrit und Salzsäure bei pH<1 und einer Temperatur von 0-5°C diazotiert und zu der Lösung der H-Säure gegeben. Der pH-Wert wurde durch Zugabe von 10 gew.-%iger Natronlauge zwischen 1 und 4 gehalten.
3) 1 mol 5-Nitro-2-aminophenol wurde bei pH<1 und einer Temperatur von 0-5°C mit überschüssigem Natriumnitrit und Salzsäure diazotiert und anschließend zu der in Schritt 2) erhaltenen Reaktionsmischung gegeben. Der pH-Wert wurde durch Zugabe von 10 gew.-%iger Natronlauge zwischen 3-8 gehalten. Nach beendeter Umsetzung wurde 0,20-0,30 mol Chrom(III)-sulfat zu der Reaktionsmischung gegeben und 1 Stunde nachgerührt. Der Farbstoff wurde durch Zugabe von NaCl ausgefällt und abgesaugt.

### Beispiel 15:

Die Herstellung erfolgte analog der in Beispiel 14 angegebenen Vorschrift, wobei im letzten Schritt keine Metallkomplexierung durchgeführt wurden.

In zu den Beispielen 14 und 15 analoger Weise können die Farbstoffe der allgemeinen Formel A-N=N-Napht¹-N=N-Napht²-N=N-Dk und deren Metallkomplexe erhalten werden (= Farbstoffe der allgemeinen Formel V mit n = 0), worin Dk für einen von den Diazokomponenten DK1 bis DK9, DK13, DK14, DK26, DK27, DK39 bis DK41 und DK58 abgeleiteten Rest steht, Napht¹ für einen der bivalenten Reste II-1, II-3, II-5, II-7, I I-9, II-11, II-13, II-15 oder 11-16 steht, Napht² für einen der bivalenten Reste II-2, II-4, II-6, II-8, II-10, II-12 oder II-14 steht und A einen der Reste A1 bis A6 bedeutet. Die Kupplung des Restes A-N=N-Napht¹-N=N- erfolgt in ortho-Position zur Aminogruppe in Napht².

### Beispiel 16:

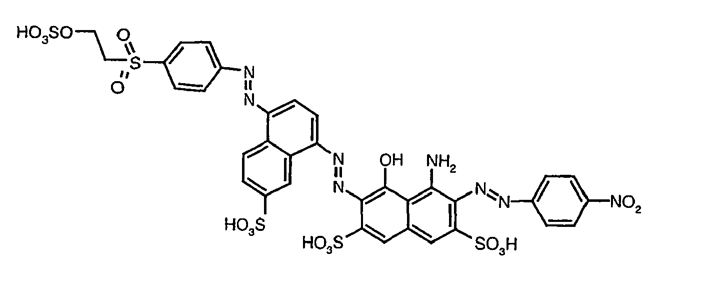

1) 1 mol p-Nitroanilin wurde in 21 gew.-%iger Salzsäure gelöst, danach mit überschüssigem Natriumnitrit bei pH<1 und einer Temperatur von 0-5°C diazotiert. Gleichzeitig wurde 1 mol H-Säure in 25 gew.-%iger Natronlauge gelöst und danach durch Zugabe von 21 gew.-%iger Salzsäure die H-Säure gefällt. Die H-Säure Suspension wurde zu der diazotierte p-Nitroanilin gegeben und der pH-Wert unter 2 gehalten. Nach 1 Stunde ist die Umsetzung beendet.
2) 1 mol Clevesäure-7 wurde in 25 gew.-%iger Natronlauge gelöst. Gleichzeitig wurde 1 mol Parabase in Eiswasser suspendiert und mit überschüssigem Natriumnitrit und Salzsäure bei pH<1 und einer Temperatur von 0-5°C diazotiert. Dazu wurde die Clevesäure-7 Lösung gegeben, wobei der pH-Wert unter 2 gehalten wurde.
3) Die in der Schritt 2) erhaltene Reaktionsmischung mit überschüssigem Natriumnitrit und Salzsäure bei pH<1 und einer Temperatur von 0-5°C diazotiert und zu dem in Schritt 1) erhaltenen Produkt gegeben. Der pH-Wert wurde durch Zugabe von 10 gew.-%iger Natronlauge zwischen 5 und 8 gehalten und 1 Stunde nachgerührt. Der Farbstoff wurde durch Zugabe von NaCl ausgefällt und abgesaugt.

In zu Beispiel 16 analoger Weise können die Farbstoffe der allgemeinen Formel A-N=N-Napht¹-N=N-Napht²-N=N-Dk erhalten werden (= Farbstoffe der allgemeinen Formel V mit n = 0), worin Dk für einen von den Diazokomponenten DK1 bis DK83 abgeleiteten Rest steht, Napht¹ für einen der bivalenten Reste II-1, II-3, II-5, II-7, II-9, II-11, II-13, II-15 oder II-16 steht, Napht² ür einen der bivalenten Reste II-2, II-4, II-6, II-8, II-10, II-12 oder II-14 steht und A einen der Reste A1 bis A6 bedeutet. Die Kupplung des Restes A-N=N-Napht¹-N=N- erfolgt in ortho-Position zur Hydroxygruppe in Napht².

### Beispiel 17a:

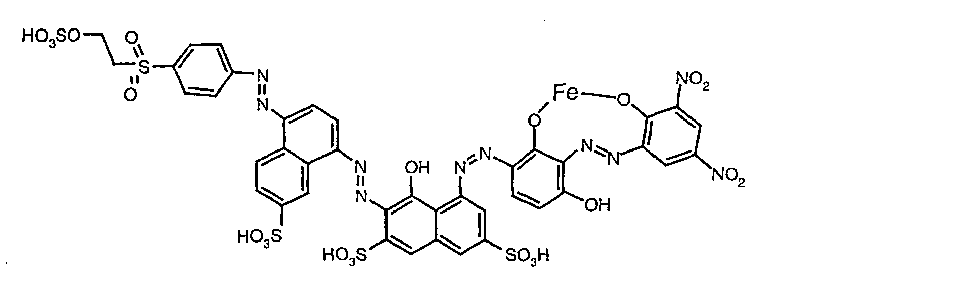

1) 1 mol H-Säure wurde in 25 gew.-%iger Natronlauge gelöst, mit überschüssigem Natriumnitrit und Salzsäure bei pH<1 und einer Temperatur von 0-5°C diazotiert. 1 mol Resorcin wurde in 50 gew.-%iger Natronlauge bei einem pH-Wert >12 gelöst. Zu dieser Lösung wurde die diazotierte H-Säure innerhalb von 30 min bei einer Temperatur von unter 10°C zugetropft, wobei man durch Zugabe von 10 gew.-%iger Natronlauge den pH-Wert oberhalb 9 hielt.
2) 1 mol 4,6-Dinitro-2-aminophenol wurde bei pH<1 und einer Temperatur von 0-5°C mit überschüssigem Natriumnitrit und Salzsäure diazotiert und zu der in Schritt 1) erhaltenen Reaktionsmischung gegeben. Der pH-Wert wurde durch Zugabe von 10 gew.-%iger Natronlauge zwischen 3 und 8 gehalten.
3) 1 mol Clevesäure-7 wurde in 25 gew.-%iger Natronlauge gelöst. Gleichzeitig wurde 1 mol Parabase im Eiswasser suspendiert und mit überschüssigem Natriumnitrit und Salzsäure bei pH<1 und einer Temperatur von 0-5°C diazotiert und anschließend zu der Clevesäure-7 Lösung gegeben, wobei der pH-Wert unter 2 gehalten wurde.
4) Die in Schritt 3) erhaltene Reaktionsmischung wurde mit überschüssigem Natriumnitrit und Salzsäure bei pH<1 und einer Temperatur von 0-5°C diazotiert. Zu dieser Reaktionsmischung gab man die in Schritt 2) erhaltenen Reaktionsmischung. Der pH-Wert wurde durch Zugabe von 10 gew.-%iger Natronlauge zwischen 3 und 8 gehalten. Nach beendeter Umsetzung wurde 0,40-0,60 mol Eisen(III)-sulfat zu der Reaktionsmischung gegeben und 1 Stunde nachgerührt. Der Farbstoff wurde durch Zugabe von NaCl ausgefällt und abgesaugt

In zu Beispiel 17a analoger Weise können die Metallkomplexe von Farbstoffen der allgemeinen Formel A-N=N-Napht¹-N=N-Napht²-N=N-Kk¹-N=N-Dk erhalten werden (= Farbstoffe der allgemeinen Formel V mit n = 1), worin Dk für einen von den Diazokomponenten DK1 bis DK9, DK13, DK14, DK26, DK27, DK39 bis DK41 oder DK58 abgeleiteten Rest steht, Napht¹ für einen der bivalenten Reste II-1, II-3, II-5, II-7, II-9, II-11, II-13, II-15 oder II-16 steht, Napht² für einen der bivalenten Reste II-2, II-4, II-6, II-8, II-10, II-12 oder II-14 steht, Kk¹ für einen von Kk2, Kk3, Kk49 oder Kk50 abgeleiteten bivalenten Rest steht und A einen der Reste A1 bis A6 bedeutet. Die Kupplung des Restes A-N=N-Napht¹-N=N- erfolgt in ortho-Position zur Hydroxygruppe in Napht².

### Beispiel 17b:

Die Umsetzung erfolgte nach der in Beispiel 17a beschriebenen Methode mit dem Unterschied, dass keine Umsetzung mit Eisensalzen folgte.

In zu Beispiel 17a analoger Weise können die Farbstoffe der allgemeinen Formel A-N=N-Napht¹-N=N-Napht²-N=N-Kk¹-N=N-Dk erhalten werden (= Farbstoffe der allgemeinen Formel V mit n = 1), worin Dk für einen von den Diazokomponenten DK1 bis DK83 oder für einen von A1 bis A6 abgeleiteten Rest steht, Napht¹ für einen der bivalenten Reste II-1, II-3, II-5, II-7, II-9, II-11, II-13, II-15 oder II-16 steht, Napht² für einen der bivalenten Reste II-2, II-4, II-6, II-8, II-10, II-12 oder II-14 steht, Kk¹ für einen von Kk2, Kk3, Kk5, Kk6, Kk14, Kk15, Kk16, Kk49 oder Kk50 abgeleiteten bivalenten Rest steht und A einen der Reste A1 bis A6 bedeutet. Die Kupplung des Restes A-N=N-Napht¹-N=N- erfolgt in ortho-Position zur Hydroxygruppe in Napht².

### Beispiel 18a:

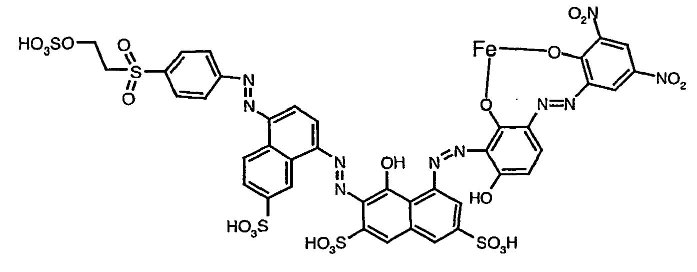

1) 1 mol 4,6-Dinitro-2-aminophenol wurde bei pH<1 und einer Temperatur von 0-5°C mit überschüssigem Natriumnitrit und Salzsäure diazotiert. 1 mol Resorcin wurde in 50 gew.-%iger Natronlauge bei einem pH-Wert >12 gelöst und zu dieser Lösung wurde das diazotierte 4,6-Dinitro-2-aminophenol innerhalb von 30 min bei einer Temperatur von unter 10°C zugetropft, wobei man durch Zugabe von 10 gew.-%iger Natronlauge den pH-Wert oberhalb 9 hielt.
2) 1 mol H-Säure wurde in 25 gew.-%iger Natronlauge gelöst, mit überschüssigem Natriumnitrit und Salzsäure bei pH<1 und einer Temperatur von 0-5°C diazotiert und zu der in Schritt 1) erhaltenen Reaktionsmischung gegeben. Der pH-Wert wurde durch Zugabe von 10 gew.-%iger Natronlauge zwischen 3 und 8 gehalten.
3) 1 mol Clevesäure-7 wurde in 25 gew.-%iger Natronlauge gelöst. Gleichzeitig wurde 1 mol Parabase im Eiswasser suspendiert und mit überschüssigem Natriumnitrit und Salzsäure bei pH<1 und einer Temperatur von 0-5°C diazotiert und anschließend zu der Clevesäure-7 Lösung gegeben, wobei der pH-Wert unter 2 gehalten wurde.
4) Die in Schritt 3) erhaltene Reaktionsmischung wurde mit überschüssigem Natriumnitrit und Salzsäure bei pH<1 und einer Temperatur von 0-5°C diazotiert. Zu dieser Reaktionsmischung gab man die in Schritt 2) erhaltenen Reaktionsmischung. Der pH-Wert wurde durch Zugabe von 10 gew.-%iger Natronlauge zwischen 3 und 8 gehalten. Nach beendeter Umsetzung wurde 0,40-0,60 mol Eisen(III)-sulfat zu der Reaktionsmischung gegeben und 1 Stunde nachgerührt. Der Farbstoff wurde durch Zugabe von NaCl ausgefällt und abgesaugt

In zu Beispiel 18a analoger Weise können die Metallkomplexe von Farbstoffen der allgemeinen Formel A-N=N-Napht¹-N=N-Napht²-N=N-Kk¹-N=N-Dk erhalten werden (= Farbstoffe der allgemeinen Formel V mit n = 1), worin Dk für einen von den Diazokomponenten DK1 bis DK9, DK13, DK14, DK26, DK27, DK39 bis DK41 oder DK58 abgeleiteten Rest steht, Napht¹ für einen der bivalenten Reste II-1, II-3, II-5, II-7, II-9, II-11, II-13, II-15 oder II-16 steht, Napht² für einen der bivalenten Reste II-2, II-4, II-6, II-8, II-10, II-12 oder II-14 steht, Kk¹ für einen von Kk2, Kk3, Kk49 oder Kk50 abgeleiteten bivalenten Rest steht und A einen der Reste A1 bis A6 bedeutet. Die Kupplung des Restes A-N=N-Napht¹-N=N- erfolgt in ortho-Position zur Hydroxygruppe in Napht².

### Beispiel 18b:

Die Umsetzung erfolgte nach der in Beispiel 18a beschriebenen Methode mit dem Unterschied, dass keine Umsetzung mit Eisensalzen folgte.

In zu Beispiel 18b analoger Weise können die Farbstoffe der allgemeinen Formel A-N=N-Napht¹-N=N-Napht²-N=N-Kk¹-N=N-Dk erhalten werden (= Farbstoffe der allgemeinen Formel V mit n = 1), worin Dk für einen von den Diazokomponenten DK1 bis DK83 oder für einen von A1 bis A6 abgeleiteten Rest steht, Napht¹ für einen der bivalenten Reste II-1, II-3, II-5, II-7, II-9, II-11, II-13, II-15 oder II-16 steht, Napht² für einen der bivalenten Reste II-2, II-4, II-6, 11-8, II-10, II-12 oder II-14 steht, Kk¹ für einen von Kk2, Kk3, Kk5, Kk6, Kk14, Kk15, Kk16, Kk49 oder Kk50 abgeleiteten bivalenten Rest steht und A einen der Reste A1 bis A6 bedeutet. Die Kupplung des Restes A-N=N-Napht¹-N=N- erfolgt in ortho-Position zur Hydroxygruppe in Napht².

### Beispiel 19:

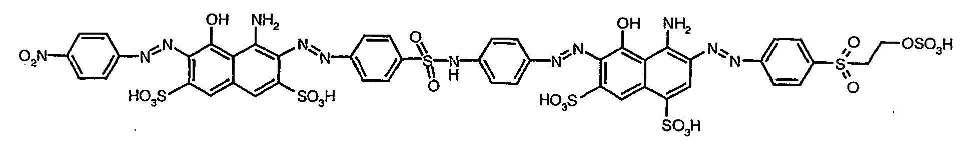

1) 1 mol 4,4-Diaminodiphenylsulfamid wurde mit überschüssigem Natriumnitrit und Salzsäure bei pH<1 und einer Temperatur von 0-5°C tetrazotiert. 1 mol H-Säure wurde in 25 gew.-%iger Natronlauge gelöst und zu der Reaktionsmischung des tetrazotierten 4,4-Diaminodiphenylsulfamids zugetropft. Der pH-Wert wurde unter 3 gehalten.
2) 1 mol p-Nitroanilin wurde in 21 gew.-%iger Salzsäure gelöst, danach mit überschüssigem Natriumnitrit bei pH<1 und einer Temperatur von 0-5°C diazotiert und zu der in Schritt 1) erhaltenen Reaktionsmischung gegeben. Der pH-Wert wurde durch Zugabe von 10 gew.-%iger Natronlauge zwischen 3 und 8 gehalten.
3) 1 mol Parabase wurde im Eiswasser suspendiert und mit überschüssigem Natriumnitrit und Salzsäure bei pH<1 und einer Temperatur von 0-5°C diazotiert. 1 mol K-Säure wurde in 25 gew.-%iger Natronlauge gelöst und zu der diazotierten Parabase gegeben. Der pH-Wert wurde unter 2 gehalten.
4) Das in Schritt 3) erhaltene Produkt wurde zu der in Schritt 2) erhaltenen Reaktionsmischung gegeben. Der pH-Wert wurde durch Zugabe von 10 gew.-%iger Natronlauge zwischen 3-8 gehalten. Nach beendeter Umsetzung wurde der Farbstoff durch Zugabe von NaCl ausgefällt und abgesaugt.

In zu Beispiel 19 analoger Weise können die Farbstoffe der allgemeinen Formel Dk¹-N=N-Napht¹-N=N-Tk¹-N=N-Napht²-N=N-Dk² bzw. deren Metallkomplexe erhalten werden (= Farbstoffe der allgemeinen Formel IV mit Kk¹ = Napth¹ und Kk² = Napth²), worin Dk¹ und Dk² jeweils für einen von den Diazokomponenten DK1 bis DK83 oder für einen von A1 bis A6 abgeleiteten Rest stehen, wobei wenigstens einer der Reste Dk¹ oder Dk² für einen Rest der Formel A steht, Napht¹ und Napht² jeweils für einen der bivalenten Reste II-2, II-4, II-6, II-8, II-10, II-12 oder II-14 stehen und Tk¹ für einen bivalenten, von Tk1 bis Tk20 abgeleiteten Rest steht. Die Kupplung der Reste Dk¹-N=N-erfolgt in ortho-Position zur Hydroxygruppe in Napht¹ und die Kupplung der Reste Dk²-N=N-erfolgt in ortho-Position zur Aminogruppe in Napht².

### Beispiel 20:

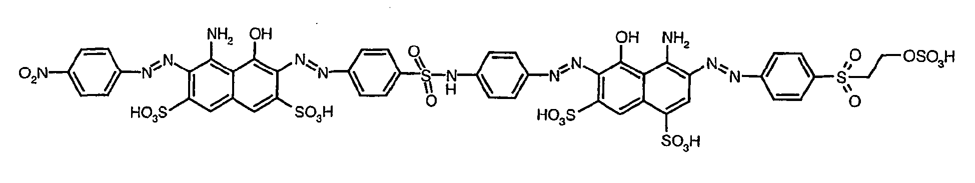

1) 1 mol p-Nitroanilin wurde in 21 gew.-%iger Salzsäure gelöst und danach mit überschüssigem Natriumnitrit bei pH<1 und einer Temperatur von 0-5°C diazotiert. Hierzu gab man 1-mol H-Säure, wobei der pH-Wert unter 2 gehalten wurde.
2) 1 mol 4,4-Diaminodiphenylsulfamid wurde mit überschüssigem Natriumnitrit und Salzsäure bei pH<1 und einer Temperatur von 0-5°C tetrazotiert und zu der in Schritt 1) erhaltenen Reaktionsmischung gegeben. Der pH-Wert wurde durch Zugabe von 10 gew.-%iger Natronlauge zwischen 3 und 8 gehalten.
3) 1 mol Parabase wurde in Eiswasser suspendiert und mit überschüssigem Natriumnitrit und Salzsäure bei pH<1 und einer Temperatur von 0-5°C diazotiert. 1 mol K-Säure wurde in 25 gew.-%iger Natronlauge gelöst und zu der Lösung des diazotierten Parabase gegeben. Der pH-Wert wurde unter 2 gehalten.
4) Die in Schritt 3) erhaltene Reaktionsmischung wurde in die in Schritt 2) erhaltenen Reaktionsmischung gegeben. Der pH-Wert wurde durch Zugabe von 10 gew.-%iger Natronlauge zwischen 3-8 gehalten. Nach beendeter Umsetzung wurde der Farbstoff durch Zugabe von NaCl ausgefällt und abgesaugt.

In zu Beispiel 20 analoger Weise können die Farbstoffe der allgemeinen Formel Dk¹-N=N-Napht¹-N=N-Tk¹-N=N-Napht²-N=N-Dk² bzw. deren Metallkomplexe erhalten werden (= Farbstoffe der allgemeinen Formel IV mit Kk¹ = Napth¹ und Kk² = Napth²), worin Dk¹ und Dk² jeweils für einen von den Diazokomponenten DK1 bis DK83 oder für einen von A1 bis A6 abgeleiteten Rest stehen, wobei wenigstens einer der Reste Dk¹ oder Dk² für einen Rest der Formel A steht, Napht¹ und Napht² jeweils für einen der bivalenten Reste II-2, II-4, II-6, II-8, II-10, II-12 oder II-14 stehen und Tk für einen bivalenten, von Tk1 bis Tk20 abgeleiteten Rest steht. Die Kopplung der Reste Dk¹-N=N- und Dk²-N=N- erfolgt jeweils in ortho-Position zur Aminogruppe in Napht¹ bzw. Napht².

### Beispiel 21a:

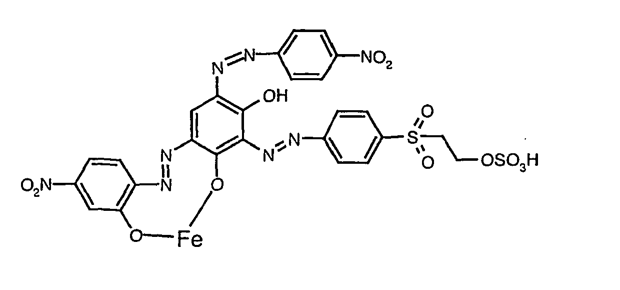

### Methode A:

1) 1 mol 4,6-Dinitro-2-aminophenol wurde bei pH<1 und einer Temperatur von 0-5°C mit überschüssigem Natriumnitrit und Salzsäure diazotiert. 1 mol Resorcin wurde in 50 gew.-%iger Natronlauge bei einem pH-Wert >12 gelöst und zu dieser Lösung wurde das diazotierte 4,6-Dinitro-2-aminophenol innerhalb von 30 min bei einer Temperatur > 10°C zugetropft, wobei man durch Zugabe von 10 gew.-%iger Natronlauge den pH-Wert oberhalb 9 hielt.
2) 1 mol Parabase wurde in Eiswasser suspendiert, mit überschüssigem Natriumnitrit und Salzsäure bei pH<1 und einer Temperatur von 0-5°C diazotiert und anschließend zu der in Schritt 1) erhaltenen Reaktionsmischung gegeben. Der pH-Wert wurde durch Zugabe von 10 gew.-%iger Natronlauge zwischen 3 und 8 gehalten.
3) 1 mol p-Nitroanilin wurde in 21 gew.-%iger Salzsäure gelöst, danach mit überschüssigem Natriumnitrit bei pH<1 und einer Temperatur von 0-5°C diazotiert und zu der in Schritt 2) erhaltenen Reaktionsmischung gegeben. Der pH-Wert wurde durch Zugabe von 10 gew.-%iger Natronlauge zwischen 3 und 8 gehalten. Nach beendeter Umsetzung wurde 0,40-0,60 mol Eisen(III)-sulfat zu der Reaktionsmischung gegeben und 1 h nachgerührt. Der Farbstoff wurde durch Zugabe von NaCl ausgefällt und abgesaugt.

### Methode B:

1) 1 mol p-Nitroanilin wurde in 21 gew.-%iger Salzsäure gelöst und danach mit überschüssigem Natriumnitrit bei pH<1 und einer Temperatur von 0-5°C diazotiert. 1 mol Resorcin wurde in 50 gew.-%iger Natronlauge bei einem pH-Wert >12 gelöst. Zu dieser Lösung wurde das diazotierte p-Nitroanilin innerhalb von 30 min bei einer Temperatur von unter 10°C zugetropft, wobei man durch Zugabe von 10 gew.-%iger Natronlauge den pH-Wert oberhalb 9 hielt.
2) 1 mol Parabase wurde in Eiswasser suspendiert, mit überschüssigem Natriumnitrit und Salzsäure bei pH<1 und einer Temperatur von 0-5°C diazotiert und anschließend zu der in Schritt 1) erhaltenen Reaktionsmischung gegeben. Der pH-Wert wurde durch Zugabe von 10 gew.-%iger Natronlauge zwischen 3-8 gehalten.
3) 1 mol 4,6-Dinitro-2-aminophenol wurde bei pH<1 und einer Temperatur von 0-5°C mit überschüssigem Natriumnitrit und Salzsäure diazotiert und zu der in Schritt 2) erhaltenen Reaktionsmischung gegeben. Der pH-Wert wurde durch Zugabe von 10 gew.-%iger Natronlauge zwischen 3 und 8 gehalten. Nach beendeter Umsetzung wurde 0,40-0,60 mol Eisen(III)-sulfat zu der Reaktionsmischung gegeben und 1 Stunde nachgerührt. Der Farbstoff wurde durch Zugabe von NaCl ausgefällt und abgesaugt.

### Beispiel 22a:

Die Umsetzung erfolgte nach der in Beispiel 21 beschriebenen Methode mit dem Unterschied, dass keine Umsetzung mit Eisensalzen folgte.

### Beispiel 23a:

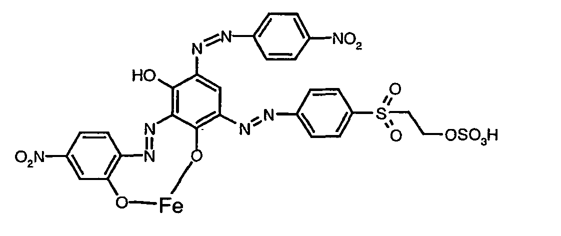

### Methode A:

1) 1 mol p-Nitroanilin wurde in 21 gew.-%iger Salzsäure gelöst, danach mit überschüssigem Natriumnitrit bei pH<1 und einer Temperatur von 0-5°C diazotiert. 1 mol Resorcin wurde in 50 gew.-%iger Natronlauge bei einem pH-Wert >12 gelöst. Zu dieser Lösung wurde das diazotierte p-Nitroanilin innerhalb von 30 min bei einer Temperatur von unter 10°C zugetropft, wobei man durch Zugabe von 10 gew.-%iger Natronlauge den pH-Wert oberhalb 9 hielt.
2) 1 mol 4,6-Dinitro-2-aminophenol wurde bei pH<1 und einer Temperatur von 0-5°C mit überschüssigem Natriumnitrit und Salzsäure diazotiert und anschließend zu der in Schritt 1) erhaltenen Reaktionsmischung gegeben. Der pH-Wert wurde durch Zugabe von 10 gew.-%iger Natronlauge zwischen 3 und 8 gehalten.
3) 1 mol Parabase wurde in Eiswasser suspendiert, mit überschüssigem Natriumnitrit und Salzsäure bei pH<1 und einer Temperatur von 0-5°C diazotiert und zu der in Schritt 2) erhaltenen Reaktionsmischung gegeben. Der pH-Wert wurde durch Zugabe von 10 gew.-%iger Natronlauge zwischen 3 und 8 gehalten. Nach beendeter Umsetzung wurde 0,40-0,60 mol Eisen(III)-sulfat zu der Reaktionsmischung gegeben und 1 Stunde nachgerührt. Der Farbstoff wurde durch Zugabe von NaCl ausgefällt und abgesaugt.

### Methode B:

1) 1 mol Parabase wurde im Eiswasser suspendiert, mit überschüssigem Natriumnitrit und Salzsäure bei pH<1 und einer Temperatur von 0-5°C diazotiert. 1 mol Resorcin wurde in 50 gew.-%iger Natronlauge gelöst. Zu dieser Lösung wurde das diazotierte Parabase innerhalb von 30 min bei einer Temperatur von unter 10°C zugetropft, wobei man durch Zugabe von 10 gew.-%iger Natronlauge den pH-Wert zwischen 6 und 7 hielt.
2) 1 mol 4,6-Dinitro-2-aminophenol wurde bei pH<1 und einer Temperatur von 0-5°C mit überschüssigem Natriumnitrit und Salzsäure diazotiert und anschließend zu der in Schritt 1) erhaltenen Reaktionsmischung gegeben. Der pH-Wert wurde durch Zugabe von 10 gew.-%iger Natronlauge zwischen 3 und 8 gehalten.
3) 1 mol p-Nitroanilin wurde in 21 gew.-%iger Salzsäure gelöst, danach mit überschüssigem Natriumnitrit bei pH<1 und einer Temperatur von 0-5°C diazotiert und zu der in Schritt 2) erhaltenen Reaktionsmischung gegeben. Der pH-Wert wurde durch Zugabe von 10 gew.-%iger Natronlauge zwischen 3-8 gehalten. Nach beendeter Umsetzung wurde 0,40-0,60 mol Eisen(III)-sulfat zu der Reaktionsmischung gegeben und 1 Stunde nachgerührt. Der Farbstoff wurde durch Zugabe von NaCl ausgefällt und abgesaugt.

### Beispiel 24a:

Die Umsetzung erfolgte nach den in Beispiel 23a beschriebenen Methoden mit dem Unterschied, dass keine Umsetzung mit Eisensalzen folgte.

In zu den Beispielen 21 a und 23a analoger Weise können die Metallkomplexe von Farbstoffen der allgemeinen Formel 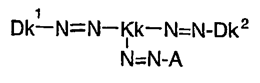 erhalten werden (= Farbstoffe der allgemeinen Formel I mit p = 0 und m = 2), worin Dk¹ und Dk² jeweils für einen von den Diazokomponenten DK1 bis DK83 abgeleiteten Rest stehen, wobei wenigstens einer der Reste Dk¹ oder Dk² für einen von den Diazokomponenten DK1 bis DK9, DK13, DK14, DK26, DK27, DK39 bis DK41 oder DK58 abgeleiteten Rest steht, Kk für einen von Kk2 oder Kk3 abgeleiteten trivalenten Rest steht und A einen der Reste A1 bis A6 bedeutet. Beispiele hierfür sind in Tabelle 5 angegeben.

**Tabelle 5**

| Beispiel Nr. | Dk¹ | Kk | Dk² | A | Me |
|---|---|---|---|---|---|
| 21a | DK1 | KK3 | DK17 | A1 | Fe |
| 21b | DK1 | KK3 | DK5 | A1 | Fe |
| 21c | DK1 | KK3 | DK10 | A1 | Fe |
| 21d | DK2 | KK3 | DK17 | A1 | Fe |
| 21e | DK4 | KK3 | DK17 | A1 | Cu |
| 21f | DK4 | KK3 | DK12 | A1 | Co |
| 21g | DK4 | KK3 | DK56 | A1 | Cr |
| 21h | DK5 | KK3 | DK9 | A1 | Fe |
| 21i | DK5 | KK3 | DK10 | A1 | Fe |
| 21j | DK5 | KK3 | DK12 | A1 | Fe |
| 21k | DK5 | KK3 | DK17 | A1 | Fe |
| 21l | DK5 | KK3 | DK19 | A1 | Fe |
| 21m | DK5 | KK3 | DK27 | A1 | Fe |
| 21n | DK5 | KK3 | DK28 | A1 | Fe |
| 21o | DK5 | KK3 | DK30 | A1 | Fe |
| 21p | DK5 | KK3 | DK32 | A1 | Fe |
| 21q | DK5 | KK3 | DK35 | A1 | Fe |
| 21r | DK5 | KK3 | DK41 | A1 | Fe |
| 21s | DK5 | KK3 | DK46 | A1 | Fe |
| 21t | DK5 | KK3 | DK47 | A1 | Fe |
| 21u | DK5 | KK3 | DK58 | A1 | Fe |
| 21v | DK5 | KK3 | DK12 | A4 | Fe |
| 21z | DK5 | KK3 | DK17 | A4 | Fe |
| 23a | DK1 | KK3 | DK17 | A1 | Fe |
| 23b | DK1 | KK3 | DK5 | A1 | Fe |
| 23c | DK1 | KK3 | DK10 | A1 | Fe |
| 23d | DK2 | KK3 | DK17 | A1 | Fe |
| 23e | DK4 | KK3 | DK17 | A1 | Cu |
| 23f | DK4 | KK3 | DK12 | A1 | Co |
| 23g | DK4 | KK3 | DK56 | A1 | Cr |
| 23h | DK5 | KK3 | DK9 | A1 | Fe |
| 23i | DK5 | KK3 | DK10 | A1 | Fe |
| 23j | DK5 | KK3 | DK12 | A1 | Fe |
| 23k | DK5 | KK3 | DK17 | A1 | Fe |
| 23l | DK5 | KK3 | DK19 | A1 | Fe |
| 23m | DK5 | KK3 | DK27 | A1 | Fe |
| 23n | DK5 | KK3 | DK28 | A1 | Fe |
| 23o | DK5 | KK3 | DK30 | A1 | Fe |
| 23p | DK5 | KK3 | DK32 | A1 | Fe |
| 23q | DK5 | KK3 | DK35 | A1 | Fe |
| 23r | DK5 | KK3 | DK41 | A1 | Fe |
| 23s | DK5 | KK3 | DK46 | A1 | Fe |
| 23t | DK5 | KK3 | DK47 | A1 | Fe |
| 23u | DK5 | KK3 | DK58 | A1 | Fe |
| 23v | DK5 | KK3 | DK12 | A4 | Fe |
| 23z | DK5 | KK3 | DK17 | A3 | Fe |

In zu den Beispielen 22a und 24a analoger Weise können die Farbstoffe der allgemeinen Formel 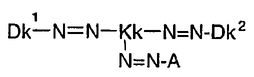 erhalten werden (= Farbstoffe der allgemeinen Formel I mit p = 0 und m = 2), worin Dk¹ und Dk² jeweils für einen von den Diazokomponenten DK1 bis DK83 abgeleiteten Rest stehen, Kk für einen von Kk2, Kk3 oder Kk5 abgeleiteten trivalenten Rest steht und A einen der Reste A1 bis A6 bedeutet. Beispiele hierfür sind in der Tabelle 6 angegeben.

**Tabelle 6:**

| Beispiel Nr. | Dk¹ | Kk | Dk² | A |
|---|---|---|---|---|
| 22a | DK1 | KK3 | DK17 | A1 |
| 22b | DK1 | KK3 | DK5 | A1 |
| 22c | DK1 | KK3 | DK10 | A1 |
| 22d | DK2 | KK3 | DK17 | A1 |
| 22e | DK4 | KK3 | DK17 | A1 |
| 22f | DK4 | KK3 | DK12 | A1 |
| 22g | DK4 | KK3 | DK56 | A1 |
| 22h | DK5 | KK3 | DK9 | A1 |
| 22i | DK5 | KK3 | DK10 | A1 |
| 22j | DK5 | KK3 | DK12 | A1 |
| 22k | DK5 | KK3 | DK17 | A1 |
| 22l | DK5 | KK3 | DK19 | A1 |
| 22m | DK5 | KK3 | DK27 | A1 |
| 22n | DK5 | KK3 | DK28 | A1 |
| 22o | DK5 | KK3 | DK30 | A1 |
| 22p | DK5 | KK3 | DK32 | A1 |
| 22q | DK5 | KK3 | DK35 | A1 |
| 22r | DK5 | KK3 | DK41 | A1 |
| 22s | DK5 | KK3 | DK46 | A1 |
| 22t | DK5 | KK3 | DK47 | A1 |
| 22u | DK5 | KK3 | DK58 | A1 |
| 22v | DK5 | KK3 | DK12 | A2 |
| 22z | DK5 | KK3 | DK17 | A4 |
| 24a | DK1 | KK3 | DK17 | A1 |
| 24b | DK1 | KK3 | DK5 | A1 |
| 24c | DK1 | KK3 | DK10 | A1 |
| 24d | DK2 | KK3 | DK17 | A1 |
| 24e | DK4 | KK3 | DK17 | A1 |
| 24f | DK4 | KK3 | DK12 | A1 |
| 24g | DK4 | KK3 | DK56 | A1 |
| 24h | DK5 | KK3 | DK9 | A1 |
| 24i | DK5 | KK3 | DK10 | A1 |
| 24j | DK5 | KK3 | DK12 | A1 |
| 24k | DK5 | KK3 | DK17 | A1 |
| 24l | DK5 | KK3 | DK19 | A1 |
| 24m | DK5 | KK3 | DK27 | A1 |
| 24n | DK5 | KK3 | DK28 | A1 |
| 24o | DK5 | KK3 | DK30 | A1 |
| 24p | DK5 | KK3 | DK32 | A1 |
| 24q | DK5 | KK3 | DK35 | A1 |
| 24r | DK5 | KK3 | DK41 | A1 |
| 24s | DK5 | KK3 | DK46 | A1 |
| 24t | DK5 | KK3 | DK47 | A1 |
| 24u | DK5 | KK3 | DK58 | A1 |

### Beispiel 25a:

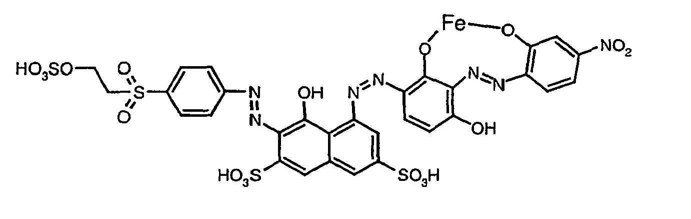

### Methode A:

1) 1 mol H-Säure wurde in 25 gew.-%iger Natronlauge gelöst, mit überschüssigem Natriumnitrit und Salzsäure bei pH<1 und einer Temperatur von 0-5°C diazotiert. 1 mol Resorcin wurde in 50 gew.-%iger Natronlauge bei einem pH-Wert >12 gelöst. Zu dieser Lösung wurde die diazotierte H-Säure innerhalb von 30 min bei einer Temperatur von unter 10°C zugetropft, wobei man durch Zugabe von 10 gew.-%iger Natronlauge den pH-Wert oberhalb 9 hielt.
2) 1 mol 5-Nitro-2-aminophenol wurde in Eiswasser suspendiert, danach mit überschüssigem Natriumnitrit bei pH<1 und einer Temperatur von 0-5°C diazotiert und anschließend zu der in Schritt 1) erhaltenen Reaktionsmischung gegeben. Der pH-Wert wurde durch Zugabe von 10 gew.-%iger Natronlauge zwischen 3 und 8 gehalten.
3) 1 mol Parabase wurde im Eiswasser suspendiert, mit überschüssigem Natriumnitrit und Salzsäure bei pH<1 und einer Temperatur von 0-5°C diazotiert und zu der in Schritt 2) erhaltenen Reaktionsmischung gegeben. Der pH-Wert wurde durch Zugabe von 10 gew.-%iger Natronlauge zwischen 3 und 8 gehalten. Nach beendeter Umsetzung wurde 0,40-0,60 mol Eisen(III)-sulfat zu der Reaktionsmischung gegeben und 1 Stunde nachgerührt. Der Farbstoff wurde durch Zugabe von NaCl ausgefällt und abgesaugt.

### Methode B:

1) 1 mol H-Säure wurde in 25 gew.-%iger Natronlauge gelöst und mit 1,1-1,5 mol Acetanhydrid acetyliert.
2) 1 mol Parabase wurde im Eiswasser suspendiert und bei pH<1 und einer Temperatur von 0-5°C mit überschüssigem Natriumnitrit und Salzsäure diazotiert und zu der in Schritt 1) erhaltenen Reaktionsmischung gegeben. Der pH-Wert wurde durch Zugabe von Natrumkarbonat zwischen 4 und 7 gehalten. Nach beendeter Kupplung wurde der pH-Wert durch Zugabe von 21 gew.%iger Salzsäure unter 1 gestellt und die Reaktionsmischung wurde auf 85-95°C erhitzt. Hierdurch wurde die Acetylgruppe abgespalten.
3) Das in Schritt 2) erhaltene Produkt wurde bei pH<1 und einer Temperatur von 0-5°C mit überschüssigem Natriumnitrit und Salzsäure diazotiert und zu einer wässrigen Lösung von 1 mol Resorcin gegeben. Der pH-Wert wurde durch Zugabe von 10 gew.-%iger Natronlauge zwischen 3 und 8 gehalten.
4) 1 mol 5-Nitro-2-aminophenol wurde in Eiswasser suspendiert, mit überschüssigem Natriumnitrit und Salzsäure bei pH<1 und einer Temperatur von 0-5°C diazotiert und zu der in Schritt 3) erhaltenen Reaktionsmischung gegeben. Der pH-Wert wurde durch Zugabe von 10 gew.-%iger Natronlauge zwischen 3 und 8 gehalten. Nach beendeter Umsetzung wurde 0,40-0,60 mol Eisen(III)-sulfat zu der Reaktionsmischung gegeben und 1 Stunde nachgerührt. Der Farbstoff wurde durch Zugabe von NaCl ausgefällt und abgesaugt.

### Beispiel 26a:

Die Umsetzung erfolgte nach den in Beispiel 25a beschriebenen Methoden mit dem Unterschied, dass keine Umsetzung mit Eisensalzen folgte.

### Beispiel 27:

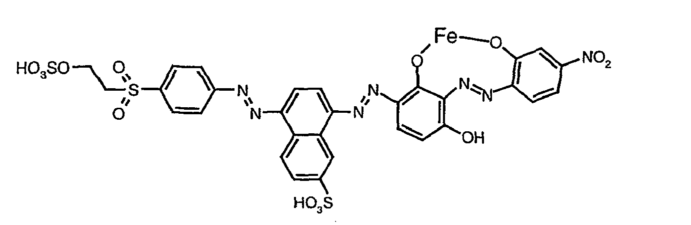

1) 1 mol Clevesäure-7 wurde in 25 gew.-%iger Natronlauge gelöst. Gleichzeitig wurde 1 mol Parabase im Eiswasser suspendiert und mit überschüssigem Natriumnitrit und Salzsäure bei pH<1 und einer Temperatur von 0-5°C diazotiert und anschließend zu der Lösung der Clevesäure-7 gegeben, wobei der pH-Wert unter 2 gehalten wurde.
2) Das in Schritt 1) erhaltene Produkt wurde mit überschüssigem Natriumnitrit und Salzsäure bei pH < 1 und einer Temperatur von 0-5°C diazotiert. Anschließend wurde das Reaktionsgemisch zu einer wässrigen Lösung von 1 mol Resorcin zugegeben. Der pH-Wert wurde durch Zugabe von 10 gew.-%iger Natronlauge zwischen 3 und 8 gehalten.
3) 1 mol 5-Nitro-2-aminophenol wurde in Eiswasser suspendiert, mit überschüssigem Natriumnitrit und Salzsäure bei pH<1 und einer Temperatur von 0-5°C diazotiert und zu der in Schritt 2) erhaltenen Reaktionsmischung gegeben. Der pH-Wert wurde durch Zugabe von 10 gew.-%iger Natronlauge zwischen 3 und 8 gehalten. Nach beendeter Umsetzung wurde 0,40-0,60 mol Eisen(III)-sulfat zu der Reaktionsmischung gegeben und 1 Stunde nachgerührt. Der Farbstoff wurde durch Zugabe von NaCl ausgefällt und abgesaugt.

### Beispiel 28:

Die Umsetzung erfolgte nach der in Beispiel 27 beschriebene Methode mit dem Unterschied, dass keine Umsetzung mit Eisensalzen folgte.

### Beispiel 29a:

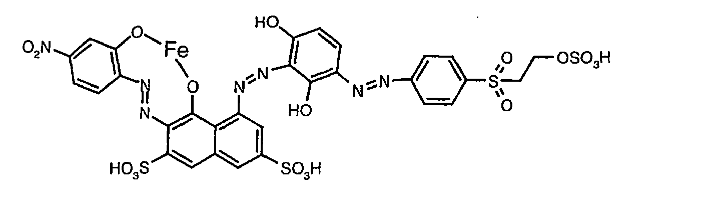

### Methode A:

1) 1 mol Parabase wurde in Eiswasser suspendiert, mit überschüssigem Natriumnitrit und Salzsäure bei pH<1 und einer Temperatur von 0-5°C diazotiert. 1 mol Resorcin wurde in 50 gew.-%iger Natronlauge gelöst. Zu dieser Lösung wurde die diazotierte Parabase innerhalb von 30 min bei einer Temperatur von unter 10°C zugetropft, wobei man durch Zugabe von 10 gew.-%iger Natronlauge den pH-Wert zwischen 6 und 8 hielt.
2) 1 mol H-Säure wurde in 25 gew.-%iger Natronlauge gelöst, mit überschüssigem Natriumnitrit und Salzsäure bei pH<1 und einer Temperatur von 0-5°C diazotiert und zu der in Schritt 1) erhaltenen Reaktionsmischung gegeben. Der pH-Wert wurde durch Zugabe von 10 gew.-%iger Natronlauge zwischen 3 und 8 gehalten.
3) 1 mol 5-Nitro-2-aminophenol wurde in Eiswasser suspendiert, danach mit überschüssigem Natriumnitrit bei pH<1 und einer Temperatur von 0-5°C diazotiert und anschließend zu der in Schritt 3) erhaltenen Reaktionsmischung gegeben. Der pH-Wert wurde durch Zugabe von 10 gew.-%iger Natronlauge zwischen 3 und 8 gehalten. Nach beendeter Umsetzung wurde 0,40-0,60 mol Eisen(III)-sulfat zu der Reaktionsmischung gegeben und 1 Stunde nachgerührt. Der Farbstoff wurde durch Zugabe von NaCl ausgefällt und abgesaugt.

### Methode B:

1) 1 mol Parabase wurde in Eiswasser suspendiert, mit überschüssigem Natriumnitrit und Salzsäure bei pH<1 und einer Temperatur von 0-5°C diazotiert. 1 mol Resorcin wurde in 50 gew.-%iger Natronlauge gelöst. Hierzu wurde die diazotierte Parabase innerhalb von 30 min bei einer Temperatur von unter 10°C zugetropft, wobei man durch Zugabe von 10 gew.-%iger Natronlauge den pH-Wert zwischen 6 und 8 hielt.
2) 1 mol H-Säure wurde in 25 gew.-%iger Natronlauge gelöst und mit 1,1-1,5 mol Acetanhydrid acetyliert.
3) 1 mol 5-Nitro-2-aminophenol wurde in Eiswasser suspendiert, danach mit überschüssigem Natriumnitrit bei pH<1 und einer Temperatur von 0-5°C diazotiert und zu der in Schritt 2) erhaltenen Reaktionsmischung gegeben. Der pH-Wert wurde durch Zugabe von Natrumkarbonat zwischen 4 und 7 gehalten. Nach beendeter Kupplung wurde der pH-Wert durch Zugabe von 21 gew.%iger Salzsäure unter 1 gestellt und die Reaktionsmischung wurde auf 85-95°C erhitzt, wobei die Acetylgruppe abgespalten wurde.
4) Das in Schritt 3) erhaltene Produkt wurde bei pH<1 und einer Temperatur von 0-5°C mit überschüssigem Natriumnitrit und Salzsäure diazotiert und zu der in Schritt 1) erhaltenen Reaktionsmischung gegeben. Der pH wurde durch Zugabe von 10 gew.-%iger Natronlauge zwischen 3-8 gehalten. Nach beendeter Umsetzung wurde 0,40-0,60 mol Eisen(III)-sulfat zu der Reaktionsmischung gegeben und 1 Stunde nachgerührt. Der Farbstoff wurde durch Zugabe von NaCl ausgefällt und abgesaugt.

### Beispiel 30a:

Die Umsetzung erfolgte nach den in Beispiel 29a beschriebenen Methoden mit dem Unterschied, dass keine Umsetzung mit Eisensalzen folgte.

### Beispiel 31:

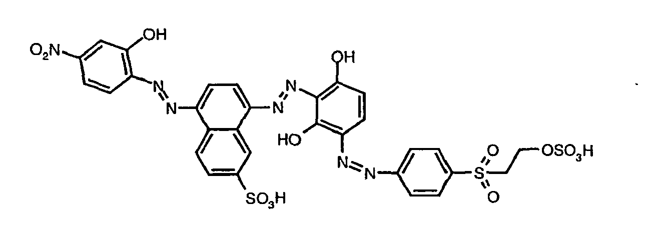

1) 1 Mol Parabase wurde in Eiswasser suspendiert, mit überschüssigem Natriumnitrit und Salzsäure bei pH<1 und einer Temperatur von 0-5°C diazotiert. 1 mol Resorcin wurde in 50 gew.-%iger Natronlauge gelöst. Hierzu wurde die diazotierte Parabase innerhalb von 30 min bei einer Temperatur von unter 10°C zugetropft, wobei man durch Zugabe von 10 gew.-%iger Natronlauge den pH-Wert zwischen 6 und 8 hielt.
2) 1 mol 5-Nitro-2-aminophenol wurde in Eiswasser suspendiert, mit überschüssigem Natriumnitrit und Salzsäure bei pH<1 und einer Temperatur von 0-5°C diazotiert und zu einer 25 gew.-%iger Natronlauge Lösung von 1 mol Clevesäure-7 zugegeben, wobei der pH-Wert unter 2 gehalten wurde.
3) Das in Schritt 2) erhaltene Produkt wurde mit überschüssigem Natriumnitrit und Salzsäure bei pH<1 und einer Temperatur von 0-5°C diazotiert und anschließend wurde zu der in Schritt 1) erhaltenen Reaktionsmischung gegeben. Der pH-Wert wurde durch Zugabe von 10 gew.-%iger Natronlauge zwischen 3-8 gehalten. Nach beendeter Umsetzung wurde der Farbstoff wurde durch Zugabe von NaCl ausgefällt und abgesaugt.

In zu den Beispielen 25a, 27 und 29a analoger Weise können die Metallkomplexe von Farbstoffen der allgemeinen Formel Dk¹-N=N-Napht¹-N=N-Kk¹-N=N-Dk² erhalten werden (= Farbstoffe der allgemeinen Formel I mit p = 1 und m = 1), worin Dk¹ und DK² entweder für einen von den Diazokomponenten DK1 bis DK9, DK13, DK14, DK26, DK27, DK39 bis DK41 oder DK58 oder für einen von A1 bis A6 abgeleiteten Rest stehen, wobei wenigstens einer der Reste Dk¹ oder Dk² für einen Rest der Formel A steht, Kk' für einen von Kk2 oder Kk3 abgeleiteten bivalenten Rest steht und Napht¹ ein bivalenter Rest der Formeln II-1, II-3, II-5, II-7, II-9, II-11, II-13, II-15 oder II-16 ist. Beispiele hierfür sind in der Tabelle 7 angegeben.

**Tabelle 7**

| Beispiel Nr. | Dk¹ | Napht | Kk | Dk² | Me |
|---|---|---|---|---|---|
| 25a | A1 | DK44 | Kk3 | DK1 | Fe |
| 25b | A1 | DK44 | Kk3 | DK4 | Cu |
| 25c | A1 | DK44 | Kk3 | DK5 | Fe |
| 25d | A4 | DK44 | Kk3 | DK5 | Fe |
| 25e | A1 | DK44 | Kk3 | DK40 | Fe |
| 25f | A1 | DK44 | Kk3 | DK58 | Cr |
| 25g | A1 | DK57 | Kk3 | DK5 | Fe |
| 25h | DK1 | DK44 | Kk3 | A1 | Fe |
| 25i | DK2 | DK44 | Kk3 | A1 | Fe |
| 25j | DK4 | DK44 | Kk3 | A1 | Fe |
| 25k | DK5 | DK44 | Kk3 | A1 | Fe |
| 25l | DK27 | DK44 | Kk3 | A1 | Fe |
| 25m | DK41 | DK44 | Kk3 | A1 | Fe |
| 25n | A4 | DK44 | Kk3 | DK5 | Fe |
| 25o | A4 | DK44 | Kk3 | DK40 | Fe |
| 29a | DK1 | DK44 | Kk3 | A1 | Fe |
| 29b | DK2 | DK44 | Kk3 | A1 | Fe |
| 29c | DK4 | DK44 | Kk3 | A1 | Fe |
| 29d | DK5 | DK44 | Kk3 | A1 | Fe |
| 29e | DK27 | DK44 | Kk3 | A1 | Fe |
| 29f | DK41 | DK44 | Kk3 | A1 | Fe |
| 29g | A1 | DK44 | Kk3 | DK1 | Fe |
| 29h | A1 | DK44 | Kk3 | DK4 | Cu |
| 29i | A1 | DK44 | Kk3 | DK5 | Fe |
| 29j | A2 | DK44 | Kk3 | DK5 | Fe |
| 29k | A1 | DK44 | Kk3 | DK40 | Fe |
| 29l | A1 | DK44 | Kk3 | DK58 | Cr |
| 29m | A1 | DK57 | Kk3 | DK5 | Fe |

In zu den Beispielen 26a, 28, 30a und 31 analoger Weise können die Farbstoffe der allgemeinen Formel Dk¹-N=N-Napht¹-N=N-Kk¹-N=N-Dk² erhalten werden (= Farbstoffe der allgemeinen Formel I mit p = 1 und m = 1), worin Dk¹ und DK² für einen von den Diazokomponenten DK1 bis DK83 oder für einen von A1 bis A6 abgeleiteten Rest stehen, wobei wenigstens einer der Reste Dk¹ oder Dk² für einen Rest der Formel A steht, Kk¹ für einen von Kk2, Kk3, Kk5, Kk49 oder Kk50 abgeleiteten bivalenten Rest steht und Napht¹ ein bivalenter Rest der Formeln II-1, II-3, II-5, II-7, II-9, II-11, II-13, II-15 oder II-16 ist. Beispiele hierfür sind in Tabelle 8 angegeben.

**Tabelle 8**

| Beispiel Nr. | Dk¹ | Napht | Kk | Dk² |
|---|---|---|---|---|
| 26a | A1 | DK44 | Kk3 | DK1 |
| 26b | A1 | DK44 | Kk3 | DK4 |
| 26c | A1 | DK44 | Kk3 | DK5 |
| 26d | A4 | DK44 | Kk3 | DK5 |
| 26e | A1 | DK44 | Kk3 | DK9 |
| 26f | A1 | DK44 | Kk3 | DK10 |
| 26g | A1 | DK44 | Kk3 | DK12 |
| 26h | A1 | DK44 | Kk3 | DK28 |
| 26i | A1 | DK44 | Kk3 | DK32 |
| 26j | A1 | DK44 | Kk3 | DK37 |
| 26k | A1 | DK44 | Kk3 | DK40 |
| 26l | A1 | DK44 | Kk3 | DK46 |
| 26m | A1 | DK44 | Kk3 | DK58 |
| 26n | A1 | DK57 | Kk3 | DK5 |
| 26o | DK1 | DK44 | Kk3 | A1 |
| 26p | DK2 | DK44 | Kk3 | A1 |
| 26q | DK4 | DK44 | Kk3 | A1 |
| 26r | DK5 | DK44 | Kk3 | A1 |
| 26s | DK8 | DK44 | Kk3 | A1 |
| 26t | DK10 | DK44 | Kk3 | A1 |
| 26u | DK12 | DK44 | Kk3 | A1 |
| 26v | DK17 | DK44 | Kk3 | A1 |
| 26z | DK27 | DK44 | Kk3 | A1 |
| 26aa | DK28 | DK44 | Kk3 | A1 |
| 26ab | DK32 | DK44 | Kk3 | A1 |
| 26ac | DK41 | DK44 | Kk3 | A1 |
| 26ad | DK46 | DK44 | Kk3 | A1 |
| 26ae | DK47 | DK44 | Kk3 | A1 |
| 26af | DK28 | DK44 | Kk3 | A4 |
| 26ag | DK32 | DK45 | Kk3 | A2 |
| 26ah | DK41 | DK45 | Kk3 | A4 |
| 26ai | DK46 | DK45 | Kk3 | A5 |
| 30a | DK1 | DK44 | Kk3 | A1 |
| 30b | A1 | DK44 | Kk3 | DK4 |
| 30c | A1 | DK44 | Kk3 | DK5 |
| 30d | A4 | DK44 | Kk3 | DK5 |
| 30e | A1 | DK44 | Kk3 | DK9 |
| 30f | A1 | DK44 | Kk3 | DK10 |
| 30g | A1 | DK44 | Kk3 | DK12 |
| 30h | A1 | DK44 | Kk3 | DK28 |
| 30i | A1 | DK44 | Kk3 | DK32 |
| 30j | A1 | DK44 | Kk3 | DK37 |
| 30k | A1 | DK44 | Kk3 | DK40 |
| 30l | A1 | DK44 | Kk3 | DK46 |
| 30m | A1 | DK44 | Kk3 | DK58 |
| 30n | A1 | DK57 | Kk3 | DK5 |
| 30o | A1 | DK44 | Kk3 | DK1 |
| 30p | DK2 | DK44 | Kk3 | A1 |
| 30q | DK4 | DK44 | Kk3 | A1 |
| 30r | DK5 | DK44 | Kk3 | A1 |
| 30s | DK8 | DK44 | Kk3 | A1 |
| 30t | DK10 | DK44 | Kk3 | A1 |
| 30u | DK12 | DK44 | Kk3 | A1 |
| 30v | DK17 | DK44 | Kk3 | A1 |
| 30z | DK27 | DK44 | Kk3 | A1 |
| 30aa | DK28 | DK44 | Kk3 | A1 |
| 30ab | DK32 | DK44 | Kk3 | A1 |
| 30ac | DK41 | DK44 | Kk3 | A1 |
| 30ad | DK46 | DK44 | Kk3 | A1 |
| 30ae | DK47 | DK44 | Kk3 | A1 |
| 30af | DK28 | DK44 | Kk3 | A2 |
| 30ag | DK32 | DK45 | Kk3 | A4 |
| 30ah | DK41 | DK45 | Kk3 | A4 |
| 30ai | DK46 | DK45 | Kk3 | A4 |

### Beispiel 32a:

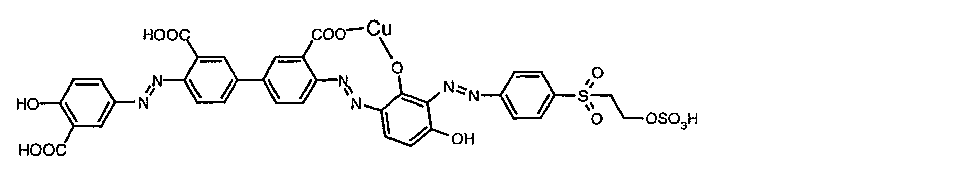

1) 1 mol 4,4'-Diaminobiphenyl-3,3'-Dicarbonsäure wurde mit überschüssigem Natriumnitrit und Salzsäure bei pH<1 und einer Temperatur von 0-5°C tetrazotiert und mit 1 mol Salycilsäure bei einem pH-Wert von 5 bis 11 umgesetzt.
2) 1 mol Resorcin wurde in 50 gew.-%iger Natronlauge bei einem pH-Wert >12 gelöst. Zu dieser Lösung wurde das in Schritt 1) erhaltene Reaktionsprodukt innerhalb von 30 min bei einer Temperatur von unter 10°C zugetropft, wobei man durch Zugabe von 10 gew.-%iger Natronlauge den pH-Wert oberhalb 9 hielt.
3) 1 Mol Parabase wurde in Eiswasser suspendiert, mit überschüssigem Natriumnitrit und Salzsäure bei pH<1 und einer Temperatur von 0-5°C diazotiert. Anschließend wurde der diazotierte Parabase zu der in Schritt 2) erhaltenen Reaktionsmischung gegeben, wobei man durch Zugabe von 10 gew.-%iger Natronlauge den pH-Wert zwischen 5 und 8 hielt. Nach beendeter Umsetzung wurde 1 mol Kupfer(II)-sulfat zu der Reaktionsmischung gegeben und 1 Stunde bei 70°C nachgerührt. Der Farbstoff wurde durch Zugabe von NaCl ausgefällt und abgesaugt.

### Beispiel 33a:

Die Umsetzung erfolgte nach der in Beispiel 32a beschriebenen Methode mit dem Unterschied, dass keine Umsetzung mit Kupfersalzen folgte.

### Beispiel 34:

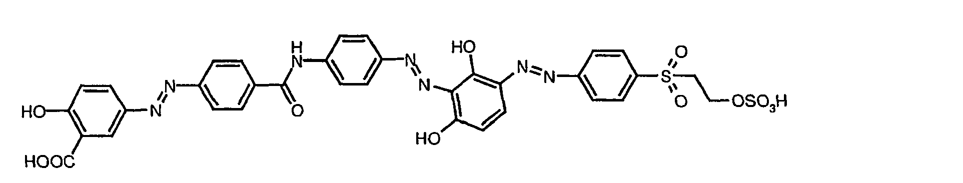

1) 1 mol 4,4-Diaminobenzanilid wurde mit überschüssigem Natriumnitrit und Salzsäure bei pH<1 und einer Temperatur von 0-5°C tetrazotiert und mit 1 mol Salycilsäure bei einem pH-Wert von 5-11 umgesetzt.
2) 1 Mol Parabase wurde in Eiswasser suspendiert, mit überschüssigem Natriumnitrit und Salzsäure bei pH<1 und einer Temperatur von 0-5°C diazotiert. 1 mol Resorcin wurde in 50 gew.-%iger Natronlauge gelöst. Hierzu wurde die diazotierte Parabase innerhalb von 30 min bei einer Temperatur von unter 10°C zugetropft, wobei man durch Zugabe von 10 gew.-%iger Natronlauge den pH-Wert zwischen 6 und 8 hielt.
3) Das in Schritt 2) erhaltene Produkt wurde zu der in Schritt 1) erhaltenen Reaktionsmischung gegeben, wobei man durch Zugabe von 10 gew.-%iger Natronlauge den pH-Wert zwischen 5 und 8 hielt. Nach beendeter Umsetzung wurde der Farbstoff durch Zugabe von NaCl ausgefällt und abgesaugt.

In zu den Beispielen 32a, 33a und 34 analoger Weise können die Farbstoffe der allgemeinen Formel Kk³-N=N-Tk¹-N=N-Kk¹-N=N-A und deren Metallkomplexe erhalten werden (= Farbstoffe der allgemeinen Formel VI), worin Kk³ für einen von den Kupplungskomponenten Kk1 bis Kk48 oder Kk51 bis Kk64 abgeleiteten Rest oder für Dk42 bis Dk83 steht, Tk¹ für einen von TK1 bis Tk20 abgeleiteten bivalenten Rest steht, Kk¹ für einen von Kk2, Kk3, Kk5, Kk49 oder Kk50 abgeleiteten bivalenten Rest steht und A einen der Reste A1 bis A6 bedeutet. Beispiele hierfür sind in Tabelle 9 angegeben.

**Tabelle 9:**

| Beispiel Nr. | Kk³ | Tk | Kk¹ | A | Me |
|---|---|---|---|---|---|
| 32a | Kk1 | Tk11 | Kk3 | A1 | Cu |
| 32b | Kk40 | Tk11 | Kk3 | A1 | Cu |
| 32c | Dk46 | Tk8 | Kk3 | A1 | Cu |
| 33a | DK44 | Tk16 | Kk3 | A1 | |
| 33b | DK44 | Tk18 | Kk3 | A1 | |
| 33c | Kk39 | Tk18 | Kk3 | A1 | |

### Beispiel 35a:

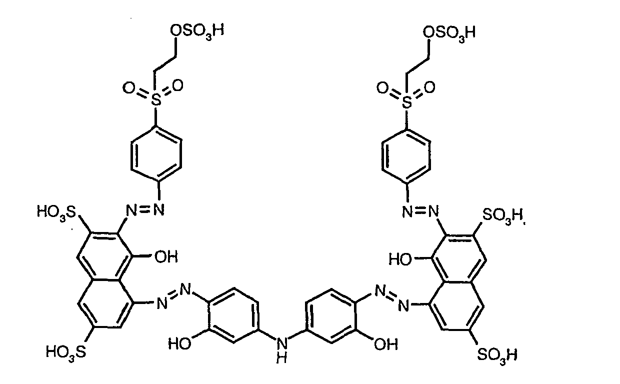

1) 2 mol H-Säure wurde in 25 gew.-%iger Natronlauge gelöst, mit überschüssigem Natriumnitrit und Salzsäure bei pH<1 und einer Temperatur von 0-5°C diazotiert und zu einer wässrigen Lösung von 1 mol 3,3'-Dihydroxydiphenylamin gegeben. Der pH-Wert wurde durch Zugabe von 10 gew.-%iger Natronlauge zwischen 3 und 10 gehalten.
2) 2 mol Parabase wurde in Eiswasser suspendiert, mit überschüssigem Natriumnitrit und Salzsäure bei pH<1 und einer Temperatur von 0-5°C diazotiert und zu der in Schritt 1) erhaltenen Reaktionsmischung gegeben. Der pH-Wert wurde durch Zugabe von 10 gew.-%iger Natronlauge zwischen 3-8 gehalten. Nach beendeter Umsetzung wurde der Farbstoff durch Zugabe von NaCl ausgefällt und abgesaugt.

In zu Beispiel 35a analoger Weise können die Farbstoffe der allgemeinen Formel Dk¹-N=N-P-N=N-Kk¹-N=N-R¹-N=N-Dk² und deren Metallkomplexe erhalten werden (Farbstoffe der allgemeinen Formel VII), worin Dk¹ und DK² für einen von den Diazokomponenten DK1 bis DK83 oder für einen von A1 bis A6 abgeleiteten Rest stehen, wobei wenigstens einer der Reste Dk¹ oder Dk² für einen Rest der Formel A steht, Kk¹ für einen von Kk2, Kk3, Kk5, Kk49 oder Kk50 abgeleiteten bivalenten Rest steht und P und R' jeweils für einen bivalenten Rest der Formeln II-1, II-3, II-5, II-7, II-9, II-11 und II-13 abgeleiteten zweiwertigen Rest stehen. Beispiele hierfür sind in Tabelle 10 angegeben.

**Tabelle 10:**

| Beispiel Nr. | Dk¹ | P | Kk¹ | R' | Dk² | Metall |
|---|---|---|---|---|---|---|
| 35a | A1 | DK44 | Kk50 | DK44 | A1 | |
| 35b | A1 | DK44 | Kk50 | DK44 | A1 | Cu |
| 35c | A1 | DK44 | Kk50 | DK44 | A1 | Co |
| 35d | A1 | DK44 | Kk49 | DK44 | A1 | Cu |
| 35e | A1 | DK44 | Kk49 | DK44 | A1 | Co |

### Beispiel 36a:

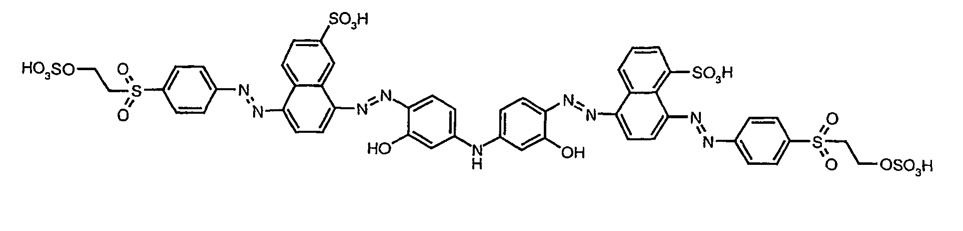

1) 1 mol Parabase wurde in Eiswasser suspendiert, mit überschüssigem Natriumnitrit und Salzsäure bei pH<1 und einer Temperatur von 0-5°C diazotiert und zu einer alkalischen Lösung von 1 mol Clevesäure-7 gegeben. Der pH-Wert wurde durch Zugabe von 10 gew.-%iger Natronlauge zwischen 3 und 8 gehalten.
2) 1 mol Parabase wurde in Eiswasser suspendiert, mit überschüssigem Natriumnitrit und Salzsäure bei pH<1 und einer Temperatur von 0-5°C diazotiert und zu einer alkalischen Lösung von 1 mol 8-Aminonaphthalin-1-sulfonsäure (Dk56) gegeben. Der pH-Wert wurde durch Zugabe von 10 gew.-%iger Natronlauge zwischen 3 und 8 gehalten.
3) Das in Schritt 1) erhaltene Produkt wurde bei pH<1 und einer Temperatur von 0-5°C mit überschüssigem Natriumnitrit und Salzsäure diazotiert und innerhalb von 30 Minuten zu einer alkalischen Lösung von 1 mol 3,3'-Dihydroxydiphenylamin gegeben. Der pH-Wert wurde durch Zugabe von 10 gew.-%iger Natronlauge zwischen 3 und 8 gehalten.
4) Das in Schritt 2) erhaltene Produkt wurde bei pH<1 und einer Temperatur von 0-5°C mit überschüssigem Natriumnitrit und Salzsäure diazotiert und zu der in Schritt 3) erhaltenen Reaktionsmischung gegeben, wobei man durch Zugabe von 10 gew.-%iger Natronlauge den pH-Wert zwischen 5 und 8 hielt. Nach beendeter Umsetzung wurde der Farbstoff durch Zugabe von NaCl ausgefällt und abgesaugt.

In zu Beispiel 36a analoger Weise können die Farbstoffe der allgemeinen Formel Dk¹-N=N-P-N=N-Kk¹-N=N-R¹-N=N-Dk² und deren Metallkomplexe erhalten werden (Farbstoffe der allgemeinen Formel VII), worin Dk¹ und DK² für einen von den Diazokomponenten DK1 bis DK83 oder für einen von A1 bis A6 abgeleiteten Rest stehen, wobei wenigstens einer der Reste Dk¹ oder Dk² für einen Rest der Formel A steht, Kk für einen von Kk2, Kk3, Kk5, Kk49 oder Kk50 abgeleiteten bivalenten Rest steht und P und R' jeweils für einen bivalenten Rest der Formeln II-15 oder II-16 oder für einen von den Diazokomponenten DK3, DK4, DK6, DK7, DK11, DK13, DK14, DK15, DK18, DK22 bis DK27, DK29, DK30, DK33, DK36, DK38, oder DK39 abgeleiteten zweiwertigen Rest stehen. Beispiele hierfür sind in Tabelle 10 angegeben.

**Tabelle 11:**

| Beispiel Nr. | Dk¹ | P | Kk¹ | R' | Dk² | Metall |
|---|---|---|---|---|---|---|
| 36a | A1 | DK46 | Kk50 | DK56 | A1 | |
| 36b | A1 | DK4 | Kk49 | DK46 | A1 | Cu |
| 36c | A1 | DK4 | Kk49 | DK46 | A1 | Co |
| 36d | A1 | DK4 | Kk50 | DK46 | A1 | Cu |

### Beispiel 37:

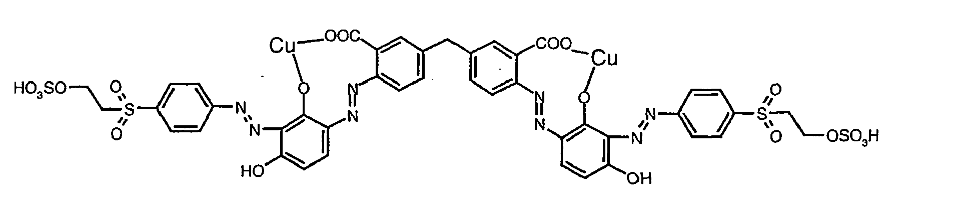

1) 2 mol Anthranilsäure wurde in Schwefelsäure (96%) bei einer Temperatur von 70-80°C gelöst und mit 0,5-0,6 mol Formaldehyd umgesetzt. Nach 2 Stunden bei 70-80°C wurde die Reaktionsmischung durch Zugabe von Eis auf etwa 0°C gekühlt und das erhaltene Produkt mit überschüssigem Natriumnitrit und Salzsäure bei pH<1 und einer Temperatur von 0-5°C tetrazotiert. 1,8-2,2 mol Resorcin wurde in 50 gew.-%iger Natronlauge bei einem pH-Wert > 12 gelöst und zu dieser Lösung wurde die tetrazotierte Verbindung innerhalb von 30 Minuten bei einer Temperatur von unter 5°C zugetropft, wobei man durch Zugabe von 10 gew.-%iger Natronlauge den pH-Wert oberhalb 8 hielt.
2) 2 mol Parabase wurde in Eiswasser suspendiert, mit überschüssigem Natriumnitrit und Salzsäure bei pH<1 und einer Temperatur von 0-5°C diazotiert und zu der in Schritt 1) erhaltenen Reaktionsmischung gegeben. Der pH-Wert wurde durch Zugabe von 10 gew.-%iger Natronlauge zwischen 3 und 8 gehalten. Nach beendeter Umsetzung wurde die Reaktionslösung auf 80°C erwärmt und 2 mol CuSO₄ zugegeben. Anschließend wurde die erhaltene Reaktionsmischung eingedampft wobei man den komplexierten Farbstoff erhielt.

### Beispiel 38:

Die Umsetzung erfolgte nach der in Beispiel 37 beschriebenen Methode mit dem Unterschied, dass keine Umsetzung mit Kupfersalzen folgte.

### Beispiel 39:

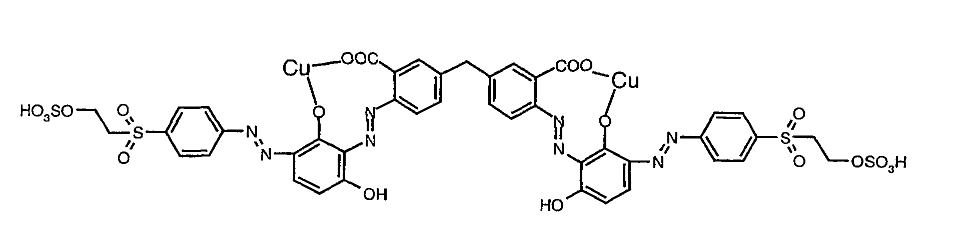

1) 2 mol Anthranilsäure wurde in Schwefelsäure (96%) bei einer Temperatur von 70-80°C gelöst und mit 0,5-0,6 mol Formaldehyd umgesetzt. Nach 2 Stunden bei 70-80°C wurde die Reaktionsmischung durch Zugabe von Eis auf etwa 0°C gekühlt und das erhaltene Produkt mit überschüssigem Natriumnitrit und Salzsäure bei pH<1 und einer Temperatur von 0-5°C tetrazotiert.
2) 2 mol Parabase wurde im Eiswasser suspendiert, mit überschüssigem Natriumnitrit und Salzsäure bei pH<1 und einer Temperatur von 0-5°C diazotiert. 2 mol Resorcin wurde in 50 gew.-%iger Natronlauge gelöst. Hierzu tropfte man das diazotierte Parabase innerhalb von 30 min bei einer Temperatur von unter 10C, wobei man durch Zugabe von 10 gew.-%iger Natronlauge den pH-Wert zwischen 6 und 8 hielt.
3) Die in Schritt 1) erhaltene Reaktionsmischung wurde in die in Schritt 2) erhaltenen Reaktionsmischung gegeben. Der pH-Wert wurde durch Zugabe von 10 gew.-%iger Natronlauge zwischen 3 und 8 gehalten. Nach beendeter Umsetzung wurde die Reaktionslösung auf 80°C erwärmt und man gab 2 mol CuSO₄ zu. Anschließend wurde die erhaltene Reaktionsmischung zur Trockne eingeengt, wobei man den komplexierten Farbstoff erhielt.

### Beispiel 40:

Die Umsetzung erfolgte nach der in Beispiel 39 beschriebenen Methode mit dem Unterschied, dass keine Umsetzung mit Kupfersalzen folgte.

In zu den Beispielen 37 und 39 analoger Weise können die Metallkomplexe der Farbstoffe der allgemeinen Formel Dk¹-N=N-Kk¹-N=N-Tk¹-N=N-Kk²-N=N-Dk² erhalten werden (Farbstoffe der allgemeinen Formel IV), worin Dk¹ und DK² für einen von den Diazokomponenten DK1 bis DK83 oder für einen von A1 bis A6 abgeleiteten Rest stehen, wobei wenigstens einer der Reste Dk¹ oder Dk² für einen Rest der Formel A steht, Tk¹ für einen von Tk3, Tk4, Tk8 bis Tk11, Tk14, Tk16 oder Tk19 abgeleiteten bivalenten Rest steht, und Kk¹ sowie Kk² unabhängig voneinander für einen von Kk2, Kk3, Kk5, Kk49 oder Kk50 abgeleiteten bivalenten Rest oder für einen bivalenten Rest der Formeln II-2, II-4, II-6, II-8, II-10, II-12 oder II-14 stehen.

In zu den Beispielen 38 und 40 analoger Weise können die Farbstoffe der allgemeinen Formel Dk¹-N=N-Kk¹-N=N-Tk¹-N=N-Kk²-N=N-Dk² erhalten werden (Farbstoffe der allgemeinen Formel IV), worin Dk¹ und DK² für einen von den Diazokomponenten DK1 bis DK83 oder für einen von A1 bis A6 abgeleiteten Rest stehen, wobei wenigstens einer der Reste Dk¹ oder Dk² für einen Rest der Formel A, Tk¹ für einen von Tk1 bis Tk20 abgeleiteten bivalenten Rest steht, und Kk¹ sowie Kk² unabhängig voneinander für einen von Kk2, Kk3, Kk5, Kk49 oder Kk50 abgeleiteten bivalenten Rest oder für einen bivalenten Rest der Formeln II-2, II-4, II-6, II-8, II-10, II-12 oder II-14 stehen.

Färbevorschriften:
Alle Angaben in Teilen sind als Gewichtsteile zu verstehen.

Die Fixierausbeute wurde qualitativ mittels HPLC- und quantitativ mittels UV-VISspektroskopische Untersuchung der Färbeflotte bestimmt. Hierzug werden 5 ml Proben nach der Färbung (pH <7), nach 60 min, 120 min, 180 min Fixierung (pH>7) und von jede Waschwasserflotte genommen und mit 1 ml Ameisensäurelösung auf pH 3-4 gestellt. Die Proben wurden mittels HPLC auf Farbstoff und seine Hydrolyseprodukte hin untersucht. Die Untersuchung erfolgte an HPLC Säulen Nucleodur C18 Gravity 3µ, CC70/2 und Hypersil 120-5 ODS, CC100/2 von der Firma Macherey-Nagel. Als Eluenten dienten Acetonitril / Puffer (1,6 g Tetrabutyammoniumhydrogensulfat, 6 g Dikaliumhydrogenphosphat - trihydrat in 1 L Wasser).

Die Bestimmung der Echtheiten erfolgte nach den folgenden, international anerkannten Normen:
Schweißechtheit: in Anlehnung an Veslic C4260
Waschechtheit: in Anlehnung an DIN EN ISO 15703
Migrationsechtheit: in Anlehnung an DIN EN ISO 15701, sowie durch 16 h Lagern bei 85 °C in einer Feuchte von 95 % unter ansonsten analogen Bedingungen zu DIN EN ISO 15701
Reibechtheit: in Anlehnung an DIN EN ISO 105 - X12 (Crockmeter, Reibung mit Baumwollgewebe) sowie in Anlehnung an DIN EN ISO 11640 (Veslic, Reibung mit Filz)

Färbevorschrift 1:
a) Ein Lederstück von 100 Gewichtsteilen eines auf übliche Weise organisch gegerbten Rindsleders der Falzstärke 1,1 mm wurde in einem mit 200 Teilen Wasser gefüllten Wackerfass 20 Minuten bei 30°C gewaschen. Danach wurde mit 150 Teilen Wasser, 2 Teilen eines Dispergiermittels und 5 Teilen Farbstoff aus Beispiel 2d 60 Minuten bei pH 4,4 und 30°C gefärbt. Durch portionsweise Zugabe von 100 Teilen 15%-ige Sodalösung wurde bei 40°C der pH-Wert zwischen 10,0 und 10,2 zur Fixierung des Farbstoffs 60 Minuten lang unter Walken gehalten. Anschließend folgte 6 mal eine 10 minütige Waschoperation in 200 Teilen Wasser bei 40°C. Durch Zugabe von 200 Teilen Wasser und 0,7 Teilen Ameisensäure wurde ein pH von 4,7 eingestellt.
b) Das derart gefärbte Leder wurde in einer frisch angesetzten Flotte aus 100 Teilen Wasser, 2 Teilen Polymergerbstoff und 2 Teilen eines naturbasierten Fettlickers 30 Minuten bei 35°C nachgegerbt. Anschließend gab man zur Flotte 15 Teile eines flüssigen, synthetischen Gerbstoffs, 6 Teile Polymergerbstoff, 10 Teile Tara (Vegetabilgerbstoff) und walkte 120 Minuten. Anschließend wurde das Leder in der gleichen Flotte mit 8 Teilen eines fischölbasierten Fettlickers sowie 2 Teilen eines lecitinbasierten Fettlickers durch 2 stündiges Walken bei 35 °C gefettet. Schließlich säuerte man mit 2 Teilen konzentrierter Ameisensäure auf pH 3,6 ab und walkte zweimal 10 Minuten und einmal 30 Minuten. Das gefärbte, nachgegerbte und gefettete Leder wurde noch mit 15°C kalten Wasser 10 Minuten gespült und anschließend ausgereckt, über Nacht bei Raumtemperatur hängegetrocknet, konditioniert, gestollt und gespannt.

Es wurde eine farbtiefes dunkelgrünes Leder erhalten, das über hervorragende Wasch- , Schweiß-, Reib- und Migrationsechtheit verfügt.

Färbevorschrift 2 :
a) Ein Lederstück von 100 Gewichtsteilen eines auf übliche Weise organisch gegerbten Rindsleders der Falzstärke 1,1 mm wurde in einem mit 200 Teilen Wasser gefüllten Wackerfass 20 Minuten bei 30°C gewaschen. Danach wurde mit 150 Teilen Wasser, 2 Teilen eines Dispergiermittels und 5 Teilen Farbstoff aus Beispiel 2a 60 Minuten bei pH 4,4 und 30°C gefärbt. Durch portionsweise Zugabe von 15 Teilen festem Soda wurde bei 40°C der pH-Wert bei 10,0 zur Fixierung des Farbstoffs 60 Minuten lang unter Walken gehalten. Anschließend folgte 4 mal eine 10 minütige Waschoperation in 200 Teilen Wasser bei 40°C. Durch Zugabe von 200 Teilen Wasser und 0,7 Teilen Ameisensäure wurde ein pH von 4,7 eingestellt. Anschließend wurde wie in Färbevorschrift 1 unter b) beschrieben fortgefahren.

Es wurde eine brillantes tiefschwarzes Leder erhalten, das über hervorragende Wasch-, Schweiß-, Reib- und Migrationsechtheit verfügt.

Färbevorschrift 3:
a) Ein Lederstück von 100 Gewichtsteilen eines auf übliche Weise organisch gegerbten Rindsleders der Falzstärke 1,1 mm wurde in einem mit 200 Teilen Wasser gefüllten Wackerfass 20 Minuten bei 30°C gewaschen. Danach wurde mit 150 Teilen Wasser, 2 Teilen eines Dispergiermittels und 5 Teilen Farbstoff aus Beispiel 13 60 Minuten bei pH 4,4 und 30°C gefärbt. Durch portionsweise Zugabe von 100 Teilen 15-%ige Sodalösung wurde bei 50°C der pH-Wert bei 10,0 zur Fixierung des Farbstoffs 60 Minuten lang unter Walken gehalten. Anschließend folgte 4 mal eine 10 minütige Waschoperation in 200 Teilen Wasser bei 40°C. Durch Zugabe von 200 Teilen Wasser und 0,7 Teilen Ameisensäure wurde ein pH von 4,7 eingestellt. Anschließend wurde wie in Färbevorschrift 1 unter b) beschrieben fortgefahren.

Es wurde eine brillantes farbtiefes rotes Leder erhalten, das über hervorragende Wasch-, Schweiß-, Reib- und Migrationsechtheit verfügt.

Färbevorschrift 4:
Ein Lederstück von 100 Gewichtsteilen eines auf übliche Weise organisch gegerbten Rindsleders der Falzstärke 1,1 mm wurde in einem mit 200 Teilen Wasser gefüllten Wackerfass 20 Minuten bei 30°C gewaschen. Danach wurde mit 150 Teilen Wasser, 2 Teilen eines Dispergiermittels und 5 Teilen Farbstoff aus Beispiel 6g 60 Minuten bei pH 4,4 und 30°C gefärbt. Durch portionsweise Zugabe von 100 Teilen 15-%ige Sodalösung wurde bei 40°C der pH-Wert bei 10,0 zur Fixierung des Farbstoffs 90 Minuten lang unter Walken gehalten. Anschließend folgte 3 mal eine 10 minütige Waschoperation in 200 Teilen Wasser bei 40°C. Durch Zugabe von 200 Teilen Wasser und 0,7 Teilen Ameisensäure wurde ein pH von 4,7 eingestellt. Anschließend wurde wie in Färbevorschrift 1 unter b) beschrieben fortgefahren.

Es wurde eine brillantes tiefschwarzes Leder erhalten, das über hervorragende Wasch- , Schweiß-, Reib- und Migrationsechtheit verfügt.

Färbevorschrift 5:
Ein Lederstück von 100 Gewichtsteilen eines auf übliche Weise organisch gegerbten Rindsleders der Falzstärke 1,1 mm wurde in einem mit 200 Teilen Wasser gefüllten Wackerfass 20 Minuten bei 30°C gewaschen. Danach wurde mit 150 Teilen Wasser, 2 Teilen eines Dispergiermittels und 5 Teilen Farbstoff aus Beispiel 2bg 60 Minuten bei pH 4,4 und 30°C gefärbt. Durch portionsweise Zugabe von 100 Teilen 15-%ige Sodalösung wurde bei 40°C der pH-Wert bei 10,0 zur Fixierung des Farbstoffs 60 Minuten lang unter Walken gehalten. Gleichzeitig mit der Sodalösungzugabe wurde in 3 Portionen insgesamt 15 Teile Glaubersalz zugesetzt. Anschließend folgte 5 mal eine 10 minütige Waschoperation in 200 Teilen Wasser bei 40°C. Durch Zugabe von 200 Teilen Wasser und 0,7 Teilen Ameisensäure wurde ein pH von 4,7 eingestellt. Anschließend wurde wie in Färbevorschrift 1 unter b) beschrieben fortgefahren.

Es wurde eine brillantes tiefschwarzes Leder erhalten, das über hervorragende Wasch- , Schweiß-, Reib- und Migrationsechtheit verfügt.

### Färbevorschrift 6:

Ein Lederstück von 100 Gewichtsteilen eines auf übliche Weise organisch gegerbten Rindsleders der Falzstärke 1,0 mm wurde in einem mit 200 Teilen Wasser gefüllten Wackerfass 20 Minuten bei 30°C gewaschen. Danach wurde mit 150 Teilen Wasser, 2 Teilen eines Dispergiermittels und 5 Teilen Farbstoff aus Beispiel 2m 60 Minuten bei pH 4,1 und 30°C gefärbt. Durch portionsweise Zugabe von 100 Teilen eines Borax-Puffers wurde bei 40°C der pH im Bereich 7,9 und 9,0 zur Fixierung des Farbstoffs 180 Minuten lang unter Walken gehalten. Anschließend folgte 5 mal eine 10 minütige Waschoperation in 200 Teilen Wasser bei 40°C. Durch Zugabe von 200 Teilen Wasser und 0,6 Teilen Ameisensäure wurde ein pH von 4,3 eingestellt. Anschließend wurde wie in Färbevorschrift 1 unter b) beschrieben fortgefahren.

Es wurde eine brillantes tiefschwarzes Leder erhalten, das über hervorragende Wasch- , Schweiß-, Reib- und Migrationsechtheit verfügt.

Färbevorschrift 7:
Ein Lederstück von 100 Gewichtsteilen eines auf übliche Weise organisch gegerbten Rindsleders der Falzstärke 1,0 mm wurde in einem mit 200 Teilen Wasser gefüllten Wackerfass 20 Minuten bei 30°C gewaschen. Danach wurde mit 150 Teilen Wasser, 2 Teilen eines Dispergiermittels und 5 Teilen Farbstoff aus Beispiel 2n 60 Minuten bei pH 4,1 und 30°C gefärbt. Durch einmalige Zugabe von 30 Teilen einer 15%-igen Sodalösung wurde bei 40°C der pH im Bereich 9,4 - 9,9 zur Fixierung des Farbstoffs 180 Minuten lang unter Walken gehalten. Anschließend folgte 3 mal eine 10 minütige Waschoperation in 200 Teilen Wasser bei 40°C. Durch Zugabe von 200 Teilen Wasser und 0,7 Teilen Ameisensäure wurde ein pH von 4,5 eingestellt. Anschließend wurde wie in Färbevorschrift 1 unter b) beschrieben fortgefahren.

Es wurde eine brillantes tiefschwarzes Leder erhalten, das über hervorragende Wasch- , Schweiß-, Reib- und Migrationsechtheit verfügt.

Färbevorschrift 8:
Ein Lederstück von 100 Gewichtsteilen eines auf übliche Weise organisch gegerbten Rindsleders der Falzstärke 1,0 mm wurde in einem mit 200 Teilen Wasser gefüllten Wackerfass 20 Minuten bei 30°C gewaschen. Danach wurde mit 150 Teilen Wasser, 2 Teilen eines Dispergiermittels und 5 Teilen Farbstoff aus Beispiel 2b 60 Minuten bei pH 4,1 und 30°C gefärbt. Durch portionsweise Zugabe von 100 Teilen eines Borax-Puffers wurde bei 40°C der pH im Bereich 8,0 und 9,0 zur Fixierung des Farbstoffs 180 Minuten lang unter Walken gehalten. Anschließend folgte 3 mal eine 10 minütige Waschoperation in 200 Teilen Wasser bei 40°C. Durch Zugabe von 200 Teilen Wasser und 0,7 Teilen Ameisensäure wurde ein pH von 4,5 eingestellt. Anschließend wurde wie in Färbevorschrift 1 unter b) beschrieben fortgefahren.

Es wurde ein tiefschwarzes Leder erhalten, das über hervorragende Wasch-, Schweiß- , Reib- und Migrationsechtheit verfügt.

Färbevorschrift 9:
Ein Lederstück von 100 Gewichtsteilen eines auf übliche Weise organisch gegerbten Rindsleders der Falzstärke 1,0 mm wurde in einem mit 200 Teilen Wasser gefüllten Wackerfass 20 Minuten bei 30°C gewaschen. Danach wurde mit 150 Teilen Wasser, 2 Teilen eines Dispergiermittels und 5 Teilen Farbstoff aus Beispiel 2k 30 Minuten bei pH 4,2 und 30°C gefärbt. Durch einmalige Zugabe von 30 Teilen einer 15%-igen Sodalösung wurde bei 40°C der pH im Bereich 9,4 - 9,9 zur Fixierung des Farbstoffs 180 Minuten lang unter Walken gehalten. Anschließend folgte 3 mal eine 10 minütige Waschoperation in 200 Teilen Wasser bei 40°C. Durch Zugabe von 200 Teilen Wasser und 0,7 Teilen Ameisensäure wurde ein pH von 4,8 eingestellt. Anschließend wurde wie in Färbevorschrift 1 unter b) beschrieben fortgefahren.

Es wurde ein tiefschwarzes Leder erhalten, das über hervorragende Wasch-, Schweiß- , Reib- und Migrationsechtheit verfügt.

Färbevorschrift 10:
Ein Lederstück von 100 Gewichtsteilen eines auf übliche Weise organisch gegerbten Rindsleders der Falzstärke 1,0 mm wurde in einem mit 200 Teilen Wasser gefüllten Wackerfass 20 Minuten bei 30°C gewaschen. Danach wurde mit 100 Teilen Wasser, 2 Teilen eines Dispergiermittels und 5 Teilen Farbstoff aus Beispiel 2ae 30 Minuten bei pH 4,2 und 30°C gefärbt. Durch portionsweise Zugabe von 20 Teilen einer 15%-igen Sodalösung wurde bei 40°C der pH im Bereich 8,6 - 9,3 zur Fixierung des Farbstoffs 180 Minuten lang unter Walken gehalten. Anschließend folgte 3 mal eine 10 minütige Waschoperation in 200 Teilen Wasser bei 40°C. Durch Zugabe von 200 Teilen Wasser und 0,7 Teilen Ameisensäure wurde ein pH von 4,8 eingestellt. Anschließend wurde wie in Färbevorschrift 1 unter b) beschrieben fortgefahren.

Es wurde ein farbtiefes blaues Leder erhalten, das über hervorragende Wasch-, Schweiß-, Reib- und Migrationsechtheit verfügt.

Färbevorschrift 11:
Ein Lederstück von 100 Gewichtsteilen eines auf übliche Weise organisch gegerbten Rindsleders der Falzstärke 1,0 mm wurde in einem mit 200 Teilen Wasser gefüllten Wackerfass 20 Minuten bei 30°C gewaschen. Danach wurde mit 150 Teilen Wasser, 2 Teilen eines Dispergiermittels und 5 Teilen Farbstoff aus Beispiel 1 ae 45 Minuten bei pH 4,3 und 30°C gefärbt. Durch portionsweise Zugabe von 40 Teilen einer 7%-igen Natriumbicarbonatlösung wurde bei 40°C der pH im Bereich 7,3 - 8,2 zur Fixierung des Farbstoffs 240 Minuten lang unter Walken gehalten. Anschließend folgte 6 mal eine 10 minütige Waschoperation in 200 Teilen Wasser bei 40°C. Durch Zugabe von 200 Teilen Wasser und 1,2 Teilen Ameisensäure wurde ein pH von 3,9 eingestellt. Anschließend wurde wie in Färbevorschrift 1 unter b) beschrieben fortgefahren.

Es wurde ein brillantes farbtiefes blaues Leder erhalten, das über hervorragende Wasch-, Schweiß-, Reib- und Migrationsechtheit verfügt.

Färbevorschrift 12:
Ein Lederstück von 100 Gewichtsteilen eines auf übliche Weise organisch gegerbten Rindsleders der Falzstärke 1,0 mm wurde in einem mit 200 Teilen Wasser gefüllten Wackerfass 20 Minuten bei 30°C gewaschen. Danach wurde mit 150 Teilen Wasser, 2 Teilen eines Dispergiermittels und 5 Teilen Farbstoff aus Beispiel 2c 30 Minuten bei pH 4,1 und 30°C gefärbt. Durch portionsweise Zugabe von 40 Teilen einer 7%-igen Natriumbicarbonatlösung wurde zur Fixierung der pH bei 7,9 - 8,1 eingestellt und 60 Minuten lang gewalkt, anschließend wurde in drei Portionen 15 Teile Glaubersalz zugesetzt und weitere 120 Minuten bei pH 8,1 - 9,0 gewalkt. Anschließend folgte 3 mal eine 10 minütige Waschoperation in 200 Teilen Wasser bei 40°C. Durch Zugabe von 200 Teilen Wasser und 1,0 Teilen Ameisensäure wurde ein pH von 3,8 eingestellt. Anschließend wurde wie in Färbevorschrift 1 unter b) beschrieben fortgefahren.

Es wurde ein farbtiefes dunkelgrünes Leder erhalten, das über hervorragende Wasch-, Schweiß-, Reib- und Migrationsechtheit verfügt.

Färbevorschrift 13:
Ein Lederstück von 100 Gewichtsteilen eines auf übliche Weise organisch gegerbten Rindsleders der Falzstärke 1,0 mm wurde in einem mit 200 Teilen Wasser gefüllten Wackerfass 20 Minuten bei 30°C gewaschen. Danach wurde mit 150 Teilen Wasser, 2 Teilen eines Dispergiermittels und 5 Teilen Farbstoff aus Beispiel 1 n 45 Minuten bei pH 4,2 und 30°C gefärbt. Durch portionsweise Zugabe von 20 Teilen einer 15%-igen Sodalösung wurde zur Fixierung der pH zwischen 8,4 - 9,2 eingestellt und 120 Minuten lang gewalkt. Anschließend folgte 2 mal eine 10 minütige Waschoperation in 200 Teilen Wasser bei 40°C. Durch Zugabe von 200 Teilen Wasser und 1,1 Teilen Ameisensäure wurde ein pH von 3,9 eingestellt. Anschließend wurde wie in Färbevorschrift 1 unter b) beschrieben fortgefahren.

Es wurde ein schwarzes Leder erhalten, das über hervorragende Wasch-, Schweiß- und Migrationsechtheit verfügt.

Färbevorschrift 14:
Ein Lederstück von 100 Gewichtsteilen eines auf übliche Weise organisch gegerbten Rindsleders der Falzstärke 1,0 mm wurde in einem mit 200 Teilen Wasser gefüllten Wackerfass 20 Minuten bei 30°C gewaschen. Danach wurde mit 150 Teilen Wasser, 2 Teilen eines Dispergiermittels und 5 Teilen Farbstoff aus Beispiel 2i 60 Minuten bei pH 4,2 und 30°C gefärbt. Durch portionsweise Zugabe von 21 Teilen einer 15%-igen Sodalösung wurde zur Fixierung der pH zwischen 8,8 - 9,3 eingestellt und 180 Minuten lang gewalkt. Anschließend folgte 6 mal eine 10 minütige Waschoperation in 200 Teilen Wasser bei 40°C. Durch Zugabe von 200 Teilen Wasser und 0,7 Teilen Ameisensäure wurde ein pH von 4,5 eingestellt. Anschließend wurde wie in Färbevorschrift 1 unter b) beschrieben fortgefahren.

Es wurde ein farbtiefes dunkelgrünes Leder erhalten, das über hervorragende Wasch-, Schweiß-, Reib- und Migrationsechtheit verfügt.

Färbevorschrift 15:
Ein Lederstück von 100 Gewichtsteilen eines auf übliche Weise organisch gegerbten Rindsleders der Falzstärke 1,0 mm wurde in einem mit 200 Teilen Wasser gefüllten Wackerfass 20 Minuten bei 30°C gewaschen. Danach wurde mit 150 Teilen Wasser und 5 Teilen Farbstoff aus Beispiel 18b 60 Minuten bei pH 4,1 und 30°C gefärbt. Durch portionsweise Zugabe von 21 Teilen einer 15%-igen Sodalösung wurde zur Fixierung der pH zwischen 8,8 - 9,3 eingestellt und 180 Minuten lang gewalkt. Anschließend folgte 6 mal eine 10 minütige Waschoperation in 200 Teilen Wasser bei 40°C. Durch Zugabe von 200 Teilen Wasser und 0,7 Teilen Ameisensäure wurde ein pH von 4,5 eingestellt. Anschließend wurde wie in Färbevorschrift 1 unter b) beschrieben fortgefahren.

Es wurde ein brillante farbtiefes braunes Leder erhalten, das über hervorragende Wasch-, Schweiß-, Reib- und Migrationsechtheit verfügt.

Färbevorschrift 16:
Ein Lederstück von 100 Gewichtsteilen eines auf übliche Weise chromgegerbten Rindsleders der Falzstärke 1,8 mm wurde in einem mit 200 Teilen Wasser und 0,1 Teilen Ameisensäure gefüllten Wackerfass 10 Minuten bei 35°C gewaschen und anschließend in einer aus 100 Teilen Wasser, 2 Teilen Natriumformiat, 1 Teil Natriumacetat, 0,5 Teil Natriumbicarbonat und 1 Teil eines Dispergiermittels bestehenden Flotte 120 Minuten bei 35°C neutralisiert. Die Entsäuerungsflotte hatte dann einen pH-Wert von 5,0. Danach wurde das Leder mit 200 Teilen Wasser 10 Minuten bei 35°C gewaschen. Das derart neutralisierte Leder wurde in einer frisch angesetzten Flotte aus 30 Teilen Wasser und 2 Teilen eines Polymergerbstoffs 30 Minuten bei 30°C nachgegerbt. Anschließend versetzte man die Flotte mit 2 Teilen eines hydrophobierenden Fettungsmittels. Nach einer Walkzeit von weiteren 30 Minuten setzte man 5 Teile eines Sulfongerbstoffs und 4 Teile eines Harzgerbstoffs zu und es wurde weitere 60 Minuten
   gewalkt. Schließlich säuert man mit 0,5 % Ameisensäure auf pH 4,0 ab und walkte einmal 10 Minuten und einmal 30 Minuten.

In einer frisch angesetzten Flotte aus 150 Teilen Wasser, 2 Teilen eines Dispergiermittels, 5 Teilen Farbstoff aus Beispiel 2r und 0,2 Teilen Natriumbicarbonat wurde 90 Minuten bei pH 4,8 und 35°C gefärbt. Durch portionsweise Zugabe von 40 Teilen einer 15%-igen Sodalösung wurde zur Fixierung der pH zwischen 9,0 - 9,3 eingestellt und 180 Minuten lang bei 40°C gewalkt. Anschließend folgte 6 mal eine 10 minütige Waschoperation in 200 Teilen Wasser bei 40°C. Durch Zugabe von 200 Teilen Wasser und 0,7 Teilen Ameisensäure wurde ein pH von 4,5 eingestellt.

In neuer Flotte, bestehend aus 100 Teilen Wasser, 4,5 Teilen eines Mischlicker (Basis sulfitiertes Fischöl und synthetisches Öl), 0,5 Teilen eines lanolinbasierten Lickers wurde das Leder durch 40 minütiges Walken bei 55°C gefettet. Anschließend säuerte man mit 1,5 Teilen konzentrierte Ameisensäure auf pH 3,5 ab und walkte 40 Minuten. Das gefärbte und gefettete Leder wurde noch mit 15°C kaltem Wasser 10 Minuten gespült und anschließend ausgereckt, über Nacht bei Raumtemperatur hängegetrocknet, konditioniert, gestollt und gespannt.

Es wurde ein tiefschwarzes Leder erhalten, das über hervorragende Wasch-, Schweiß- , Reib- und Migrationsechtheit verfügt.

Färbevorschrift 17:
Ein Lederstück von 100 Gewichtsteilen eines auf übliche Weise chromgegerbten Rindsleders der Falzstärke 1,8 mm wurde in einem mit 200 Teilen Wasser und 0,1 Teilen Ameisensäure gefüllten Wackerfass 10 Minuten bei 35°C gewaschen und anschließend in einer aus 100 Teilen Wasser, 2 Teilen Natriumformiat, 1 Teil Natriumacetat, 1,5 Teil Natriumbicarbonat und 1 Teil eines Dispergiermittels bestehenden Flotte 120 Minuten bei 35°C neutralisiert. Danach wies die Entsäuerungsflotte einen pH-Wert von 6,3 auf. Anschließend wurde mit 200 Teilen Wasser 10 Minuten bei 35°C gewaschen.

In einer frisch angesetzten Flotte aus 150 Teilen Wasser und 5 Teilen Farbstoff aus Beispiel 24c wurde 60 Minuten bei pH 5,6 und 30°C gefärbt. Durch portionsweise Zugabe von 13 Teilen einer 15%-igen Sodalösung stellte man den pH-Wert der Flotte zwischen 8,5 - 9,1 ein und walkte 180 Minuten bei 40°C. Anschließend folgte 3 mal eine 10 minütige Waschoperation in 200 Teilen Wasser bei 40°C. Durch Zugabe von 200 Teilen Wasser und 1,5 Teilen Ameisensäure wurde ein pH von 4,8 eingestellt. Das derart gefärbte Leder wurde in einer frisch angesetzten Flotte aus 30 Teilen Wasser und 2 Teilen eines Polymergerbstoffs 30 Minuten bei 30°C nachgegerbt. Anschließend versetzte man die Flotte mit 2 Teilen eines hydrophobierenden Fettungsmittels. Nach einer Walkzeit von weiteren 30 Minuten wurden 5 Teile eines Sulfongerbstoffs und 4 Teile eines Harzgerbstoffs zugesetzt und weitere 60 Minuten gewalkt. Schließlich säuert man mit 0,5 Teilen Ameisensäure auf pH 4,4 ab und walkte einmal 10 Minuten und einmal 30 Minuten. Nach einer 10 minütigen Waschoperation mit 100 Teilen Wasser wurde das Leder in neuer Flotte bestehend aus 100 Teilen Wasser, 4,5 Teilen eines Mischlickers (Basis sulfitiertes Fischöl und synthetisches Öl), 0,5 Teilen eines lanolinbasierten Lickers durch 40 minütiges Walken bei 55°C gefettet. Anschließend säuerte man mit 1,5 Teilen konzentrierte Ameisensäure auf pH 3,5 ab und walkte 40 Minuten. Das gefärbte und gefettete Leder wurde noch mit 15°C kaltem Wasser 10 Minuten gespült und anschließend ausgereckt, über Nacht bei Raumtemperatur hängegetrocknet, konditioniert, gestollt und gespannt.

Es wurde ein farbtiefes braunes Leder erhalten, das über hervorragende Wasch-, Schweiß-, Reib- und Migrationsechtheit verfügt.

Färbevorschrift 18:
Ein Lederstück von 100 Gewichtsteilen eines auf übliche Weise chromgegerbten Rindsleders der Falzstärke 1,8 mm wurde in einem mit 200 Teilen Wasser und 0,1 Teilen Ameisensäure gefüllten Wackerfass 10 Minuten bei 35°C gewaschen und anschließend in einer aus 100 Teilen Wasser, 2 Teilen Natriumformiat, 1 Teil Natriumacetat, 1,5 Teilen Natriumbicarbonat und 1 Teil eines Dispergiermittels bestehenden Flotte 120 Minuten bei 35°C neutralisiert. Danach wies die Entsäuerungsflotte einen pH-Wert von 6,5 auf. Anschließend wurde mit 200 Teilen Wasser 10 Minuten bei 35°C gewaschen.

In einer frisch angesetzten Flotte aus 150 Teilen Wasser und 5 Teilen Farbstoff aus Beispiel 24h wurde 45 Minuten bei pH 5,9 und 30°C gefärbt. Durch portionsweise Zugabe von 15 Teilen einer 15%-igen Sodalösung stellte man den pH-Wert der Flotte zwischen 8,8 - 9,6 ein und walkte 120 Minuten bei 50°C. Anschließend folgte 3 mal eine 10 minütige Waschoperation in 200 Teilen Wasser bei 40°C. Durch Zugabe von 200 Teilen Wasser und 0,5 Teilen Ameisensäure wurde ein pH von 5,1 eingestellt.

Das derart gefärbte Leder wurde in einer frisch angesetzten Flotte aus 30 Teilen Wasser und 2 Teilen eines Polymergerbstoffs 30 Minuten bei 30°C nachgegerbt. Anschließend versetzte man die Flotte mit 2 Teilen eines hydrophobierenden Fettungsmittels. Nach einer Walkzeit von weiteren 30 Minuten wurden 5 Teile eines Sulfongerbstoffs und 4 Teile eines Harzgerbstoffs zugesetzt und weitere 60 Minuten gewalkt. Schließlich säuerte man mit 1,0 Teilen Ameisensäure auf pH 4,1 ab und walkte einmal 10 Minuten und einmal 30 Minuten. Nach einer 10 minütigen Waschoperation mit 200 Teilen Wasser wurde das Leder in neuer Flotte bestehend aus 100 Teilen Wasser, 4,5 Teilen eines Mischlicker (Basis sulfitiertes Fischöl und synthetisches Öl), 0,5 Teilen eines lanolinbasierten Lickers durch 40 minütiges Walken bei 55°C gefettet. Anschließend säuerte man mit 1,5 Teilen konzentrierte Ameisensäure auf pH 3,3 ab und walkte 40 Minuten. Das gefärbte und gefettete Leder wurde noch mit 15°C kaltem Wasser 10 Minuten gespült und anschließend ausgereckt, über Nacht bei Raumtemperatur hängegetrocknet, konditioniert, gestollt und gespannt.

Es wurde ein farbtiefes dunkelbraunes Leder erhalten, das über hervorragende Wasch- , Schweiß-, Reib- und Migrationsechtheit verfügt.

Färbevorschrift 19:
Ein Lederstück von 100 Gewichtsteilen eines auf übliche Weise chromgegerbten Rindsleders der Falzstärke 1,8 mm wurde in einem mit 200 Teilen Wasser und 0,1 Teilen Ameisensäure gefüllten Wackerfass 10 Minuten bei 35°C gewaschen und anschließend in einer aus 100 Teilen Wasser, 2 Teilen Natriumformiat, 1 Teil Natriumacetat, 1,5 Teil Natriumbicarbonat und 1 Teil eines Dispergiermittels bestehenden Flotte 120 Minuten bei 35°C neutralisiert. Die Entsäuerungsflotte wies dann einen pH-Wert von 6,6 auf. Danach wurde mit 200 Teilen Wasser 10 Minuten bei 35°C gewaschen.

In einer frisch angesetzten Flotte aus 150 Teilen Wasser und 5 Teilen Farbstoff aus Beispiel 1a wurde 60 Minuten bei pH 6,0 und 30°C gefärbt. Durch portionsweise Zugabe von 18 Teilen einer 15%-igen Sodalösung wurde der pH-Wert der Flotte zwischen 8,8 - 9,8 eingestellt. Anschließend wurde 120 Minuten bei 50°C gewalkt. Anschließend folgte 2 mal eine 10 minütige Waschoperation in 200 Teilen Wasser bei 40°C. Durch Zugabe von 200 Teilen Wasser und 0,5 Teilen Ameisensäure wurde ein pH von 5,0 eingestellt.

Das derart gefärbte Leder wurde in einer frisch angesetzten Flotte aus 30 Teilen Wasser und 2 Teilen eines Polymergerbstoffs 30 Minuten bei 30°C nachgegerbt. Anschließend versetzte man die Flotte mit 2 Teilen eines hydrophobierenden Fettungsmittels. Nach einer Walkzeit von weiteren 30 Minuten wurden 5 Teile eines Sulfongerbstoffs und 4 Teile eines Harzgerbstoffs zugesetzt und weitere 60 Minuten gewalkt. Schließlich säuerte man mit 1,0 Teilen Ameisensäure auf pH 4,1 ab und walkte einmal 10 Minuten, einmal 30 und zweimal 20 Minuten. Nach einer 10 minütigen Waschoperation mit 200 Teilen Wasser wurde das Leder in neuer Flotte bestehend aus 100 Teilen Wasser, 4,5 Teilen eines Mischlicker (Basis sulfitiertes Fischöl und synthetisches Öl), 0,5 Teilen eines lanolinbasierten Lickers durch 40 minütiges Walken bei 55°C gefettet. Anschließend säuerte man mit 1,5 Teilen konzentrierte Ameisensäure auf pH 3,4 ab und walkt 40 Minuten. Das gefärbte und gefettete Leder wurde noch mit 15°C kaltem Wasser 10 Minuten gespült und anschließend ausgereckt, über Nacht bei Raumtemperatur hängegetrocknet, konditioniert, gestollt und gespannt.

Es wurde ein schwarzes Leder erhalten, das über hervorragende Wasch-, Schweiß-, Reib- und Migrationsechtheit verfügt.

Färbevorschrift 20:
Ein Lederstück von 100 Gewichtsteilen eines auf übliche Weise chromgegerbten Rindsleders der Falzstärke 1,8 mm wurde in einem mit 200 Teilen Wasser und 0,1 Teilen Ameisensäure gefüllten Wackerfass 10 Minuten bei 35°C gewaschen und anschließend in einer aus 100 Teilen Wasser, 2 Teilen Natriumformiat, 1 Teil Natriumacetat, 1,5 Teil Natriumbicarbonat und 1 Teil eines Dispergiermittels bestehenden Flotte 120 Minuten bei 35°C neutralisiert. Danach wies die Entsäuerungsflotte einen pH-Wert von 6,4 auf. Anschließend wurde mit 200 Teilen Wasser 10 Minuten bei 35°C gewaschen.

In einer frisch angesetzten Flotte aus 150 Teilen Wasser und 4,25 Teilen Farbstoff aus Beispiel 6h wurde 90 Minuten bei pH 5,7 und 30°C gefärbt. Durch portionsweise Zugabe von 16 Teilen einer 15%-igen Sodalösung wurde der pH-Wert der Flotte zwischen 8,6 - 9,3 eingestellt und es wurde 180 Minuten bei 50°C gewalkt. Anschließend folgte 3 mal eine 10 minütige Waschoperation in 200 Teilen Wasser bei 40°C. Durch Zugabe von 200 Teilen Wasser und 0,7 Teilen Ameisensäure wurde ein pH von 4,7 eingestellt.

Das derart gefärbte Leder wurde in einer frisch angesetzten Flotte aus 30 Teilen Wasser und 2 Teilen eines Polymergerbstoffs 30 Minuten bei 30°C nachgegerbt. Anschließend versetzte man die Flotte mit 2 Teilen eines hydrophobierenden Fettungsmittels. Nach einer Walkzeit von weiteren 30 Minuten wurden 5 Teile eines Sulfongerbstoffs und 4 Teile eines Harzgerbstoffs zugesetzt und weitere 60 Minuten gewalkt. Schließlich säuerte man mit 0,5 Teilen Ameisensäure auf pH 4,7 ab und walkte einmal 10 Minuten und einmal 30 Minuten. Nach einer 10 minütigen Waschoperation mit 200 Teilen Wasser bei 40°C wurde das Leder in neuer Flotte bestehend aus 100 Teilen Wasser, 4,5 Teilen eines Mischlicker (Basis sulfitiertes Fischöl und synthetisches Öl), 0,5 Teilen eines lanolinbasierten Lickers durch 40 minütiges Walken bei 55°C gefettet. Anschließend säuerte man mit 1,5 Teilen konzentrierte Ameisensäure auf pH 3,7 ab und walkte 40 Minuten. Das gefärbte und gefettete Leder wurde noch mit 15°C kaltem Wasser 10 Minuten gespült und anschließend ausgereckt, über Nacht bei Raumtemperatur hängegetrocknet, konditioniert, gestollt und gespannt.

Es wurde ein schwarzes Leder erhalten, das über hervorragende Wasch-, Schweiß-, Reib- und Migrationsechtheit verfügt.

Färbevorschrift 21:
Ein Lederstück von 100 Gewichtsteilen eines auf übliche Weise chromgegerbten Rindsleders der Falzstärke 1,8 mm wurde in einem mit 200 Teilen Wasser und 0,1 Teilen Ameisensäure gefüllten Wackerfass 10 Minuten bei 35°C gewaschen und anschließend in einer aus 100 Teilen Wasser, 2 Teilen Natriumformiat, 1 Teil Natriumacetat, 1,5 Teilen Natriumbicarbonat und 1 Teil eines Dispergiermittels bestehenden Flotte 120 Minuten bei 35°C neutralisiert. Danach war der pH-Wert der Entsäuerungsflotte 6,4. Anschließend wurde mit 200 Teilen Wasser 10 Minuten bei 35°C gewaschen.
In einer frisch angesetzten Flotte aus 150 Teilen Wasser und 10 Teilen Farbstoff aus Beispiel 14 wurde 45 Minuten bei pH 5,4 und 30°C gefärbt. Durch portionsweise Zugabe von 20 Teilen einer 15%-igen Sodalösung wurde der pH-Wert der Flotte zwischen 8,4 - 9,1 eingestellt und es wurde 120 Minuten bei 50°C gewalkt. Anschließend folgte 2 mal eine 10 minütige Waschoperation in 200 Teilen Wasser bei 40°C. Durch Zugabe von 200 Teilen Wasser und 0,7 Teilen Ameisensäure wurde ein pH von 4,6 eingestellt.

Das derart gefärbte Leder wurde in einer frisch angesetzten Flotte aus 30 Teilen Wasser und 2 Teilen eines Polymergerbstoffs 30 Minuten bei 30°C nachgegerbt. Anschließend versetzte man die Flotte mit 2 Teilen eines hydrophobierenden Fettungsmittels. Nach einer Walkzeit von weiteren 30 Minuten wurden 5 Teile eines Sulfongerbstoffs und 4 Teile eines Harzgerbstoffs zugesetzt und weitere 60 Minuten gewalkt. Schließlich säuerte man mit 0,5 Teilen Ameisensäure auf pH 4,7 ab und walkte einmal 10 Minuten und einmal 30 Minuten. Nach einer 10 minütigen Waschoperation mit 200 Teilen Wasser bei 40°C wurde das Leder in neuer Flotte bestehend aus 100 Teilen Wasser, 4,5 Teilen eines Mischlicker (Basis sulfitiertes Fischöl und synthetisches Öl), 0,5 Teilen eines lanolinbasierten Lickers durch 40 minütiges Walken bei 55°C gefettet. Anschließend säuerte man mit 1,5 Teilen konzentrierte Ameisensäure auf pH 3,7 ab und walkte 40 Minuten. Das gefärbte und gefettete Leder wurde noch mit 15°C kaltem Wasser 15 Minuten gespült und anschließend ausgereckt, über Nacht bei Raumtemperatur hängegetrocknet, konditioniert, gestollt und gespannt.

Es wurde ein tiefschwarzes Leder erhalten, das über hervorragende Wasch-, Schweiß- , Reib- und Migrationsechtheit verfügt.

Färbevorschrift 22:
Ein Lederstück von 100 Gewichtsteilen eines auf übliche Weise organisch gegerbten Rindsleders der Falzstärke 1,0 mm wurde in einem mit 200 Teilen Wasser gefüllten Wackerfass 20 Minuten bei 30°C gewaschen. Danach wurde mit einer Flotte aus 150 Teilen Wasser, 2 Teilen eines Dispergiermittels und 10 Teilen Farbstoff aus Beispiel 21 n 60 Minuten bei pH 4,3 und 30°C gefärbt. Durch portionsweise Zugabe von 27 Teilen einer 15%-igen Sodalösung wurde dann bei 40°C in der Flotte ein pH-Wert im Bereich 8,7 und 9,3 eingestellt und 180 Minuten unter Walken gehalten. Anschließend folgte 3 mal eine 10 minütige Waschoperation in 200 Teilen Wasser bei 40°C. Durch Zugabe von 200 Teilen Wasser und 0,7 Teilen Ameisensäure wurde ein pH von 4,2 eingestellt.

Die Nachgerbung/Fettung/Mechanische Arbeiten wurden wie in Färbevorschrift 1 unter b) beschrieben durchgeführt.

Es wurde eine farbtiefes dunkelbraunes Leder erhalten, das über hervorragende Wasch-, Schweiß-, Reib- und Migrationsechtheit verfügt.

Färbevorschrift 23:
Ein Lederstück von 100 Gewichtsteilen eines auf übliche Weise organisch gegerbten Rindsleders der Falzstärke 1,0 mm wurde in einem mit 200 Teilen Wasser gefüllten Wackerfass 20 Minuten bei 30°C gewaschen. Danach wurde mit einer Flotte aus 150 Teilen Wasser, und 10 Teilen Farbstoff aus Beispiel 23b 60 Minuten bei pH 4,3 und 30°C gefärbt. Durch portionsweise Zugabe von 27 Teilen einer 15%-igen Sodalösung wurde bei 40°C in der Flotte ein pH-Wert im Bereich 8,7 und 9,3 zur Fixierung des Farbstoffs eingestellt und 180 Minuten lang unter Walken gehalten. Anschließend folgte 3 mal eine 10 minütige Waschoperation in 200 Teilen Wasser bei 40°C. Durch Zugabe von 200 Teilen Wasser und 0,7 Teilen Ameisensäure wurde ein pH von 4,3 eingestellt. Die Nachgerbung/Fettung/mechanischen Arbeiten wurden wie in Färbevorschrift 1 unter b) beschrieben durchgeführt.

Es wurde eine farbtiefes braunes Leder erhalten, das über hervorragende Wasch-, Schweiß-, Reib- und Migrationsechtheit verfügt.

Färbevorschrift 24:
Ein Lederstück von 100 Gewichtsteilen eines auf übliche Weise chromgegerbten Rindsleders der Falzstärke 1,8 mm wurde in einem mit 200 Teilen Wasser und 0,1 Teilen Ameisensäure gefüllten Wackerfass 10 Minuten bei 35°C gewaschen und anschließend in einer aus 100 Teilen Wasser, 2 Teilen Natriumformiat, 1 Teil Natriumacetat, 1,5 Teil Natriumbicarbonat und 1 Teil eines Dispergiermittels bestehenden Flotte 120 Minuten bei 35°C neutralisiert. Danach wies die Entsäuerungsflotte einen pH-Wert von 6,4 auf. Anschließend wurde mit 200 Teilen Wasser 10 Minuten bei 35°C gewaschen.

In einer frisch angesetzten Flotte aus 150 Teilen Wasser und 4,25 Teilen Farbstoff aus Beispiel 25g wurde 60 Minuten bei pH 6,1 und 30°C gefärbt. Durch portionsweise Zugabe von 23 Teilen einer 15%-igen Sodalösung wurde in der Flotte ein pH-Wert zwischen 8,7 - 9,5 eingestellt und es wurde 180 Minuten bei 50°C gewalkt. Anschließend folgte 4 mal eine 10 minütige Waschoperation in 200 Teilen Wasser bei 40°C. Durch Zugabe von 200 Teilen Wasser und 1,0 Teilen Ameisensäure wurde ein pH von 4,3 eingestellt.

Das derart gefärbte Leder wurde in einer frisch angesetzten Flotte aus 30 Teilen Wasser und 2 Teilen eines Polymergerbstoffs 30 Minuten bei 30°C nachgegerbt. Anschließend versetzte man die Flotte mit 2 Teilen eines hydrophobierenden Fettungsmittels. Nach einer Walkzeit von weiteren 30 Minuten wurden 5 Teile eines Sulfongerbstoffs und 4 Teile eines Harzgerbstoffs zugesetzt und weitere 60 Minuten gewalkt. Schließlich säuerte man mit 2,0 Teilen Ameisensäure auf pH 3,8 ab und walkte einmal 10 Minuten und dreimal 30 Minuten. Nach einer 10 minütigen Waschoperation mit 200 Teilen Wasser bei 40°C wurde das Leder in neuer Flotte bestehend aus 100 Teilen Wasser, 4,5 Teilen eines Mischlicker (Basis sulfitiertes Fischöl und synthetisches Öl), 0,5 Teilen eines lanolinbasierten Lickers durch 40 minütiges Walken bei 55°C gefettet. Anschließend säuerte man mit 1,5 Teilen konzentrierte Ameisensäure auf pH 3,3 ab und walkt 40 Minuten. Das gefärbte und gefettete Leder wurde noch mit 15°C kaltem Wasser 15 Minuten gespült und anschließend ausgereckt, vakuumiert, über Nacht bei Raumtemperatur hängegetrocknet, konditioniert, gestollt und gespannt.

Es wurde ein farbtiefes braunes Leder erhalten, das über hervorragende Wasch-, Schweiß-, Reib- und Migrationsechtheit verfügt.

Färbevorschrift 25:
Ein Lederstück von 100 Gewichtsteilen eines auf übliche Weise organisch gegerbten Rindsleders der Falzstärke 1,0 mm wurde in einem mit 200 Teilen Wasser gefüllten Wackerfass 20 Minuten bei 30°C gewaschen. Danach wurde mit einer Flotte aus 150 Teilen Wasser und 4,25 Teilen Farbstoff aus Beispiel 4 60 Minuten bei pH 4,2 und 30°C gefärbt. Durch portionsweise Zugabe von 30 Teilen einer 15%-igen Sodalösung wurde bei 40°C in der Flotte ein pH-Wert im Bereich 8,5 und 9,4 eingestellt und 180 Minuten lang unter Walken gehalten. Anschließend folgte 2 mal eine 10 minütige Waschoperation in 200 Teilen Wasser bei 40°C. Durch Zugabe von 200 Teilen Wasser und 1,4 Teilen Ameisensäure wurde ein pH von 4,0 eingestellt. Die Nachgerbung/Fettung/mechanischen Arbeiten wurden wie in Färbevorschrift 1 unter b) beschrieben durchgeführt.

Es wurde eine tiefschwarzes Leder erhalten, das über hervorragende Wasch-, Schweiß-, Reib- und Migrationsechtheit verfügt.

Färbevorschrift 26:
Ein Lederstück von 100 Gewichtsteilen eines auf übliche Weise chromgegerbten Rindsleders der Falzstärke 1,8 mm wurde in einem mit 200 Teilen Wasser und 0,1 Teilen Ameisensäure gefüllten Wackerfass 10 Minuten bei 35°C gewaschen und anschließend in einer aus 100 Teilen Wasser, 2 Teilen Natriumformiat, 1 Teil Natriumacetat, 1,5 Teilen Natriumbicarbonat und 1 Teil eines Dispergiermittels bestehenden Flotte 120 Minuten bei 35°C neutralisiert. Die Entsäuerungsflotte wies dann einen pH-Wert von 6,2 auf. Danach wurde mit 200 Teilen Wasser 10 Minuten bei 35°C gewaschen.

In einer frisch angesetzten Flotte aus 150 Teilen Wasser und 11,5 Teilen Farbstoff aus Beispiel 1 c wurde 60 Minuten bei pH 5,3 und 30°C gefärbt. Durch portionsweise Zugabe von 28 Teilen einer 15%-igen Sodalösung wurde in der Flotte ein pH-Wert zwischen 8,8 - 9,3 eingestellt und es wurde 180 Minuten lang bei 50°C gewalkt. Anschließend folgte 3 mal eine 10 minütige Waschoperation in 200 Teilen Wasser bei 40°C. Durch Zugabe von 200 Teilen Wasser und 1,0 Teilen Ameisensäure wurde ein pH von 4,5 eingestellt.

Das derart gefärbte Leder wurde in einer frisch angesetzten Flotte aus 30 Teilen Wasser und 2 Teilen eines Polymergerbstoffs 30 Minuten bei 30°C nachgegerbt. Anschließend versetzte man die Flotte mit 2 Teilen eines hydrophobierenden Fettungsmittels. Nach einer Walkzeit von weiteren 30 Minuten wurden 5 Teile eines Sulfongerbstoffs und 4 Teile eines Harzgerbstoffs zugesetzt und weitere 60 Minuten gewalkt. Schließlich säuerte man mit 2,0 Teilen Ameisensäure auf pH 3,8 ab und walkte einmal 10 Minuten und dreimal 30 Minuten. Nach einer 10 minütigen Waschoperation mit 200 Teilen Wasser bei 40°C wurde das Leder in neuer Flotte bestehend aus 100 Teilen Wasser, 4,5 Teilen eines Mischlicker (Basis sulfitiertes Fischöl und synthetisches Öl), 0,5 Teilen eines lanolinbasierten Lickers durch 40 minütiges Walken bei 55°C gefettet. Anschließend säuerte man mit 1,5 Teilen konzentrierte Ameisensäure auf pH 4,0 ab und walkte 40 Minuten. Das gefärbte und gefettete Leder wurde noch mit 15°C kaltem Wasser 15 Minuten gespült und anschließend ausgereckt, vakuumiert, über Nacht bei Raumtemperatur hängegetrocknet, konditioniert, gestollt und gespannt.

Es wurde ein tiefschwarzes Leder erhalten, das über hervorragende Wasch-, Schweiß- , Reib- und Migrationsechtheit verfügt.

Färbevorschrift 27:
Ein Lederstück von 100 Gewichtsteilen eines auf übliche Weise chromgegerbten Rindsleders der Falzstärke 1,8 mm wurde in einem mit 200 Teilen Wasser und 0,1 Teilen Ameisensäure gefüllten Wackerfass 10 Minuten bei 35°C gewaschen und anschließend in einer aus 100 Teilen Wasser, 2 Teilen Natriumformiat, 1 Teil Natriumacetat, 1,5 Teil Natriumbicarbonat und 1 Teil eines Dispergiermittels bestehenden Flotte 120 Minuten bei 35°C neutralisiert. Danach hatte die Entsäuerungsflotte einen pH-Wert von 6,2. Anschließend wurde mit 200 Teilen Wasser 10 Minuten bei 35°C gewaschen.

In einer frisch angesetzten Flotte aus 150 Teilen Wasser und 14,3 Teilen Farbstoff aus Beispiel 6c wurde 60 Minuten bei pH 5,3 und 30°C gefärbt. Durch portionsweise Zugabe von 28 Teilen einer 15%-igen Sodalösung stellte man in der Flotte einen pH-Wert zwischen 8,7 - 9,3 ein und walkte 180 Minuten lang bei 50°C. Anschließend folgte 3 mal eine 10 minütige Waschoperation in 200 Teilen Wasser bei 40°C. Durch Zugabe von 200 Teilen Wasser und 1,0 Teilen Ameisensäure wurde ein pH von 4,6 eingestellt.

Das derart gefärbte Leder wurde in einer frisch angesetzten Flotte aus 30 Teilen Wasser und 2 Teilen eines Polymergerbstoffs 30 Minuten bei 30°C nachgegerbt. Anschließend versetzte man die Flotte mit 2 Teilen eines hydrophobierenden Fettungsmittels. Nach einer Walkzeit von weiteren 30 Minuten wurden 5 Teile eines Sulfongerbstoffs und 4 Teile eines Harzgerbstoffs zugesetzt und weitere 60 Minuten gewalkt. Schließlich säuerte man mit 1,8 Teilen Ameisensäure auf pH 4,0 ab und walkte einmal 10 Minuten und dreimal 30 Minuten. Nach einer 10 minütigen Waschoperation mit 200 Teilen Wasser bei 40°C wurde das Leder in neuer Flotte bestehend aus 100 Teilen Wasser, 4,5 Teilen eines Mischlicker (Basis sulfitiertes Fischöl und synthetisches Öl), 0,5 Teilen eines lanolinbasierten Lickers durch 40 minütiges Walken bei 55°C gefettet. Anschließend säuerte man mit 1,5 Teilen konzentrierte Ameisensäure auf pH 3,3 ab und walkte 40 Minuten. Das gefärbte und gefettete Leder wurde noch mit 15°C kaltem Wasser 15 Minuten gespült und anschließend ausgereckt, vakuumiert, über Nacht bei Raumtemperatur hängegetrocknet, konditioniert, gestollt und gespannt.

Es wurde ein tiefschwarzes Leder erhalten, das über hervorragende Wasch-, Schweiß- , Reib- und Migrationsechtheit verfügt.

Färbevorschrift 28:
Ein Lederstück von 100 Gewichtsteilen eines auf übliche Weise organisch gegerbten Rindsleders der Falzstärke 1,0 mm wurde in einem mit 200 Teilen Wasser gefüllten Wackerfass 20 Minuten bei 30°C gewaschen. Danach wurde mit einer Flotte aus 150 Teilen Wasser, 2 Teilen eines Dispergiermittels und 11,5 Teilen Farbstoff aus Beispiel 6d 60 Minuten bei pH 4,3 und 30°C gefärbt. Durch portionsweise Zugabe von 30 Teilen einer 15%-igen Sodalösung wurde bei 40°C der pH-Wert 180 Minuten unter Walken im Bereich 8,8 und 9,2 gehalten. Anschließend folgte 3 mal eine 10 minütige Waschoperation in 200 Teilen Wasser bei 40°C. Durch Zugabe von 200 Teilen Wasser und 1,0 Teilen Ameisensäure wurde ein pH von 4,4 eingestellt.
   Die Nachgerbung/Fettung/mechanischen Arbeiten wurden wie in Färbevorschrift 1 unter b) beschrieben durchgeführt.

Es wurde ein farbtiefes dunkelgrünes Leder erhalten, das über hervorragende Wasch-, Schweiß-, Reib- und Migrationsechtheit verfügt.

Färbevorschrift 29:
Ein Lederstück von 100 Gewichtsteilen eines auf übliche Weise organisch gegerbten Rindsleders der Falzstärke 1,0 mm wurde in einem mit 200 Teilen Wasser gefüllten Wackerfass 20 Minuten bei 30°C gewaschen. Danach wurde mit 150 Teilen Wasser, 2 Teilen eines Dispergiermittels und 14,3 Teilen Farbstoff aus Beispiel 9 60 Minuten bei pH 4,3 und 30°C gefärbt. Durch portionsweise Zugabe von 30 Teilen einer 15%-igen Sodalösung wurde bei 40°C der pH der Flotte 180 Minuten unter Walken im Bereich 8,7 und 9,2 gehalten. Anschließend folgte 3 mal eine 10 minütige Waschoperation in 200 Teilen Wasser bei 40°C. Durch Zugabe von 200 Teilen Wasser und 1,0 Teilen Ameisensäure wurde ein pH von 4,5 eingestellt.
   Die Nachgerbung/Fettung/mechanischen Arbeiten wurden wie in Färbevorschrift 1 unter b) beschrieben durchgeführt.

Es wurde ein farbtiefes dunkelgrünes Leder erhalten, das über hervorragende Wasch-, Schweiß-, Reib- und Migrationsechtheit verfügt.

Färbevorschrift 30:
Ein Lederstück von 100 Gewichtsteilen eines auf übliche Weise organisch gegerbten Rindsleders der Falzstärke 1,0 mm wurde in einem mit 200 Teilen Wasser gefüllten Wackerfass 20 Minuten bei 30°C gewaschen. Danach wurde mit einer Flotte aus 150 Teilen Wasser und 11,5 Teilen Farbstoff aus Beispiel 1fc 60 Minuten bei pH 4,3 und 30°C gefärbt. Durch portionsweise Zugabe von 30 Teilen einer 15%-igen Sodalösung wurde bei 40°C der pH-Wert der Flotte zur Fixierung des Farbstoffs 180 Minuten unter Walken im Bereich 8,8 und 9,4 gehalten. Anschließend folgte 3 mal eine 10 minütige Waschoperation in 200 Teilen Wasser bei 40°C. Durch Zugabe von 200 Teilen Wasser und 1,0 Teilen Ameisensäure wurde ein pH von 4,6 eingestellt.
   Die Nachgerbung/Fettung/mechanischen Arbeiten wurden wie in Färbevorschrift 1 unter b) beschrieben durchgeführt.

Es wurde ein farbtiefes blaues Leder erhalten, das über hervorragende Wasch-, Schweiß-, Reib- und Migrationsechtheit verfügt.

Färbevorschrift 31:
Ein Lederstück von 100 Gewichtsteilen eines auf übliche Weise organisch gegerbten Rindsleders der Falzstärke 1,0 mm wurde in einem mit 200 Teilen Wasser gefüllten Wackerfass 20 Minuten bei 30°C gewaschen. Danach wurde mit einer Flotte aus 150 Teilen Wasser und 14,3 Teilen Farbstoff aus Beispiel 1q 60 Minuten bei pH 4,3 und 30°C gefärbt. Durch portionsweise Zugabe von 30 Teilen einer 15%-igen Sodalösung wurde bei 40°C der pH-Wert der Flotte zur Fixierung des Farbstoffs 180 Minuten unter Walken im Bereich 8,6 und 9,3 gehalten. Anschließend folgte 3 mal eine 10 minütige Waschoperation in 200 Teilen Wasser bei 40°C. Durch Zugabe von 200 Teilen Wasser und 1,0 Teilen Ameisensäure wurde ein pH von 4,6 eingestellt.

Die Nachgerbung/Fettung/mechanischen Arbeiten wurden wie in Färbevorschrift 1 unter b) beschrieben durchgeführt.

Es wurde ein tiefschwarzes Leder erhalten, das über hervorragende Wasch-, Schweiß- , Reib- und Migrationsechtheit verfügt.

Färbevorschrift 32:
Ein Lederstück von 100 Gewichtsteilen eines auf übliche Weise organisch gegerbten Rindsleders der Falzstärke 1,0 mm wurde in einem mit 200 Teilen Wasser gefüllten Wackerfass 20 Minuten bei 30°C gewaschen. Danach wurde in der neuen Flotte aus 150 Teilen Wasser, 2 Teilen eines Dispergiermittels und 8 Teilen Farbstoff aus Beispiel 1 s der pH sofort durch portionsweise Zugabe von 30 Teilen einer 15%-igen Sodalösung auf > 8,5 gestellt und unter Walken bei 40°C im Bereich 8,7 und 9,2 zur Fixierung des Farbstoffs 220 Minuten gehalten. Anschließend folgte 3 mal eine 10 minütige Waschoperation in 200 Teilen Wasser bei 40°C. Durch Zugabe von 200 Teilen Wasser und 1,0 Teilen Ameisensäure wurde ein pH von 4,5 eingestellt.
   Die Nachgerbung/Fettung/mechanischen Arbeiten wurden wie in Färbevorschrift 1 unter b) beschrieben durchgeführt.

Es wurde ein tiefschwarzes Leder erhalten, das über hervorragende Wasch-, Schweiß- , Reib- und Migrationsechtheit verfügt.

Färbevorschrift 33:
Ein Lederstück von 100 Gewichtsteilen eines auf übliche Weise chromgegerbten Rindsleders der Falzstärke 1,8 mm wurde in einem mit 200 Teilen Wasser und 0,1 Teilen Ameisensäure gefüllten Wackerfass 10 Minuten bei 35°C gewaschen und anschließend in einer aus 100 Teilen Wasser, 2 Teilen Natriumformiat, 1 Teil Natriumacetat, 1,5 Teil Natriumbicarbonat und 1 Teil eines Dispergiermittels bestehenden Flotte 120 Minuten bei 35°C neutralisiert. Danach hatte die Entsäuerungsflotte einen pH-Wert von 6,4. Anschließend wurde mit 200 Teilen Wasser 10 Minuten bei 35°C gewaschen.

In einer frisch angesetzten Flotte aus 150 Teilen Wasser und 8 Teilen Farbstoff aus Beispiel 1t wurde durch portionsweise Zugabe von 23 Teilen einer 15%-igen Sodalösung der pH sofort auf >8,5 gestellt und zur Fixierung des Farbstoffs 240 Minuten bei 50°C unter walken zwischen 8,7 - 9,5 gehalten. Anschließend folgte 4 mal eine 10 minütige Waschoperation in 200 Teilen Wasser bei 40°C. Durch Zugabe von 200 Teilen Wasser und 1,1 Teilen Ameisensäure wurde ein pH von 4,2 eingestellt.

Das derart gefärbte Leder wurde in einer frisch angesetzten Flotte aus 30 Teilen Wasser und 2 Teilen eines Polymergerbstoffs 30 Minuten bei 30°C nachgegerbt. Anschließend versetzte man die Flotte mit 2 Teilen eines hydrophobierenden Fettungsmittels. Nach einer Walkzeit von weiteren 30 Minuten wurden 5 Teile eines Sulfongerbstoffs und 4 Teile eines Harzgerbstoffs zugesetzt und weitere 60 Minuten gewalkt. Schließlich säuerte man mit 2,0 Teilen Ameisensäure auf pH 3,8 ab und walkte einmal 10 Minuten und dreimal 30 Minuten. Nach einer 10 minütigen Waschoperation mit 200 Teilen Wasser bei 40°C wurde das Leder in neuer Flotte bestehend aus 100 Teilen Wasser, 4,5 Teilen eines Mischlicker (Basis sulfitiertes Fischöl und synthetisches Öl), 0,5 Teilen eines lanolinbasierten Lickers durch 40 minütiges Walken bei 55°C gefettet. Anschließend säuerte man mit 1,5 Teilen konzentrierte Ameisensäure auf pH 3,3 ab und walkte 40 Minuten. Das gefärbte und gefettete Leder wurde noch mit 15°C kaltem Wasser 15 Minuten gespült und anschließend ausgereckt, vakuumiert, über Nacht bei Raumtemperatur hängegetrocknet, konditioniert, gestollt und gespannt.

Es wurde ein tiefschwarzes Leder erhalten, das über hervorragende Wasch-, Schweiß- , Reib- und Migrationsechtheit verfügt.

Färbevorschrift 34:
Ein Lederstück von 100 Gewichtsteilen eines auf übliche Weise organisch gegerbten Rindsleders der Falzstärke 1,0 mm wurde in einem mit 200 Teilen Wasser gefüllten Wackerfass 20 Minuten bei 30°C gewaschen. Danach wurde mit einer Flotte aus 150 Teilen Wasser, 2 Teilen eines Dispergiermittels und 7 Teilen Farbstoff aus Beispiel 1 u 60 Minuten bei pH 4,3 und 30°C gefärbt. Durch portionsweise Zugabe von 30 Teilen einer 15%-igen Sodalösung wurde bei 40°C der pH-Wert der Flotte zur Fixierung des Farbstoffs 200 Minuten lang unter Walken im Bereich von 8,7 und 9,2 gehalten. Nach Flottenwechsel wurde durch Zugabe von 200 Teilen Wasser und 1,0 Teilen Ameisensäure ein pH von 4,5 eingestellt.
   Die Nachgerbung/Fettung/mechanischen Arbeiten wurden wie in Färbevorschrift 1 unter b) beschrieben durchgeführt.

Es wurde ein tiefschwarzes Leder erhalten, das über hervorragende Wasch-, Schweiß- , Reib- und Migrationsechtheit verfügt.

Färbevorschrift 35:
Ein Lederstück von 100 Gewichtsteilen eines auf übliche Weise chromgegerbten Rindsleders der Falzstärke 1,8 mm wurde in einem mit 200 Teilen Wasser und 0,1 Teilen Ameisensäure gefüllten Wackerfass 10 Minuten bei 35°C gewaschen und anschließend in einer aus 100 Teilen Wasser, 2 Teilen Natriumformiat, 1 Teil Natriumacetat, 1,5 Teil Natriumbicarbonat und 1 Teil eines Dispergiermittels bestehenden Flotte 120 Minuten bei 35°C neutralisiert. Danach hatte die Entsäuerungsflotte einen pH-Wert von 6,4. Anschließend wurde mit 200 Teilen Wasser 10 Minuten bei 35°C gewaschen.

In einer frisch angesetzten Flotte aus 150 Teilen Wasser und 7 Teilen Farbstoff aus Beispiel 2n wurde 60 Minuten bei pH 6,3 und 30°C gefärbt. Durch portionsweise Zugabe von 23 Teilen einer 15%-igen Sodalösung wurde zur Fixierung der pH-Wert der Flotte zwischen 8,7 - 9,5 eingestellt und es wurde 210 Minuten lang bei 50°C gewalkt. Nach Flottenwechsel wurde durch Zugabe von 200 Teilen Wasser und 1,0 Teilen Ameisensäure ein pH von 4,3 eingestellt.

Das derart gefärbte Leder wurde in einer frisch angesetzten Flotte aus 30 Teilen,Wasser und 2 Teilen eines Polymergerbstoffs 30 Minuten bei 30°C nachgegerbt. Anschließend versetzte man die Flotte mit 2 Teilen eines hydrophobierenden Fettungsmittels. Nach einer Walkzeit von weiteren 30 Minuten wurden 5 Teile eines Sulfongerbstoffs und 4 Teile eines Harzgerbstoffs zugesetzt und weitere 60 Minuten gewalkt. Schließlich säuerte man mit 2,0 Teilen Ameisensäure auf pH 3,8 ab und walkte einmal 10 Minuten und dreimal 30 Minuten. Nach einer 10 minütigen Waschoperation mit 200 Teilen Wasser bei 40°C wurde das Leder in neuer Flotte bestehend aus 100 Teilen Wasser, 4,5 Teilen eines Mischlicker (Basis sulfitiertes Fischöl und synthetisches Öl), 0,5 Teilen eines lanolinbasierten Lickers durch 40 minütiges Walken bei 55°C gefettet. Anschließend säuerte man mit 1,5 Teilen konzentrierte Ameisensäure auf pH 3,3 ab und walkte 40 Minuten. Das gefärbte und gefettete Leder wurde noch mit 15°C kaltem Wasser 15 Minuten gespült und anschließend ausgereckt, vakuumiert, über Nacht bei Raumtemperatur hängegetrocknet, konditioniert, gestollt und gespannt.

Es wurde ein tiefschwarzes Leder erhalten, das über hervorragende Wasch-, Schweiß- , Reib- und Migrationsechtheiten verfügt.

### Färbevorschrift 36

Ein Lederstück von 100 Gewichtsteilen eines auf übliche Weise chromgegerbten Rindsleders der Falzstärke 1,8 mm wurde in einem mit 300 Teilen Wasser gefüllten Wackerfass 10 Minuten bei 35°C gewaschen und anschließend in einer aus 100 Teilen Wasser, 2 Teilen Natriumformiat, 1 Teil Natriumacetat und 2,2 Teilen Natriumbicarbonat bestehenden Flotte 120 Minuten bei 40°C neutralisiert. Die Entsäuerungsflotte hatte dann einen pH-Wert von 7,2. Zur Entsäurungsflotte wurden 10,5 Teile Farbstoff
1bj gegeben und 30 Minuten bei pH 6,9 und 40°C gefärbt. Durch portionsweise Zugabe von 8 Teilen Soda stellte man den pH-Wert der Flotte zwischen 9,2 - 9,7 ein und walkte 75 Minuten bei 40°C. Anschließend folgte 2 mal eine 20 minütige Waschoperation in 300 Teilen Wasser bei 40°C. Durch Zugabe von 200 Teilen Wasser und 1,2 Teilen Ameisensäure wurde ein pH von 3,9 eingestellt.

Das derart gefärbte Leder wurde in einer frisch angesetzten Flotte aus 100 Teilen Wasser und 2 Teilen eines Polymergerbstoffs 30 Minuten bei 30°C nachgegerbt. Anschließend versetzte man die Flotte mit 2 Teilen eines hydrophobierenden Fettungsmittels. Nach einer Walkzeit von weiteren 30 Minuten wurden 5 Teile eines Sulfongerbstoffs und 4 Teile eines Harzgerbstoffs zugesetzt und weitere 60 Minuten gewalkt. Zur Nachgerbflotte wurden 4,5 Teilen eines Mischlickers (Basis sulfitiertes Fischöl und synthetisches Öl) und 0,5 Teilen eines lanolinbasierten Lickers zugegeben und das Leder durch 40 minütiges Walken bei 55°C gefettet. Anschließend säuerte man mit 1,6 Teilen konzentrierte Ameisensäure auf pH 3,6 ab und walkte 45 Minuten. Das gefärbte und gefettete Leder wurde noch mit 300 Teilen 20°C kaltem Wasser 10 Minuten gewaschen und anschließend ausgereckt, 1,5 Minuten bei 70°C vakuumiert, über Nacht bei Raumtemperatur hängegetrocknet, konditioniert, gestollt und gespannt.

Es wurde ein tiefschwarzes Leder erhalten, das über hervorragende Wasch-, Schweiß- , Reib- und Migrationsechtheiten verfügt.

In analoger Weise wurden die in Tabelle 12 angegebenen Färbungen durchgeführt:

**Tabelle 12**

| Farbstoff Beispiel-Nr. | Färbevorschrift Nr. | Gew. Teile (%) | Farbe des Leders |
|---|---|---|---|
| 1a | 3 | 2,3 | schwarz |
| | 28 | 8,4 | schwarz |
| | 34 | 17,9 | schwarz |
| | 21 | 10,0 | schwarz |
| 1b | 5 | 2,4 | schwarz |
| | 23 | 8,4 | schwarz |
| | 32 | 16,9 | schwarz |
| | 18 | 4,7 | schwarz |
| | 27 | 10,5 | schwarz |
| | 33 | 18,7 | schwarz |
| 1c | 6 | 9,8 | dunkelgrün |
| | 16 | 9,8 | dunkelgrün |
| 1d | 1 | 18,1 | dunkelgrün |
| | 29 | 4,6 | dunkelgrün |
| 1e | 20 | 3,3 | dunkelgrün |
| 1f | 35 | 11,7 | dunkelgrün |
| 1g | 7 | 15,4 | dunkelgrün |
| 1h | 8 | 5,0 | grün |
| | 24 | 5,2 | grün |
| 1i | 7 | 2,7 | dunkelgrün |
| | 7 | 15,4 | dunkelgrün |
| | 17 | 5,1 | dunkelgrün |
| 1j | 4 | 2,7 | schwarz |
| | 10 | 15,4 | schwarz |
| | 31 | 5,1 | schwarz |
| 1k | 12 | 10,0 | schwarz |
| | 19 | 10,0 | schwarz |
| 1l | 15 | 15,1 | grün |
| 1m | 26 | 8,8 | schwarz |
| 1n | 15 | 15,1 | schwarz |
| 1o | 26 | 8,8 | dunkelgrün |
| 1p | 13 | 6,5 | schwarz |
| 1q | 14 | 8,3 | schwarz |
| 1r | 22 | 15,1 | schwarz |
| 1s | 1 | 8,3 | schwarz |
| 1t | 3 | 12,0 | schwarz |
| 1u | 11 | 3,8 | schwarz |
| 1v | 22 | 4,7 | schwarz |
| 1z | 33 | 9,0 | dunkelgrün |
| 1aa | 13 | 7,6 | dunkelblau |
| 1ab | 6 | 6,2 | dunkelblau |
| 1ac | 2 | 7,9 | dunkelblau |
| 1ad | 7 | 5,3 | dunkelblau |
| 1ae | 9 | 8,8 | blau |
| 1af | 8 | 7,4 | schwarz |
| 1ag | 4 | 7,9 | schwarz |
| 1ah | 14 | 8,8 | schwarz |
| 1ai | 5 | 10,1 | schwarz |
| 1aj | 23 | 5,9 | schwarz |
| 1ak | 17 | 14,3 | schwarz |
| 1al | 31 | 13,2 | schwarz |
| 1am | 1 | 19,3 | schwarz |
| 1an | 4 | 1,8 | schwarz |
| 1ao | 11 | 5,7 | grün |
| 1ap | 28 | 3,8 | grün |
| 1aq | 20 | 6,4 | grün |
| 1ar | 13 | 12,5 | schwarz |
| 1as | 26 | 10,5 | schwarz |
| 1at | 35 | 7,7 | schwarz |
| 1au | 15 | 4,6 | schwarz |
| 1av | 16 | 2,3 | schwarz |
| 1aw | 6 | 3,1 | grün |
| 1ax | 34 | 8,6 | schwarz |
| 1ay | 18 | 17,3 | schwarz |
| 1az | 31 | 2,8 | schwarz |
| 1ba | 8 | 5,1 | schwarz |
| 1bb | 10 | 6,2 | schwarz |
| 1bc | 33 | 11,3 | schwarz |
| 1bad | 1 | 7,1 | dunkelgrün |
| 1be | 25 | 13,7 | dunkelgrün |
| 1bf | 29 | 18,1 | dunkelgrün |
| 1bg | 21 | 4,4 | dunkelgrün |
| 1bh | 12 | 3,5 | dunkelgrün |
| 1bi | 17 | 6,2 | grün |
| 1bj | 2 | 2,1 | schwarz |
| 1bk | 23 | 3,6 | grün |
| 1bl | 30 | 5,2 | schwarz |
| 1bm | 27 | 8,9 | schwarz |
| 1bn | 14 | 5,6 | grün |
| 1bo | 32 | 3,1 | grün |
| 1bp | 22 | 14,5 | grün |
| 1bq | 24 | 9,6 | schwarz |
| 1br | 9 | 5,4 | schwarz |
| 1bs | 7 | 7,5 | schwarz |
| 1bt | 5 | 2,9 | schwarz |
| 1bu | 3 | 9,8 | schwarz |
| 1bv | 19 | 4,9 | schwarz |
| 1bw | 8 | 1,8 | schwarz |
| 1bx | 10 | 5,7 | schwarz |
| 1by | 33 | 3,8 | blau |
| 1bz | 1 | 6,4 | blau |
| 1ca | 25 | 12,5 | blau |
| 1cb | 29 | 10,5 | blau |
| 1cc | 21 | 7,7 | blau |
| 1cd | 12 | 4,6 | blau |
| 1ce | 17 | 2,3 | blau |
| 1cf | 2 | 3,1 | blau |
| 1cg | 23 | 8,6 | blau |
| 1ch | 30 | 17,3 | blau |
| 1ci | 27 | 2,8 | blau |
| 1cj | 14 | 5,1 | blau |
| 1ck | 32 | 6,2 | blau |
| 1cl | 22 | 12,5 | blau |
| 1cm | 24 | 10,5 | blau |
| 1cn | 9 | 7,7 | blau |
| 1co | 7 | 4,6 | blau |
| 1cp | 5 | 2,3 | blau |
| 1cq | 3 | 3,1 | blau |
| 1cr | 19 | 8,6 | blau |
| 1cs | 35 | 17,3 | blau |
| 1ct | 15 | 2,8 | blau |
| 1cu | 16 | 5,1 | blau |
| 1cv | 6 | 6,2 | blau |
| 1cw | 34 | 11,3 | blau |
| 1cx | 18 | 7,1 | blau |
| 1cy | 31 | 13,7 | blau |
| 1cz | 4 | 18,1 | blau |
| 1da | 11 | 4,4 | blau |
| 1db | 28 | 3,5 | blau |
| 1dc | 20 | 6,2 | blau |
| 1dd | 13 | 2,1 | blau |
| 1de | 26 | 3,6 | grün |
| 1df | 35 | 5,2 | grün |
| 1dg | 15 | 8,9 | schwarz |
| 1dh | 16 | 5,6 | schwarz |
| 1di | 6 | 3,1 | schwarz |
| 1dj | 25 | 14,5 | schwarz |
| 1dk | 29 | 9,6 | schwarz |
| 1dl | 21 | 5,4 | grün |
| 1dm | 12 | 7,5 | grün |
| 1dn | 17 | 2,9 | grün |
| 1do | 2 | 9,8 | schwarz |
| 1dp | 23 | 4,9 | schwarz |
| 1dq | 30 | 1,8 | schwarz |
| 1dr | 27 | 5,7 | schwarz |
| 1ds | 14 | 3,8 | schwarz |
| 1dt | 32 | 6,4 | schwarz |
| 1du | 22 | 12,5 | schwarz |
| 1dv | 24 | 10,5 | schwarz |
| 1dw | 9 | 7,7 | blau |
| 1dx | 7 | 4,6 | blau |
| 1dy | 5 | 2,3 | blau |
| 1dz | 3 | 3,1 | blau |
| 1ea | 19 | 8,6 | blau |
| 1eb | 35 | 17,3 | blau |
| 1ec | 15 | 2,8 | blau |
| 1ed | 16 | 5,1 | blau |
| 1ee | 6 | 6,2 | blau |
| 1ef | 14 | 5,6 | blau |
| 1eg | 32 | 3,1 | blau |
| 1eh | 22 | 14,5 | blau |
| 1ei | 24 | 9,6 | blau |
| 1ej | 9 | 5,4 | blau |
| 1ek | 7 | 7,5 | blau |
| 1el | 5 | 2,9 | blau |
| 1em | 3 | 1,8 | blau |
| 1en | 19 | 5,7 | blau |
| 1eo | 35 | 3,8 | blau |
| 1ep | 15 | 6,4 | blau |
| 1eq | 16 | 12,5 | blau |
| 1er | 6 | 10,5 | blau |
| 1es | 34 | 7,7 | blau |
| 1et | 18 | 4,6 | blau |
| 1eu | 31 | 2,3 | blau |
| 1ev | 4 | 3,1 | blau |
| 1ew | 11 | 8,6 | blau |
| 1ex | 28 | 17,3 | blau |
| 1ey | 20 | 2,8 | blau |
| 1ez | 13 | 5,1 | blau |
| 1fa | 15 | 6,2 | blau |
| 1fb | 16 | 11,3 | blau |
| 1fc | 6 | 7,1 | blau |
| 1fd | 14 | 13,7 | blau |
| 1fe | 32 | 18,1 | blau |
| 1ff | 22 | 7,7 | blau |
| 1fg | 24 | 4,6 | grün |
| 1fh | 9 | 2,3 | grün |
| 1fi | 7 | 3,1 | schwarz |
| 1fj | 5 | 8,6 | schwarz |
| 1fk | 3 | 17,3 | schwarz |
| 1fl | 19 . | 2,8 | schwarz |
| 1fm | 34 | 5,1 | schwarz |
| 1fn | 18 | 6,2 | grün |
| 1fo | 31 | 5,6 | grün |
| 1fp | 4 | 3,1 | grün |
| 1fq | 11 | 14,5 | schwarz |
| 1fr | 28 | 9,6 | schwarz |
| 1fs | 20 | 5,4 | schwarz |
| 1ft | 13 | 8,2 | schwarz |
| 1fu | 15 | 1,9 | schwarz |
| 1fv | 16 | 2,6 | schwarz |
| 1fw | 6 | 14,3 | schwarz |
| 1fx | 5 | 6,7 | schwarz |
| 2a | 2 | 2,3 | schwarz |
| | 6 | 8,4 | schwarz |
| | 11 | 17,9 | schwarz |
| | 17 | 10,0 | schwarz |
| 2b | 9 | 2,4 | schwarz |
| | 25 | 8,4 | schwarz |
| | 21 | 4,7 | schwarz |
| | 21 | 10,5 | schwarz |
| | 21 | 18,7 | schwarz |
| 2c | 25 | 11,0 | dunkelgrün |
| 2d | 17 | 10,8 | dunkelgrün |
| 2e | 30 | 17,0 | dunkelgrün |
| 2f | 34 | 11,5 | dunkelgrün |
| 2g | 7 | 11,2 | dunkelgrün |
| 2h | 3 | 8,4 | schwarz |
| | 24 | 8,4 | schwarz |
| 2i | 16 | 8,4 | dunkelgrün |
| 2j | 27 | 11,4 | schwarz |
| 2k | 10 | 6,6 | schwarz |
| | 10 | 13,2 | schwarz |
| 21l | 12 | 15,1 | grün |
| 2m | 15 | 8,8 | schwarz |
| 2n | 15 | 8,8 | schwarz |
| 2o | 1 | 8,2 | dunkelgrün |
| 2p | 19 | 2,9 | schwarz |
| 2q | 21 | 4,5 | schwarz |
| 2r | 4 | 6,7 | schwarz |
| 2s | 20 | 15,0 | schwarz |
| 2t | 5 | 4,6 | schwarz |
| 2u | 17 | 6,7 | schwarz |
| 2v | 19 | 8,2 | schwarz |
| 2z | 8 | 2,9 | dunkelgrün |
| 2aa | 9 | 4,5 | dunkelblau |
| 2ab | 10 | 6,7 | dunkelblau |
| 2ac | 11 | 7,7 | dunkelblau |
| 2ad | 18 | 9,1 | dunkelblau |
| 2ae | 16 | 8,3 | blau |
| 2af | 14 | 5,9 | schwarz |
| 2ag | 15 | 11,0 | schwarz |
| 2ah | 14 | 8,8 | schwarz |
| 2ai | 6 | 10,9 | schwarz |
| 2aj | 7 | 11,1 | dunkelblau |
| 2ak | 15 | 9,7 | dunkelblau |
| 2al | 12 | 8,4 | dunkelgrün |
| 2am | 13 | 7,6 | schwarz |
| 2an | 23 | 5,9 | schwarz |
| 2ao | 17 | 14,3 | schwarz |
| 2ap | 31 | 13,2 | schwarz |
| 2aq | 1 | 19,3 | schwarz |
| 2ar | 4 | 1,8 | schwarz |
| 2as | 11 | 5,7 | grün |
| 2at | 28 | 3,8 | grün |
| 2au | 20 | 6,4 | grün |
| 2av | 13 | 12,5 | schwarz |
| 2aw | 26 | 10,5 | schwarz |
| 2ax | 35 | 7,7 | schwarz |
| 2ay | 15 | 4,6 | schwarz |
| 2az | 16 | 2,3 | schwarz |
| 2ba | 6 | 3,1 | schwarz |
| 2bb | 34 | 8,6 | schwarz |
| 2bc | 18 | 17,3 | schwarz |
| 2bd | 31 | 2,8 | schwarz |
| 2be | 8 | 5,1 | schwarz |
| 2bf | 10 | 6,2 | schwarz |
| 2bg | 33 | 11,3 | schwarz |
| 2bh | 1 | 7,1 | dunkelgrün |
| 2bi | 25 | 13,7 | dunkelgrün |
| 2bj | 29 | 18,1 | dunkelgrün |
| 2bk | 21 | 4,4 | dunkelgrün |
| 2bl | 12 | 3,5 | dunkelgrün |
| 2bm | 17 | 6,2 | dunkelgrün |
| 2bn | 2 | 2,1 | schwarz |
| 2bo | 23 | 3,6 | dunkelgrün |
| 2bp | 30 | 5,2 | grün |
| 2bq | 27 | 8,9 | schwarz |
| 2br | 14 | 5,6 | grün |
| 2bs | 32 | 3,1 | grün |
| 2bt | 22 | 14,5 | grün |
| 2bu | 24 | 9,6 | schwarz |
| 2bv | 9 | 5,4 | schwarz |
| 2bw | 7 | 7,5 | schwarz |
| 2bx | 5 | 2,9 | schwarz |
| 2by | 3 | 9,8 | schwarz |
| 2bz | 19 | 4,9 | schwarz |
| 2ca | 8 | 1,8 | schwarz |
| 2cb | 10 | 5,7 | schwarz |
| 2cc | 33 | 3,8 | blau |
| 2cd | 1 | 6,4 | blau |
| 2ce | 25 | 12,5 | blau |
| 2cf | 29 | 10,5 | blau |
| 2cg | 21 | 7,7 | blau |
| 2ch | 12 | 4,6 | blau |
| 2ci | 17 | 2,3 | blau |
| 2cj | 2 | 3,1 | blau |
| 2ck | 23 | 8,6 | blau |
| 2cl | 30 | 17,3 | blau |
| 2cm | 27 | 2,8 | blau |
| 2cn | 14 | 5,1 | blau |
| 2co | 32 | 6,2 | blau |
| 2cp | 22 | 12,5 | blau |
| 2cq | 24 | 10,5 | blau |
| 2cr | 9 | 7,7 | blau |
| 2cs | 7 | 4,6 | blau |
| 2ct | 5 | 2,3 | blau |
| 2cu | 3 | 3,1 | blau |
| 2cv | 19 | 8,6 | blau |
| 2cw | 35 | 17,3 | blau |
| 2cx | 15 | 2,8 | blau |
| 2cy | 16 | 5,1 | blau |
| 2cz | 6 | 6,2 | blau |
| 2da | 34 | 11,3 | blau |
| 2db | 18 | 7,1 | blau |
| 2dc | 31 | 13,7 | blau |
| 2dd | 4 | 18,1 | blau |
| 2de | 11 | 4,4 | blau |
| 2df | 28 | 3,5 | blau |
| 2dg | 20 | 6,2 | blau |
| 2dh | 13 | 2,1 | grün |
| 2di | 26 | 3,6 | grün |
| 2dj | 35 | 5,2 | schwarz |
| 2dk | 15 | 8,9 | schwarz |
| 2dl | 16 | 5,6 | schwarz |
| 2dm | 6 | 3,1 | schwarz |
| 2dn | 25 | 14,5 | schwarz |
| 2do | 29 | 9,6 | grün |
| 2dp | 21 | 5,4 | grün |
| 2dq | 12 | 7,5 | grün |
| 2dr | 17 | 2,9 | schwarz |
| 2ds | 2 | 9,8 | schwarz |
| 2dt | 23 | 4,9 | schwarz |
| 2du | 30 | 1,8 | schwarz |
| 2dv | 27 | 5,7 | schwarz |
| 2dw | 14 | 3,8 | schwarz |
| 2dx | 32 | 6,4 | schwarz |
| 2dy | 22 | 12,5 | schwarz |
| 2dz | 24 | 10,5 | blau |
| 2ea | 9 | 7,7 | blau |
| 2eb | 7 | 4,6 | blau |
| 2ec | 5 | 2,3 | blau |
| 2ed | 3 | 3,1 | blau |
| 2ee | 19 | 8,6 | blau |
| 2ef | 35 | 17,3 | blau |
| 2eg | 15 | 2,8 | blau |
| 2eh | 16 | 5,1 | blau |
| 2ei | 6 | 6,2 | blau |
| 2ej | 14 | 5,6 | blau |
| 2ek | 32 | 3,1 | blau |
| 2el | 22 | 14,5 | blau |
| 2em | 24 | 9,6 | blau |
| 2en | 9 | 5,4 | blau |
| 2eo | 7 | 7,5 | blau |
| 2ep | 5 | 2,9 | blau |
| 2eq | 3 | 1,8 | blau |
| 2er | 19 | 5,7 | blau |
| 2es | 35 | 3,8 | blau |
| 2et | 15 | 6,4 | blau |
| 2eu | 16 | 12,5 | blau |
| 2ev | 6 | 10,5 | blau |
| 2ew | 34 | 7,7 | blau |
| 2ex | 18 | 4,6 | blau |
| 2ey | 31 | 2,3 | blau |
| 2ez | 4 | 3,1 | blau |
| 2fa | 11 | 8,6 | blau |
| 2fb | 28 | 17,3 | blau |
| 2fc | 20 | 2,8 | blau |
| 2fd | 13 | 5,1 | blau |
| 2fe | 15 | 6,2 | blau |
| 2ff | 16 | 11,3 | blau |
| 2fg | 6 | 7,1 | blau |
| 2fh | 14 | 13,7 | blau |
| 2fi | 32 | 18,1 | blau |
| 2fj | 22 | 7,7 | grün |
| 2fk | 24 | 4,6 | grün |
| 2fl | 9 | 2,3 | schwarz |
| 2fm | 7 | 3,1 | schwarz |
| 2fn | 5 | 8,6 | schwarz |
| 2fo | 3 | 17,3 | schwarz |
| 2fp | 19 | 2,8 | schwarz |
| 2fq | 34 | 5,1 | grün |
| 2fr | 18 | 6,2 | grün |
| 2fs | 31 | 5,6 | grün |
| 2ft | 4 | 3,1 | schwarz |
| 2fu | 11 | 14,5 | schwarz |
| 2fv | 28 | 9,6 | schwarz |
| 2fw | 20 | 5,4 | schwarz |
| 2fx | 13 | 8,2 | schwarz |
| 2fy | 11 | 8,6 | schwarz |
| 2fz | 28 | 17,3 | schwarz |
| 2ga | 20 | 2,8 | schwarz |
| 3 | 2 | 6,9 | schwarz |
| 4 | 3 | 3,9 | schwarz |
| 5a | 8 | 10,0 | grün |
| 5b | 22 | 7,3 | schwarz |
| 5c | 16 | 10,0 | schwarz |
| 5d | 24 | 10,9 | dunkelgrün |
| 5e | 30 | 11,1 | dunkelgrün |
| 5f | 28 | 11,1 | grün |
| 5g | 23 | 12,4 | schwarz |
| 5h | 31 | 12,4 | schwarz |
| 5i | 26 | 12,4 | schwarz |
| 5j | 15 | 3,6 | dunkelblau |
| 5k | 27 | 12,3 | dunkelblau |
| 6a | 13 | 8,4 | grün |
| 6b | 28 | 14,4 | schwarz |
| 6c | 32 | 14,4 | schwarz |
| 6d | 35 | 12,4 | dunkelgrün |
| 6e | 34 | 8,4 | dunkelgrün |
| 6f | 33 | 14,4 | grün |
| 6g | 4 | 3,4 | schwarz |
| | 4 | 13,6 | schwarz |
| | 19 | 3,4 | schwarz |
| | 19 | 13,6 | schwarz |
| 6h | 18 | 5,8 | schwarz |
| 6i | 35 | 19,8 | schwarz |
| 6j | 17 | 9,7 | grün |
| 6k | 14 | 7,6 | dunkelblau |
| 6l | 26 | 17,3 | dunkelblau |
| 7 | 16 | 8,6 | dunkelgrün |
| 8 | 15 | 6,8 | dunkelgrün |
| 9 | 31 | 5,9 | dunkelgrün |
| 10 | 29 | 3,9 | dunkelgrün |
| 11 | 30 | 10,0 | dunkelgrün |
| 12 | 22 | 7,3 | blau |
| 13 | 21 | 10,0 | rot |
| 14 | 18 | 7,3 | schwarz |
| 15 | 13 | 8,2 | braun |
| 16 | 34 | 11,1 | braun |
| 17a | 33 | 8,4 | braun |
| 17b | 32 | 7,6 | braun |
| 18a | 11 | 6,9 | braun |
| 18b | 2 | 10,9 | braun |
| 19 | 1 | 11,1 | blau |
| 20 | 5 | 8,8 | blau |
| 21a | 20 | 7,4 | braun |
| 21b | 3 | 8,8 | braun |
| 21c | 9 | 16,6 | braun |
| 21d | 7 | 15,4 | braun |
| 21e | 6 | 5,6 | gelbbraun |
| 21f | 4 | 5,2 | hellbraun |
| 21g | 12 | 13,3 | dunkelbraun |
| 21h | 10 | 5,6 | braun |
| | 35 | 5,6 | braun |
| 21i | 25 | 16,6 | braun |
| 21j | 33 | 15,4 | braun |
| 21k | 34 | 4,9 | braun |
| 21l | 24 | 7,9 | braun |
| 21m | 27 | 12,0 | braun |
| 21n | 31 | 10,0 | braun |
| 21o | 26 | 7,7 | braun |
| 21p | 31 | 9,2 | braun |
| 21q | 34 | 4,9 | braun |
| 21r | 15 | 7,0 | braun |
| 21s | 27 | 12,4 | braun |
| 21t | 22 | 9,4 | braun |
| 21u | 18 | 7,9 | braun |
| 21v | 17 | 11,3 | braun |
| 21z | 3 | 18,2 | braun |
| 22a | 12 | 8,8 | braun |
| 22b | 26 | 6,3 | braun |
| 22c | 23 | 5,6 | braun |
| 22d | 3 | 8,8 | braun |
| 22e | 34 | 6,4 | braun |
| 22f | 12 | 6,4 | braun |
| 22g | 4 | 5,6 | braun |
| 22h | 7 | 4,4 | braun |
| 22i | 8 | 13,3 | braun |
| 22j | 5 | 10,6 | braun |
| | 20 | 10,6 | braun |
| 22k | 14 | 10,2 | braun |
| 22l | 17 | 10,2 | braun |
| 22m | 34 | 14,6 | braun |
| 22n | 15 | 7,3 | braun |
| 22o | 19 | 7,3 | braun |
| 22p | 17 | 11,0 | braun |
| 22q | 11 | 9,2 | braun |
| 22r | 15 | 4,9 | braun |
| 22s | 9 | 7,0 | braun |
| 22t | 8 | 6,3 | braun |
| 22u | 32 | 11,1 | braun |
| 22v | 18 | 7,4 | braun |
| 22z | 16 | 11,0 | braun |
| 23a | 10 | 7,4 | braun |
| 23b | 20 | 7,4 | braun |
| 23c | 13 | 8,8 | braun |
| 23d | 16 | 8,4 | braun |
| 23e | 17 | 8,0 | gelbbraun |
| 23f | 21 | 8,8 | hellbraun |
| 23g | 25 | 8,9 | dunkelbraun |
| 23h | 24 | 4,7 | braun |
| 23i | 11 | 7,3 | braun |
| 23j | 12 | 4,7 | braun |
| 23k | 24 | 4,2 | braun |
| | 24 | 8,4 | braun |
| | 24 | 16,8 | braun |
| 23l | 29 | 16,8 | braun |
| 23m | 25 | 12,4 | braun |
| 23n | 16 | 14,1 | braun |
| 23o | 34 | 8,6 | braun |
| 23p | 1 | 12,0 | braun |
| 23q | 28 | 4,2 | braun |
| 23r | 22 | 8,6 | braun |
| 23s | 24 | 9,0 | braun |
| 23t | 27 | 9,0 | braun |
| 23u | 11 | 5,9 | braun |
| 23v | 2 | 12,7 | braun |
| 23z | 21 | 4,5 | braun |
| 24a | 13 | 8,8 | braun |
| 24b | 9 | 8,6 | braun |
| 24c | 21 | 9,0 | braun |
| 24d | 32 | 8,8 | braun |
| 24e | 30 | 6,2 | braun |
| 24f | 33 | 8,6 | braun |
| 24g | 24 | 9,0 | braun |
| 24h | 29 | 7,4 | braun |
| 24i | 9 | 4,2 | braun |
| | 9 | 8,4 | braun |
| | 9 | 16,8 | braun |
| 24j | 30 | 16,8 | braun |
| 24k | 15 | 12,4 | braun |
| 24l | 14 | 12,4 | braun |
| 24m | 17 | 14,0 | braun |
| 24n | 18 | 9,8 | braun |
| 24o | 27 | 4,2 | braun |
| 24p | 24 | 12,1 | braun |
| 24q | 27 | 12,4 | braun |
| 24r | 11 | 12,4 | braun |
| 24s | 13 | 11,8 | braun |
| 24t | 9 | 14,2 | braun |
| 24u | 10 | 14,0 | braun |
| 25a | 12 | 2,4 | braun |
| 25b | 25 | 4,6 | braun |
| 25c | 16 | 6,8 | dunkelbraun |
| 25d | 31 | 8,7 | braun |
| 25e | 17 | 8,8 | braun |
| 25f | 19 32 | 8,8 8,6 | braun dunkelbraun |
| 25g | 25 | 9,0 | braun |
| 25h | 14 | 11,0 | braun |
| 25i | 33 | 8,6 | braun |
| 25j | 24 | 9,0 | braun |
| 25k | 16 | 8,8 | braun |
| | 16 | 16,8 | braun |
| 25l | 10 | 14,0 | braun |
| 25m | 12 | 2,4 | braun |
| 25n | 4 | 15,0 | braun |
| 25o | 23 | 18,6 | braun |
| 26a | 25 | 4,6 | braun |
| 26b | 16 | 6,8 | braun |
| 26c | 31 | 8,7 | braun |
| 26d | 8 | 4,4 | braun |
| 26e | 5 | 4,6 | braun |
| 26f | 29 | 5,4 | braun |
| 26g | 32 | 10,8 | braun |
| 26h | 11 | 14,1 | braun |
| | 33 | 14,4 | braun |
| 26i | 17 | 12,2 | braun |
| 26j | 19 | 12,2 | braun |
| 26k | 7 | 11,0 | braun |
| 26l | 9 | 12,2 | braun |
| 26m | 5 | 11,0 | braun |
| 26n | 22 | 8,8 | braun |
| | 22 | 16,8 | braun |
| 26o | 28 | 2,4 | grün |
| 26p | 34 | 4,6 | grün |
| 26q | 21 | 4,8 | grün |
| 26r | 20 | 8,7 | grün |
| 26s | 18 | 6,9 | grün |
| | 18 | 15,1 | grün |
| 26t | 15 | 12,2 | grünbraun |
| 26u | 25 | 8,7 | grün |
| 26v | 1 | 11,0 | braun |
| 26z | 26 | 5,4 | grün |
| 26aa | 14 | 5,4 | grün |
| 26ab | 2 | 11,1 | grün |
| 26ac | 13 | 10,0 | grün |
| 26ad | 27 | 12,7 | braun |
| 26ae | 30 | 16,8 | braun |
| 26af | 11 | 5,4 | grün |
| 26ag | 24 | 11,9 | grün |
| 26ah | 23 | 10,5 | grün |
| 26ai | 29 | 2,7 | braun |
| 27 | 15 | 12,4 | braun |
| 28 | 14 | 12,4 | braun |
| 29a | 17 | 14,0 | olivgrün |
| 29b | 18 | 9,8 | grün |
| 29c | 10 | 8,8 | grün |
| 29d | 21 | 7,4 | grün |
| 29e | 32 | 7,4 | grün |
| 29f | 13 | 8,2 | grün |
| 29g | 4 | 7,4 | braun |
| 29h | 15 | 5,6 | hellbraun |
| 29i | 21 | 7,4 | braun |
| 29j | 32 | 7,4 | braun |
| 29k | 26 | 5,6 | braun |
| 29l | 23 | 12,1 | dunkelbraun |
| 29m | 12 | 14,6 | braun |
| 30a | 6 | 6,8 | grün |
| 30b | 24 | 8,7 | braun |
| 30c | 11 | 8,7 | braun |
| 30d | 28 | 2,4 | braun |
| 30e | 34 | 4,6 | braun |
| 30f | 16 | 10,6 | braun |
| 30g | 24 | 10,6 | braun |
| 30h | 34 | 4,8 | braun |
| 30i | 33 | 4,8 | braun |
| 30j | 18 | 4,2 | braun |
| 30k | 29 | 17,9 | braun |
| 30l | 1 | 11,0 | braun |
| 30m | 10 | 8,8 | braun |
| 30n | 1 | 11,0 | braun |
| 30o | 16 | 10,6 | braun |
| 30p | 24 | 10,6 | grün |
| 30q | 2 | 11,1 | grün |
| 30r | 19 | 10,1 | grün |
| 30s | 10 | 8,8 | grün |
| 30t | 20 | 8,8 | grün |
| 30u | 16 | 10,6 | grün |
| 30v | 24 | 10,6 | grün |
| 30z | 10 | 8,8 | grün |
| 30aa | 28 | 2,4 | grün |
| 30ab | 34 | 4,6 | grün |
| 30ac | 10 | 8,8 | grün |
| 30ad | 28 | 2,4 | grün |
| 30ae | 34 | 4,6 | grün |
| 30af | 9 | 4,8 | grün |
| 30ag | 32 | 12,6 | grün |
| 30ah | 7 | 11,6 | grün |
| 30ai | 20 | 7,8 | grün |
| 31 | 23 | 12,0 | braun |
| 32a | 16 | 10,6 | braun |
| 32b | 24 | 10,6 | braun |
| 32c | 28 | 10,4 | braun |
| 33a | 33 | 4,8 | rotbraun |
| 33b | 31 | 16,4 | rostrot |
| 33c | 29 | 17,9 | rotbraun |
| 34 | 30 | 12,0 | gelbbraun |
| 35a | 23 | 7,8 | braun |
| 35b | 23 | 7,8 | braun |
| 35c | 30 | 14,4 | braun |
| 35d | 19 | 7,8 | braun |
| 35e | 22 | 7,8 | braun |
| 36a | 27 | 7,8 | braun |
| 36b | 9 | 6,6 | braun |
| 36c | 21 | 6,6 | braun |
| 36d | 14 | 10,2 | braun |
| 37 | 17 | 10,2 | braun |
| 38 | 34 | 14,6 | braun |
| 39 | 15 | 7,3 | braun |
| 40 | 19 | 7,3 | braun |

## Patentansprüche

1. Verfahren zum Färben von Leder mit wenigstens einem anionischen Polyazofarbstoff F, der wenigstens 3 Diazogruppen und wenigstens eine unter alkalischen Bedingungen aktivierbare Gruppe der Formel A; 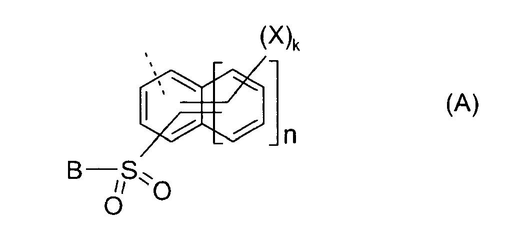 aufweist, worin
---- die Bindung zum Farbstoffmolekül bedeutet,
X für C₁-C₄-Alkyl oder C₁-C₄-Alkoxy steht,
k für 0, 1, 2 oder 3 steht,
n 0 oder 1 bedeutet, und
B für eine Gruppe CH=CH₂ oder eine Gruppe CH₂-CH₂-Q steht, worin Q eine unter alkalischen Bedingungen abspaltbare Gruppe steht,
umfassend die Behandlung des Leders mit einer wässrigen Flotte, enthaltend wenigstens einen Farbstoff F, bei einem pH-Wert von wenigstens pH 8 und höchstens pH 11.

2. Verfahren nach Anspruch 1, wobei k in Formel A für 0 steht.

3. Verfahren nach Anspruch 1 oder 2, worin B in Formel A für CH=CH₂, eine Gruppe CH₂-CH₂-O-SO₃H oder eine Gruppe CH₂-CH₂-O-C(O)CH₃ steht.

4. Verfahren nach einem der vorhergehenden Ansprüche, worin die Gruppe A über eine Gruppe -NH- oder -N=N- an das Farbstoffmolekül gebunden ist.

5. Verfahren nach einem der vorhergehenden Ansprüche, worin n = 0 ist.

6. Verfahren nach Anspruch 5, worin der Rest A ausgewählt ist unter den nachfolgenden Resten A1 bis A6:

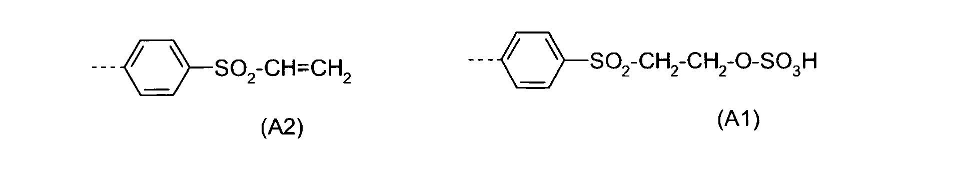

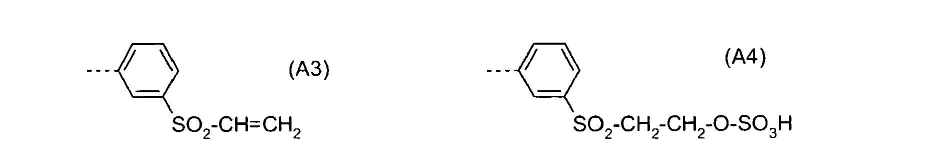

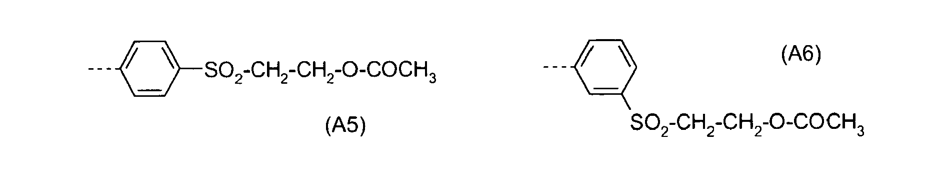

7. Verfahren nach einem der vorhergehenden Ansprüche, worin der Farbstoff F ausgewählt ist unter den Farbstoffen der allgemeinen Formeln I bis VII:
Dk¹-N=N-[Napht¹-N=N-]ₚKk¹[-N=N-Dk²]ₘ (I)
Dk¹-N=N-Napht¹-N=N-Tk¹-N=N-Kk¹[-N=N-Dk²]ₙ (II)
Dk¹-N=N-Napht¹-N=N-Tk¹-N=N-Kk¹-N=N-Tk²-N=N-Napht²-N=N-Dk² (III)
Dk¹-N=N-Kk¹-N=N-Tk¹-N=N-Kk²-N=N-Dk² (IV)
Dk¹-N=N-Napht¹-N=N-Naptht²-N=N-Kk¹[-N=N-Dk²]ₙ (V)
Kk³-N=N-Tk¹-N=N-Kk¹-N=N-A (VI)
Dk¹-N=N-P-N=N-Kk¹-N=N-R'-N=N-Dk² (VII)
worin:
n und p unabhängig voneinander für 0 oder 1 stehen;
m 0, 1 oder 2 bedeutet und wobei in Formel I m + p = 2 oder 3 ist;
Dk¹, Dk² unabhängig voneinander für einem von einem aromatischen A- min abgeleiten Rest stehen oder eine Gruppe der Formel A be- deutet, wobei in den Formeln I - V und VII jeweils wenigstens ei- ner der Reste Dk¹ oder Dk² für einen Rest der Formel A steht
Kk¹, Kk² unabhängig voneinander für einen ein-, zwei- oder dreiwertigen aromatischen, von Benzol, Napthalin, Pyrazol, Chinolin, Dipheny- lamin, Diphenylmethan, Pyridin, Pyrimidin oder Diphenylether abgeleiteten Rest stehen, der gegebenenfalls einen oder mehre- re der folgenden Reste als Substituenten aufweisen kann: SO₃H, COOH, OH, NH₂, NO₂, CN, Halogen, C₁-C₄-Alkyl, C₁-C₄- Hydroxyalkyl, Carboxy-C₁-C₄-alkyl, C₁-C₄-Alkoxy, C₁-C₄- Alkylamino, C₁-C₄-Dialkylamino, C₁-C₄-Alkylaminocarbonyl, C₁- C₄-Dialkylaminocarbonyl, C₁-C₄-Alkylcarbonylamino, N-(C₁-C₄- Alkylcarbonyl)-N-(C₁-C₄-alkylcarbonyl)amino, C₁-C₄-Hydroxy-C₁- C₄-alkylamino, Carboxy-C₁-C₄-alkylamino, Phenylcarbonylamino, C₁-C₄-Alkyisulfonyl, C₁-C₄-Alkylaminosulfonyl, C₁-C₄- Alkylsulfonylamino, Phenylsulfonyl, Phenylsulfonylamino, For- mamid oder 5- oder 6-gliedriges Heterocyclyl, das gegebenen- falls durch 1, 2 oder 3 der folgenden Reste: OH, Halogen, C₁-C₄- Alkyl oder Phenyl, substituiert ist, wobei 5-gliedriges aromati- sches Heterocyclyl gegebenenfalls am Stickstoff eine Phe- nylgruppe oder Naphthylgruppe trägt, die gegebenenfalls einen oder zwei der folgenden Reste aufweisen kann: OH, SO₃H, C₁- C₄-Alkyl, und/oder C₁-C₄-Alkoxy;
Kk³ für einen von Benzol, Pyridin, Pyrimidin oder Naphthalin abgelei- teten einwertigen Rest steht, der gegebenenfalls 1 oder 2 Hydro- xysulfonylgruppen aufweist und gegebenenfalls 1, 2 oder 3 weite- re Substituenten, ausgewählt unter SO₃H, COOH, OH, NH₂, NO₂, CN, Halogen, C₁-C₄-Alkyl, C₁-C₄-Hydroxyalkyl, Carboxy-C₁-C₄- alkyl, C₁-C₄-Alkoxy, C₁-C₄-Alkylamino, C₁-C₄-Dialkylamino, C₁-C₄- Alkylaminocarbonyl, C₁-C₄-Dialkylaminocarbonyl, C₁-C₄- Alkylcarbonylamino, N-(C₁-C₄-Alkylcarbonyl)-N-(C₁-C₄- alkylcarbonyl)amino, C₁-C₄-Hydroxy-C₁-C₄-alkylamino, Carboxy- C₁-C₄-alkylamino, Phenylcarbonylamino, C₁-C₄-Alkylsulfonyl, C₁- C₄-Alkylaminosulfonyl, C₁-C₄-Alkylsulfonylamino, Phenylsulfonyl, Phenylsulfonylamino, Formamid oder 5- oder 6-gliedriges Hete- rocyclyl, das gegebenenfalls durch 1, 2 oder 3 der folgenden Reste: OH, Halogen, C₁-C₄-Alkyl oder Phenyl, substituiert ist, wo- bei 5-gliedriges aromatisches Heterocyclyl gegebenenfalls am Stickstoff eine Phenylgruppe oder Naphthylgruppe trägt, die ge- gebenenfalls einen oder zwei der folgenden Reste aufweisen kann: OH, SO₃H, C₁-C₄-Alkyl, und/oder C₁-C₄-Alkoxy;
Tk¹, Tk² unabhängig voneinander für einen zweiwertigen aromatischen Rest stehen, der von Benzol, Pyridin, Pyrimidin, Diphenylamin, Diphenyl, Diphenylmethan, 2-Phenylbenzimidazol, Phenylsulfo- nylbenzol, Phenylaminosulfonylbenzol, Stilben oder Phenylami- nocarbonylbenzol abgeleitetet ist, die gegebenenfalls einen oder mehrere der folgenden Reste als Substituenten aufweisen kön- nen: SO₃H, COOH, OH, NH₂, NO₂, Halogen, C₁-C₄-Alkyl;
P und R' unabhängig voneinander für einen zweiwertigen aromatischen Rest stehen, der von Benzol oder Naphthalin abgeleitetet ist, die gegebenenfalls einen oder mehrere, z.B. 1, 2, 3, 4 oder 5 der fol- genden Reste als Substituenten aufweisen können: SO₃H, COOH, OH, NH₂, NO₂, Halogen, C₁-C₄-Alkyl, C₁-C₄-Hydroxyalkyl, Carboxy-C₁-C₄-alkyl, C₁-C₄-Alkoxy, C₁-C₄-Alkylamino, C₁-C₄- Dialkylamino, C₁-C₄-Alkylaminocarbonyl, C₁-C₄- Dialkylaminocarbonyl, C₁C₄-Alkylcarbonylamino, N-(C₁-C₄- Alkylcarbonyl)-N-(C₁-C₄-alkylcarbonyl)amino, C₁-C₄-Hydroxy-C₁- C₄-alkylamino, Carboxy-C₁-C₄-alkylamino, Phenylcarbonylamino, C₁-C₄-Alkylsulfonyl, C₁-C₄-Alkylaminosulfonyl, C₁-C₄- Alkylsulfonylamino, Phenylsulfonyl, Phenylsulfonylamino, For- mamid oder 5- oder 6-gliedriges Heterocyclyl, das gegebenen- falls durch 1, 2 oder 3 der folgenden Reste: OH, Halogen, C₁-C₄- Alkyl oder Phenyl, substituiert ist, wobei 5-gliedriges aromati- sches Heterocyclyl gegebenenfalls am Stickstoff eine Phe- nylgruppe oder Naphthylgruppe trägt, die gegebenenfalls einen oder zwei der folgenden Reste aufweisen kann: OH, SO₃H, C₁- C₄-Alkyl, und/oder C₁-C₄-Alkoxy;
Napht¹, Napht² unabhängig voneinander für einen von Naphthalin abgeleiteten zweiwertigen Rest stehen, der 1 oder 2 Hydroxysulfonylgruppen aufweist und gegebenenfalls 1, 2 oder 3 weitere Substituenten, ausgewählt unter OH, NH₂, C₁-C₄-Alkylamino, C₁-C₄-Dialkylamino C₁-C₄-Alkylsulfonylamino, Phenylsulfonylamino, 4- Methylphenylsulfonylamino, C₁-C₄-Alkylaminosulfonyl, Di-C₁-C₄- alkylaminosulfonyl, Phenylaminosulfonyl, 4- Methylphenylaminosulfonyl und Resten NHC(O)R^{x}, worin R^{x} für Wasserstoff, C₁-C₄-Alkyl, Maleinyl oder Phenyl, aufweisen kann; und den Metallkomplexen dieser Farbstoffe.

8. Verfahren nach Anspruch 7, worin Tk¹ und/oder Tk² in den Formeln II, III oder IV für einen Rest der allgemeinen Formel VIII 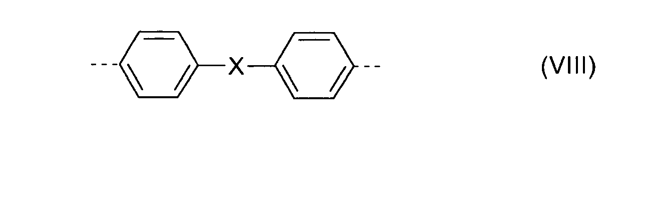 steht, worin ---- die Bindungen zu den Azogruppen darstellen und X für eine chemische Bindung oder einen bivalenten Rest, ausgewählt unter -CH=CH-, -SO₂-NR-, -SO₂-O-, -NR-, -SO₂-, -SO-NR- und -CO-NR- steht, worin R Wasserstoff oder C₁-C₄-Alkyl bedeutet.

9. Verfahren nach Anspruch 7 oder 8, worin Napht¹ und/oder Napth² für einen bivalenten Rest der allgemeinen Formel 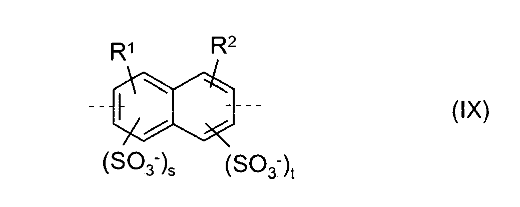 stehen, worin R¹ und R² unabhängig voneinander Wasserstoff, OH, NH₂ oder NHC(O)R³ bedeuten, worin R³ für Wasserstoff, C₁-C₄-Alkyl, Maleinyl oder Phenyl steht, und wenigstens einer der Reste R¹ und R² von Wasserstoff verschieden ist, ⁻⁻⁻⁻ die Bindungen zu den Azogruppen darstellen, s und t für 0 oder 1 stehen und die Summe s + t den Wert 1 oder 2 hat.

10. Verfahren nach Anspruch 7, worin der Farbstoff F ausgewählt ist unter Farbstoffen der allgemeinen Formel IIa 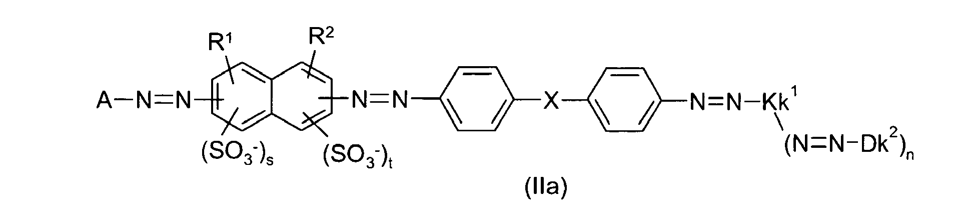 worin n, A, Dk² und Kk¹ die in Anspruch 7 angegebenen Bedeutungen haben, R¹ und R² unabhängig voneinander Wasserstoff, OH, NH₂ oder NHC(O)R³ bedeuten, worin R³ für Wasserstoff, C₁-C₄-Alkyl, Maleinyl oder Phenyl steht, und wenigstens einer der Reste R¹ und R² von Wasserstoff verschieden ist, s und t für 0 oder 1 stehen und die Summe s + t den Wert 1 oder 2 hat, und X für eine chemische Bindung oder einen bivalenten Rest, ausgewählt unter - CH=CH-, -SO₂-NR-, -SO₂-O-, -NR-, -SO₂-, -SO-NR- und -CO-NR- steht, worin R für Wasserstoff oder C₁-C₄-Alkyl bedeutet.

11. Verfahren nach einem der vorhergehenden Ansprüche, wobei man das Leder zunächst mit der wässrigen Flotte, enthaltend wenigstens einen Farbstoff F, bei
einem pH-Wert im Bereich von 3 bis 6,5 behandelt und anschließend in der Flotte einen pH-Wert von wenigstens 8 und höchstens 11 einstellt.

12. Verfahren nach einem der Ansprüche 1 bis 10, wobei die Färbung als einstufiges Verfahren durchgeführt wird.

13. Verfahren nach einem der vorhergehenden Ansprüche, wobei die Färbung vor der Nachgerbung durchgeführt wird.

14. Verfahren nach einem der vorhergehenden Ansprüche, wobei die Färbung bei Temperaturen im Bereich von 10 bis 60°C erfolgt.

15. Verwendung von Farbstoffen F, die wenigstens eine der in Anspruch 1 definierten, unter alkalischen Bedingungen aktivierbare Gruppe der Formel A aufweisen, zum Färben von Leder bei pH ≥ 8 und pH ≤ 11.

## Claims

1. A process for dyeing leather with at least one anionic polyazo dye F which has at least 3 diazo groups and at least one alkali-activable group of the formula A; 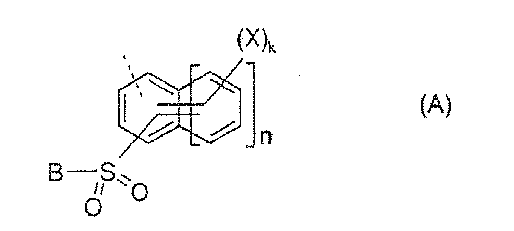 where
---- denotes the bond to the dye molecule,
X is C₁-C₄-alkyl or C₁-C₄-alkoxy,
k is 0, 1, 2 or 3,
n is 0 or 1 and
B is a CH=CH₂ group or a CH₂-CH₂-Q group, where Q is an alkaline-detachable group,
which comprises treating the leather with an aqueous float comprising at least one dye F at a pH of not less than 8 and not more than 11.

2. The process according to claim 1 wherein k in the formula A is 0.

3. The process according to claim 1 or 2 wherein B in the formula A is CH=CH₂, a CH₂-CH₂-O-SO₃H group or a CH₂-CH₂-O-C(O)CH₃ group.

4. The process according to any preceding claim wherein the group A is attached to the dye molecule via an -NH- or -N=N- group.

5. The process according to any preceding claim wherein n = 0.

6. The process according to claim 5 wherein the radical A is selected from the following radicals A1 to A6 :

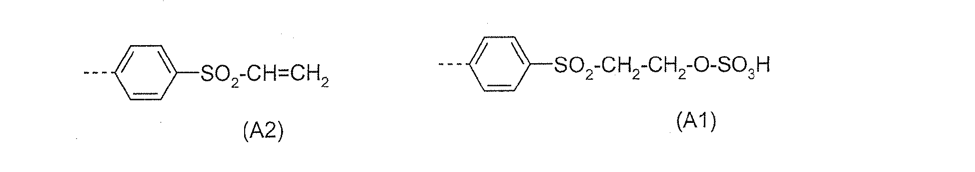

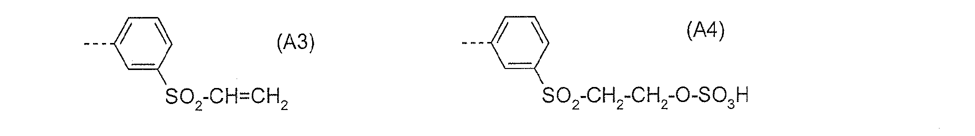

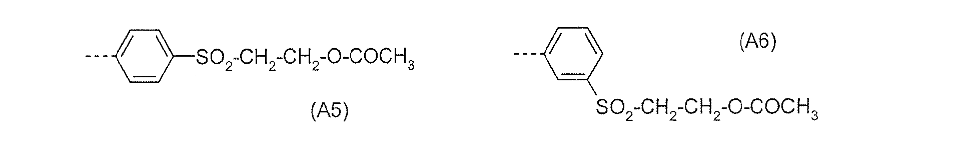

7. The process according to any preceding claim wherein the dye F is selected from the dyes of the general formulae I to VII:
Dk¹-N=N-[Napht¹-N=N-]ₚKk¹[-N=N-Dk²]ₘ (I)
Dk¹-N=N-Napht¹-N=N-Tk¹-N=N-Kk¹[-N=N-Dk²]ₙ (II)
Dk¹-N=N-Napht¹-N=N-Tk¹-N=N-Kk¹-N=N-Tk²-N=N-Napht²-N=N-Dk² (III)
Dk¹-N=N-Kk¹-N=N-Tk¹-N=N-Kk²-N=N-Dk² (IV)
Dk¹-N=N-Napht¹-N=N-Naptht²-N=N-Kk¹[-N=N-Dk²]ₙ (V)
Kk³-N=N-Tk¹-N=N-Kk¹-N=N-A (VI)
Dk¹-N=N-P-N=N-Kk¹-N=N-R'-N=N-Dk² (VII)
where
n and p are independently 0 or 1;
m is 0, 1 or 2 subject to the condition that m + p = 2 or 3 in the formula I;
Dk¹, Dk² independently represent a radical derived from an aromatic amine or denotes a group of the formula A subject to the condition that in each of the formulae I - V and VII at least one of Dk¹ and Dk² represents a radical of the formula A
Kk¹, Kk² independently represent a mono-, di- or trivalent aromatic radical which derives from benzene, naphthalene, pyrazole, quinoline, diphenylamine, diphenylmethane, pyridine, pyrimidine or diphenyl ether and which may optionally comprise one or more of the following radicals as substituents: SO₃H, COOH, OH, NH₂, NO₂, CN, halogen, C₁-C₄-alkyl, C₁-C₄- hydroxyalkyl, carboxy-C₁-C₄-alkyl, C₁-C₄- alkoxy, C₁-C₄-alkylamino, C₁-C₄- dialkylamino, C₁-C₄-alkylaminocarbonyl, C₁-C₄-dialkylaminocarbonyl, C₁-C₄- alkylcarbonylamino, N-(C₁-C₄- alkylcarbonyl)-N-(C₁-C₄- alkylcarbonyl)amino, C₁-C₄-hydroxy-C₁-C₄- alkylamino, carboxy-C₁-C₄-alkylamino, phenylcarbonylamino, C₁-C₄-alkylsulfonyl,
Kk³ C₁-C₄-alkylaminosulfonyl, C₁-C₄-alkylsulfonylamino, phenylsulfonyl, phenylsulfonylamino, formamide or 5- or 6-membered heterocyclyl, which is optionally substituted by 1, 2 or 3 of the following radicals: OH, halogen, C₁-C₄-alkyl or phenyl, 5-membered aromatic heterocyclyl optionally bearing on the nitrogen a phenyl or naphthyl group which can optionally comprise one or two of the following radicals: OH, SO₃H, C₁-C₄-alkyl, and/or C₁-C₄-alkoxy; is a monovalent radical which derives from benzene, pyridine, pyrimidine or naphthalene and which optionally comprises 1 or 2 hydroxysulfonyl groups and optionally 1, 2 or 3 further substituents selected from SO₃H, COOH, OH, NH₂, NO₂, CN, halogen, C₁-C₄-alkyl, C₁-C₄-hydroxyalkyl, carboxy-C₁-C₄-alkyl, C₁-C₄-alkoxy, C₁-C4-alkylamino, C₁-C₄- dialkylamino, C₁-C₄-alkylaminocarbonyl, C₁-C₄-dialkylaminocarbonyl, C₁-C₄-alkylcarbonylamino, N-(C₁-C₄- alkylcarbonyl)-N-(C₁-C₄- alkylcarbonyl)amino, C₁-C₄-hydroxy-C₁-C₄- alkylamino, carboxy-C₁-C₄-alkylamino, phenylcarbonylamino, C₁-C₄-alkylsulfonyl, C₁-C₄-alkylaminosulfonyl, C₁-C₄- alkylsulfonylamino, phenylsulfonyl, phenylsulfonylamino, formamide or 5- or 6-membered heterocyclyl, which is optionally substituted by 1, 2 or 3 of the following radicals: OH, halogen, C₁-C₄-alkyl or phenyl, 5-membered aromatic heterocyclyl optionally bearing on the nitrogen a phenyl or naphthyl group which can optionally comprise one
Tk¹, Tk² or two of the following radicals: OH, SO₃H, C₁-C₄-alkyl, and/or C₁-C₄-alkoxy; independently represent a divalent aromatic radical which derives from benzene, pyridine, pyrimidine, diphenylamine, biphenyl, diphenylmethane, 2-phenylbenzimidazole, phenylsulfonylbenzene, phenylaminosulfonylbenzene, stilbene or phenylaminocarbonylbenzene which may each optionally comprise one or more of the following radicals as substituents: SO₃H, COOH, OH, NH₂, NO₂, halogen, C₁-C₄-alkyl;
P and R' independently represent a divalent aromatic radical which derives from benzene or naphthalene which may each optionally comprise one or more, for example 1, 2, 3, 4 or 5, of the following radicals as substituents: SO₃H, COOH, OH, NH₂, NO₂, halogen, C₁-C₄-alkyl, C₁-C₄- hydroxyalkyl, carboxy-C₁-C₄-alkyl, C₁-C₄-alkoxy, C₁-C₄-alkylamino, C₁-C₄- dialkylamino, C₁-C₄-alkylaminocarbonyl, C₁-C₄-dialkylaminocarbonyl, C₁-C₄-alkylcarbonylamino, N-(C₁-C₄- alkylcarbonyl)-N-(C₁-C₄- alkylcarbonyl)amino, C₁-C₄-hydroxy-C₁-C₄- alkylamino, carboxy-C₁-C₄-alkylamino, phenylcarbonylamino, C₁-C₄-alkylsulfonyl, C₁-C₄-alkylaminosulfonyl, C₁-C₄- alkylsulfonylamino, phenylsulfonyl, phenylsulfonylamino, formamide or 5- or 6-membered heterocyclyl, which is optionally substituted by 1, 2 or 3 of the following radicals: OH, halogen, C₁-C₄-alkyl or phenyl, 5-membered aromatic heterocyclyl optionally bearing on the nitrogen a phenyl or naphthyl group which can optionally comprise one or two of the following radicals: OH, SO₃H, C₁-C₄-alkyl, and/or C₁-C₄-alkoxy;
Napht¹, Napht² independently represent a divalent radical which derives from naphthalene and which comprises 1 or 2 hydroxysulfonyl groups and may optionally comprise 1, 2 or 3 further substituents selected from OH, NH₂, C₁-C₄-alkylamino, C₁-C₄-dialkylamino, C₁-C₄- alkylsulfonylamino, phenylsulfonylamino, 4-methylphenylsulfonylamino, C₁-C₄- alkylaminosulfonyl, di-C₁-C₄- alkylaminosulfonyl, phenylaminosulfonyl, 4-methylphenylaminosulfonyl and NHC(O)R^{x} radicals, where R^{x} represents hydrogen, C₁-C₄-alkyl, maleoyl or phenyl; and the metal complexes of these dyes.

8. The process according to claim 7 wherein Tk¹ and/or Tk² in the formulae II, III or IV represents a radical of the general formula VIII 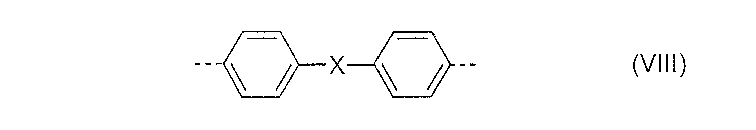 where ---- represent the bonds to the azo groups and X represents a chemical bond or a bivalent radical selected from -CH=CH-, -SO₂-NR-, -SO₂-O-, -NR-, -SO₂-, -SO-NR- and -CO-NR-, where R represents hydrogen or C₁-C₄-alkyl.

9. The process according to claim 7 or 8, wherein Napht¹ and/or Napht² represent a bivalent radical of the general formula 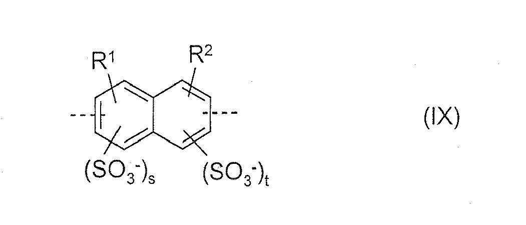 where R¹ and R² are independently hydrogen, OH, NH₂ or NHC(O)R³, where R³ represents hydrogen, C₁-C₄-alkyl, maleoyl or phenyl and at least one of R¹ and R² is other than hydrogen, ^{- - - -} represent the bonds to the azo groups, s and t represent 0 or 1 and the s + t sum is 1 or 2.

10. The process according to claim 7 wherein the dye F
is selected from dyes of the general formula IIa 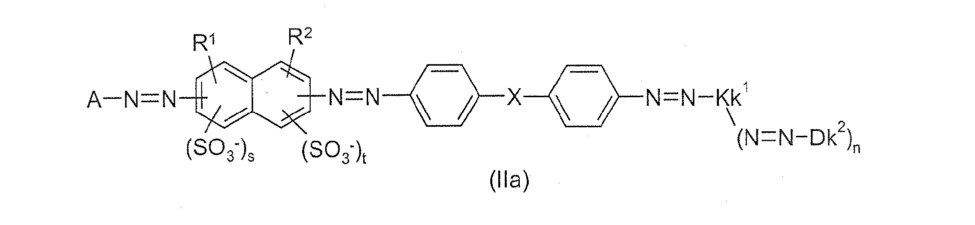 where n, A, Dk² and Kk¹ are each as defined in claim 7, R¹ and R² independently represent hydrogen, OH, NH₂ or NHC(O)R³, where R³ represents hydrogen, C₁-C₄-alkyl, maleoyl or phenyl, and at least one of R¹ and R² is other than hydrogen,
s and t represent 0 or 1 and the sum total s + t has the value 1 or 2, and
X represents a chemical bond or a bivalent radical selected from -CH=CH-, -SO₂-NR-, -SO₂-O-, -NR-, -SO₂-, -SO-NR- and -CO-NR-, where R represents hydrogen or C₁-C₄-alkyl.

11. The process according to any preceding claim wherein initially the leather is treated with the aqueous float comprising at least one dye F at a pH in the range from 3 to 6.5 and then a pH of not less than 8 and not more than 11 is set in the float.

12. The process according to any one of claims 1 to 10 wherein the dyeing is carried out as a one-stage process.

13. The process according to any preceding claim wherein the dyeing is carried out before retanning.

14. The process according to any preceding claim wherein the dyeing is effected at temperatures in the range from 10 to 60°C.

15. The use of dyes F which comprise at least one alkali-activable group of the formula A as defined in claim 1 for dyeing leather at pH ≥ 8 and pH ≤ 11.

## Revendications

1. Procédé pour la teinture du cuir avec au moins un colorant polyazo anionique F, qui présente au moins 3 groupes diazo et au moins un groupe activable dans des conditions alcalines de formule A ; 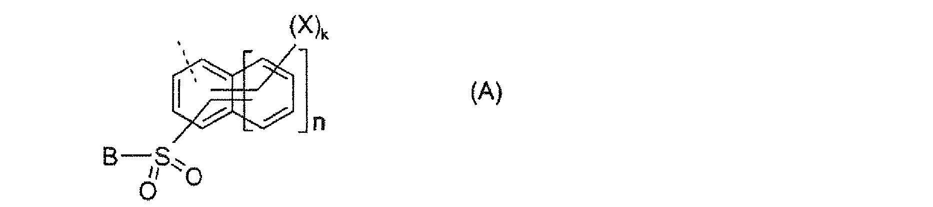 où
--- signifie la liaison avec la molécule de colorant,
X représente C₁-C₄-alkyle ou C₁-C₄-alcoxy,
k représente 0, 1, 2 ou 3,
n signifie 0 ou 1, et
B représente un groupe CH=CH₂ ou un groupe CH₂-CH₂-Q, où Q représente un groupe dissociable dans des conditions alcalines, comprenant le traitement du cuir avec un bain aqueux contenant au moins un colorant F, à un pH d'au moins 8 et d'au plus 11.

2. Procédé selon la revendication 1, où k dans la formule A représente 0.

3. Procédé selon la revendication 1 ou 2, dans lequel B dans la formule A représente CH=CH₂, un groupe CH₂-CH₂-O-SO₃H ou un groupe CH₂-CH₂-O-C(O)CH₃.

4. Procédé selon l'une quelconque des revendications précédentes, dans lequel le groupe A est lié via un groupe -NH- ou -N=N- à la molécule de colorant.

5. Procédé selon l'une quelconque des revendications précédentes, dans lequel n = 0.

6. Procédé selon la revendication 5, dans lequel le radical A est choisi parmi radicaux A1 à A6 suivants :

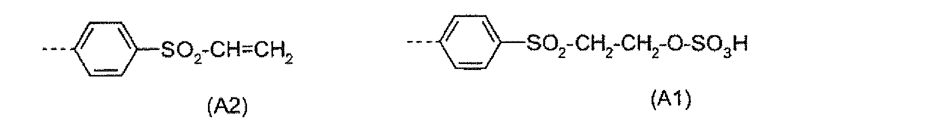

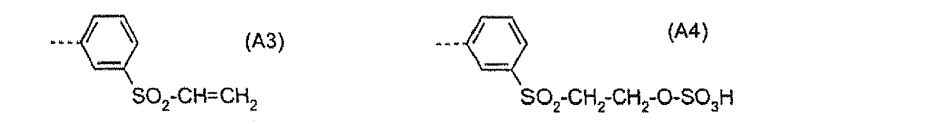

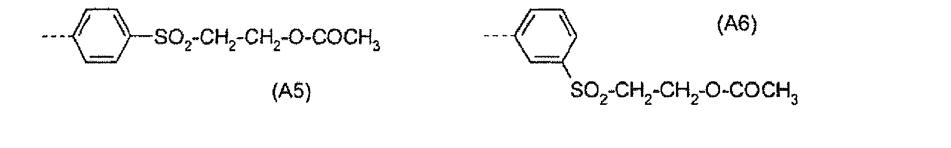

7. Procédé selon l'une quelconque des revendications précédentes, dans lequel le colorant F est choisi parmi les colorants des formules générales I à VII :
Dk¹-N=N-[Napht¹-N=N-]ₚKk¹[-N=N-Dk²]ₘ (I)
Dk¹-N=N-Napht¹-N=N-Tk¹-N=N-Kk¹[-N=N-Dk²]ₙ (II)
Dk¹-N=N-Napht¹-N=N-Tk¹-N=N-Kk¹-N=N-Tk²-N=N-Napht²-N=N-Dk² (III)
Dk¹-N=N-Kk¹-N=N-Tk¹-N=N-Kk²-N=N-Dk² (IV)
Dk¹-N=N-Napht¹-N=N-Naptht²-N=N-Kk¹[-N=N-Dk²]ₙ (V)
Kk³-N=N-Tk¹-N=N-Kk¹-N=N-A (VI)
Dk¹-N=N-P-N=N-Kk¹-N=N-R'-N=N-Dk² (VII)
dans lesquelles :
n et p représentent, indépendamment l'un de l'autre, 0 ou 1 ;
m signifie 0, 1 ou 2 et où, dans la formule I, m + p = 2 ou 3 ;
Dk¹, Dk² représentent, indépendamment l'un de l'autre, un radical dérivé d'une amine aromatique ou un groupe de formule A, où, dans les formules I-V et VII, à chaque fois un des radicaux Dk¹ ou Dk² représente un radical de formule A
Kk¹, Kk² représentent, indépendamment l'un de l'autre, un radical monovalent, divalent ou trivalent, aromatique, dérivé de benzène, de naphtalène, de pyrazole, de quinoléine, de diphénylamine, de diphénylméthane, de pyridine, de pyrimidine ou de diphényléther, qui peut présenter le cas échéant un ou plusieurs des radicaux suivants comme substituants : SO₃H, COOH, OH, NH₂, NO₂, CN, halogène, C₁-C₄-alkyle, C₁-C₄-hydroxyalkyle, carboxy-C₁-C₄-alkyle, C₁-C₄-alcoxy, C₁-C₄- alkylamino, C₁-C₄-dialkylamino, C₁-C₄- alkylaminocarbonyle, C₁-C₄-dialkylaminocarbonyle, C₁-C₄-alkylcarbonylamino, N-(C₁-C₄-alkylcarbonyl)-N- (C₁-C₄-alkylcarbonyl)amino, C₁-C₄-hydroxy-C₁-C₄- alkylamino, carboxy-C₁-C₄-alkylamino, phénylcarbonylamino, C₁-C₄-alkylsulfonyle, C₁-C₄- alkylaminosulfonyle, C₁-C₄-alkylsulfonylamino, phénylsulfonyle, phénylsulfonylamino, formamide ou hétérocyclyle de 5 ou 6 chaînons, qui est le cas échéant substitué par 1, 2 ou 3 des radicaux suivants : OH, halogène, C₁-C₄-alkyle ou phényle, l'hétérocyclyle aromatique de 5 chaînons portant le cas échéant sur l'azote un groupe phényle ou naphtyle, qui peut le cas échéant présenter un ou deux des radicaux suivants : OH, SO₃H, C₁-C₄- alkyle, et/ou C₁-C₄-alcoxy ;
Kk³ représente un radical monovalent dérivé de benzène, de pyridine, de pyrimidine ou de naphtalène, qui présente le cas échéant 1 ou 2 groupes hydroxysulfonyle et le cas échéant 1, 2 ou 3 autres substituants choisis parmi SO₃H, COOH, OH, NH₂, NO₂, CN, halogène, C₁-C₄-alkyle, C₁-C₄-
Tk¹, hydroxyalkyle, carboxy-C₁-C₄-alkyle, C₁-C₄-alcoxy, C₁-C₄-alkylamino, C₁-C₄-dialkylamino, C₁-C₄- alkylaminocarbonyle, C₁-C₄-dialkylaminocarbonyle, C₁-C₄-alkylcarbonylamino, N-(C₁-C₄-alkylcarbonyl)-N- (C₁-C₄-alkylcarbonyl)amino, C₁-C₄-hydroxy-C₁-C₄- alkylamino, carboxy-C₁-C₄-alkylamino, phénylcarbonylamino, C₁-C₄-alkylsulfonyle, C₁-C₄- alkylaminosulfonyle, C₁-C₄-alkylsulfonylamino, phénylsulfonyle, phénylsulfonylamino, formamide ou hétérocyclyle de 5 ou 6 chaînons, qui est le cas échéant substitué par 1, 2 ou 3 des radicaux suivants : OH, halogène, C₁-C₄-alkyle ou phényle, où l'hétérocyclyle aromatique de 5 chaînons porte le cas échéant sur l'azote un groupe phényle ou naphtyle, qui peut présenter le cas échéant un ou deux des radicaux suivants : OH, SO₃H, C₁-C₄- alkyle, et/ou C₁-C₄-alcoxy ; Tk² représentent, indépendamment l'un de l'autre un radical aromatique divalent, qui est dérivé de benzène, de pyridine, de pyrimidine, de diphénylamine, de diphényle, de diphénylméthane, de 2-phénylbenzimidazole, de phénylsulfonylbenzène, de phénylaminosulfonylbenzène, de stilbène ou de phénylaminocarbonylbenzène, qui peuvent présenter le cas échéant un ou plusieurs des radicaux suivants comme substituants : SO₃H, COOH, OH, NH₂, NO₂, halogène, C₁-C₄-alkyle ;
P et R' représentent, indépendamment l'un de l'autre, un radical aromatique divalent, qui est dérivé de benzène ou de naphtalène, qui peuvent le cas échéant présenter un ou plusieurs, par exemple 1, 2, 3, 4 ou 5 des radicaux suivants comme substituants : SO₃H, COOH, OH, NH₂, NO₂, halogène, C₁-C₄-alkyle, C₁-C₄-hydroxyalkyle, carboxy-C₁-C₄- alkyle, C₁-C₄-alcoxy, C₁-C₄-alkylamino, C₁-C₄- dialkylamino, C₁-C₄-alkylaminocarbonyle, C₁-C₄- dialkylaminocarbonyle, C₁-C₄-alkylcarbonylamino, N- (C₁-C₄-alkylcarbonyl)-N-(C₁-C₄-alkylcarbonyl)amino, C₁-C₄-hydroxy-C₁-C₄-alkylamino, carboxy-C₁-C₄- alkylamino, phénylcarbonylamino, C₁-C₄- alkylsulfonyle, C₁-C₄-alkylaminosulfonyle, C₁-C₄- alkylsulfonylamino, phénylsulfonyle, phénylsulfonylamino, formamide ou hétérocyclyle de 5 ou 6 chaînons, qui est le cas échéant substitué par 1, 2 ou 3 des radicaux suivants : OH, halogène, C₁-C₄-alkyle ou phényle, l'hétérocyclyle aromatique de 5 chaînons portant le cas échéant sur l'azote ou groupe phényle ou naphtyle, qui peut le cas échéant présenter un ou deux des radicaux suivants : OH, SO₃H, C₁-C₄-alkyle, et/ou C₁-C₄-alcoxy ;
Napht¹, Napht² représentent, indépendamment l'un de l'autre, un radical divalent dérivé de naphtalène, qui présente 1 ou 2 groupes hydroxysulfonyle et qui peut le cas échéant présenter 1, 2 ou 3 autres substituants choisis parmi OH, NH₂, C₁-C₄- alkylamino, C₁-C₄-dialkylamino C₁-C₄- alkylsulfonylamino, phénylsulfonylamino, 4- méthylphénylsulfonylamino, C₁-C₄- alkylaminosulfonyle, di-C₁-C₄-alkylaminosulfonyle, phénylaminosulfonyle, 4-méthylphénylaminosulfonyle et les radicaux NHC(O)R^{x}, où R^{x} représente hydrogène, C₁-C₄-alkyle, maléinyle ou phényle ; et les complexes métalliques de ces colorants.

8. Procédé selon la revendication 7, dans lequel Tk¹ et/ou Tk² dans les formules II, III ou IV représentent un radical de formule générale VIII 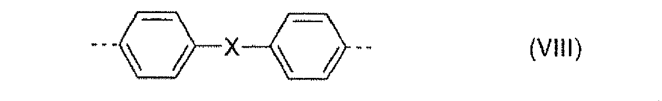 où --- représentent les liaisons aux groupes azo et X représente une liaison chimique ou un radical divalent, choisi parmi -CH=CH-, -SO₂-NR-, -SO₂-O-, -NR-, -SO₂-, -SO-NR- et -CO-NR-, où R signifie hydrogène ou C₁-C₄-alkyle.

9. Procédé selon la revendication 7 ou 8, dans lequel Napht¹ et/ou Napht² représentent un radical divalent de formule générale 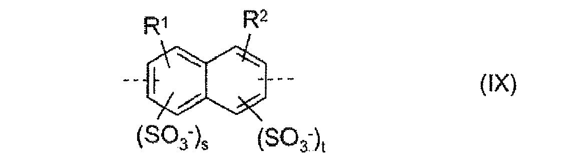 où R¹ et R² signifient, indépendamment l'un de l'autre, hydrogène, OH, NH₂ ou NHC(O)R³, où R³ représente hydrogène, C₁-C₄-alkyle, maléinyle ou phényle, et au moins un des radicaux R¹ et R² est différent d'hydrogène, --- représente les liaisons avec les groupes azo, s et t représentent 0 ou 1 et la somme s + t vaut 1 ou 2.

10. Procédé selon la revendication 7, où le colorant F est choisi parmi les colorants de formule générale IIa 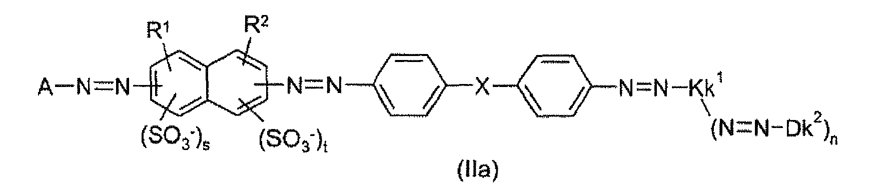 où n, A, Dk² et Kk¹ ont les significations indiquées dans la revendication 7, R¹ et R² signifient, indépendamment l'un de l'autre hydrogène, OH, NH₂ ou NHC(O)R³, où R³ représente hydrogène, C₁-C₄-alkyle, maléinyle ou phényle, et au moins un des radicaux R¹ et R² est différent d'hydrogène, s et t représentent 0 ou 1 et la somme s + t vaut 1 ou 2, et X représente une liaison chimique ou un radical divalent, choisi parmi -CH=CH-, -SO₂-NR-, -SO₂-O-, -NR-, -SO₂-, -SO-NR- et -CO-NR-, où R signifie hydrogène ou C₁-C₄-alkyle.

11. Procédé selon l'une quelconque des revendications précédentes, où on traite le cuir d'abord avec le bain aqueux, contenant au moins un colorant F, à un pH dans la plage de 3 à 6,5, puis on règle dans le bain un pH d'au moins 8 et d'au plus 11.

12. Procédé selon l'une quelconque des revendications 1 à 10, où la teinture est réalisée sous forme de procédé à une étape.

13. Procédé selon l'une quelconque des revendications précédentes, où la teinture est réalisée avant le retannage.

14. Procédé selon l'une quelconque des revendications précédentes, où la teinture est réalisée à des températures dans la plage de 10 à 60°C.

15. Utilisation de colorants F qui présentent au moins un des groupes de formule A activables dans des conditions alcalines, définis dans la revendication 1, pour la teinture du cuir à un pH ≥ 8 et un pH ≤ 11.
